# EUROPÄISCHE PATENTSCHRIFT

(11) **EP 3 854 035 B1**
(45) Veröffentlichungstag und Bekanntmachung des Hinweises auf die Patenterteilung: **05.10.2022**
(21) Anmeldenummer: 19805244.1
(22) Anmeldetag: 14.11.2019
(51) Int. Cl.: H04L 12/40, H04L 12/407

(54) **DATENÜBERTRAGUNGSVERFAHREN UND AUTOMATISIERUNGSKOMMUNIKATIONSNETZWERK**
DATA TRANSMISSION METHOD AND AUTOMATION COMMUNICATION NETWORK
PROCÉDÉ DE TRANSMISSION DE DONNÉES ET RÉSEAU DE COMMUNICATION D'AUTOMATISATION

(30) Priorität: 26.11.2018 DE 102018129813
(43) Veröffentlichungstag der Anmeldung: 28.07.2021
(73) Patentinhaber: Beckhoff Automation GmbH, 33415 Verl (DE)
(72) Erfinder: BECKHOFF, Hans, 33415 Verl (DE); BÜTTNER, Holger, 12205 Berlin (DE); JANSSEN, Dirk, 33415 Verl (DE)
(74) Vertreter: Patentanwaltskanzlei WILHELM & BECK
(86) Internationale Anmeldenummer: PCT/EP2019/081308
(87) Internationale Veröffentlichungsnummer: WO 2020/109015

(56) Entgegenhaltungen:
- US-A1- 2012 002 680
- US-A1- 2013 016 724
- US-A1- 2015 117 177
- MIKOLASEK V ET AL: "Segmentation of standard ethernet messages in the time-triggered ethernet", EMERGING TECHNOLOGIES AND FACTORY AUTOMATION, 2008. ETFA 2008. IEEE INTERNATIONAL CONFERENCE ON, IEEE, PISCATAWAY, NJ, USA, 15. September 2008 (2008-09-15), Seiten 392-399, XP031344640, ISBN: 978-1-4244-1505-2

## Beschreibung

Die vorliegende Erfindung betrifft ein Verfahren zur Datenübertragung in einem Automatisierungskommunikationsnetzwerk. Die Erfindung betrifft des Weiteren ein Automatisierungskommunikationsnetzwerk, das zur Datenübertragung ausgelegt ist.

Ein sogenanntes "local area network" (LAN) ist ein räumlich begrenztes Netzwerk, in dem verschiedene Netzwerkkomponenten miteinander gekoppelt sind. Bei den Netzwerkkomponenten kann es sich um einen oder mehrere Server und Arbeitsstationen, sogenannte Knoten, handeln, die über Kommunikationsleitungen in Form von Koaxial-, Glasfaser- oder Twisted-Pair-Kabeln miteinander verbunden sind. Die Kommunikation zwischen den Netzwerkkomponenten innerhalb des LANs erfolgt auf Basis von Netzwerkprotokollen.

Dabei stellt das Ethernet-Protokoll den am weitesten verbreiteten Standard der Netzwerkprotokolle für ein LAN dar. Ethernet-Telegramme können einen Nutzdatenblock mit einer Länge von 1500 Bytes umfassen und Telegramm-Übertragungsraten zwischen den einzelnen Netzwerkkomponenten innerhalb des LANs von einigen Gigabytes/Sekunde ermöglichen, wobei die Telegramme paketorientiert übertragen werden. In Form des sogenannten "Industrial Ethernet" findet das Ethernet-Protokoll auch in industriellen Fertigungsanlagen Anwendung. In der Automatisierungstechnik kann das Ethernet-Protokoll beispielsweise dazu dienen, den Datenaustausch in der Fertigungs-, Gebäude- und Prozessautomatisierung in Bezug auf Steuerungsaufgaben zu regeln und die Echtzeitfähigkeit des Systems zu gewähren.

Die in der Automatisierungstechnik eingesetzten Automatisierungskommunikationsnetzwerke entsprechen in der Regel sogenannten "Feldbussystemen". Feldbussysteme sind Bussysteme, bei denen dezentral angeordnete Geräte einer Maschinenperipherie wie Eingangs- und/oder Ausgangs-Module, Antriebe und Bedienterminals über das Feldbussystem mit Steuereinheiten verbunden sind. Für die Datenübertragung steht ein gemeinsamer Übertragungskanal (zum Beispiel in Form des Feldbusses oder als Funkstrecke) zur Verfügung. Senden mehrere Teilnehmer gleichzeitig Telegramme aus, so muss eine Möglichkeit geschaffen werden, dass sich die Teilnehmer im gegenseitigen Einvernehmen den Übertragungskanal teilen. Eine Möglichkeit bildet die Anwendung des sogenannten "Master-Slave-Prinzips".

In der Regel bilden die Steuereinheiten am Feldbus die aktiven Busteilnehmer, die sogenannten "Master-Teilnehmer". Die Master-Teilnehmer verfügen über die Zugriffsberechtigung des Feldbussystems und legen den Datenverkehr in Form von Telegrammen auf dem Feldbus fest. Die passiven Feldbusteilnehmer, die sogenannten "Slave-Teilnehmer", entsprechen meist den Maschinenperipheriegeräten. Die Slave-Teilnehmer verfügen über keine Zugriffsberechtigung und können empfangene Daten bzw. Telegramme nur quittieren oder auf Anfrage eines Master-Teilnehmers Daten bzw. Telegramme übertragen.

Häufig werden in Automatisierungskommunikationsnetzwerken Verteilerknoten, sogenannte "Switches" eingesetzt, um die einzelnen Netzwerksegmente mit Netzwerkkomponenten miteinander zu verbinden und dafür Sorge zu tragen, dass die Daten bzw. Telegramme innerhalb der Netzwerksegmente rasch an ihr Ziel gelangen. Dabei können die Netzwerksegmente einen Teil des zusammenhängenden Automatisierungskommunikationsnetzwerks bilden und logisch und/oder physisch von einem Rest des Automatisierungskommunikationsnetzwerks getrennt sein. Bei den im Automatisierungskommunikationsnetzwerk zu übertragenen Telegrammen kann es sich um Telegramme mit einer ersten und einer zweiten Prioritätsstufe handeln, wobei die zweite Prioritätsstufe mit einer höheren Wertigkeit ausgebildet sein kann als die erste Prioritätsstufe. Neben den beiden Prioritätsstufen sind auch weitere Prioritätsstufen denkbar. Die höhere Wertigkeit für die zweite Prioritätsstufe kann mithilfe eines höheren Werts bzw. mithilfe eines niedrigeren Werts als des Werts für die erste Prioritätsstufe verwirklicht sein, sodass ein höherer Wert einen niedrigen Wert unterbrechen kann (und vice versa). Beispielsweise kann sich das Telegramm mit der zweiten Prioritätsstufe um ein sogenanntes "zyklisches Echtzeit-Telegramm" handeln, das für die Steuerung des Automatisierungssystems relevant ist, und zyklische Ein-/Ausgabedaten der Teilnehmer umfassen. Weiterhin kann das Telegramm mit der ersten Prioritätsstufe beispielsweise als "azyklisches Nicht-Echtzeit-Telegramm" ausgebildet sein und azyklische Parameter- oder Statusdaten der Teilnehmer umfassen.

Für die Weiterleitung der zyklischen Echtzeit-Telegramme ist im Verteilerknoten eine Vermittlungstabelle, eine sogenannte "Routing-Liste", hinterlegt, die eine Telegrammkennung, beispielsweise in Form einer MAC-Adresse, eine Ein-/Ausgabe-Schnittstelle und einen Sendezeitpunkt aufweist. Dieses Verfahren wird beispielsweise bei PROFINET IRT angewendet. Alternativ dazu kann in dem Verteilerknoten auch eine vereinfachte Routing-Liste erstellt werden, die für jedes zyklische Echtzeit-Telegramm eine Prioritätsstufe, die Telegrammkennung in Form der MAC-Adresse sowie die Ein-/Ausgabe-Schnittstelle umfasst. Je Ein-/Ausgabe-Schnittstelle und Prioritätsstufe werden ferner Zeitfenster definiert, für die die Telegramme mit den entsprechenden Prioritätsstufen gesendet werden dürfen. Dieses Verfahren findet beim TSN-Verfahren (Time Sensitive Networking) Anwendung.

In beiden genannten Fällen ist eine Konfiguration des Verteilerknotens bezüglich der Zeitfenster notwendig. In einem Automatisierungskommunikationsnetzwerk, in dem mehrere Verteilerknoten eingesetzt werden, gestaltet sich die Berechnung des Zeitplans umso komplizierter je mehr Verteilerknoten für das Automatisierungskommunikationsnetzwerk vorgesehen sind. Auch eine Änderung des Zustands des Automatisierungskommunikationsnetzwerks während des Betriebs, der beispielsweise in der Hinzufügung (ein sogenannter "Hot-Plug") von zusätzlichen Geräten oder Netzwerkteilen begründet sein kann, erfordert eine neue Berechnung des Zeitplans.

In der "IEEE Std 802.3br for Ethernet, Amendment 5: Specification and Management Parameters for Interspersing Express Traffic, 2016" ist ein Verfahren offenbart, das zwischen "Express Traffic" und "Preemptable Traffic" unterscheidet. Der Express Traffic kann dabei den Preemptable Traffic unterbrechen, das heißt, es sind zwei Telegramm-Prioritätsstufen möglich, wobei die zweite Prioritätsstufe mit einer höheren Wertigkeit ausgebildet sein kann, so dass auf diese Weise Telegramme mit der ersten Prioritätsstufe unterbrochen werden können. Der Verteilerknoten arbeitet in dem offenbarten Verfahren nach dem sogenannten "Store-and-Forward-Prinzip". Nach dem Store-and-Forward-Prinzip sendet der Verteilerknoten ein Telegramm erst dann weiter, wenn der Verteilerknoten das Telegramm vollständig empfangen hat. Empfängt der Verteilerknoten während des Sendevorgangs eines Telegramms des Preemptable Traffic mit der ersten Prioritätsstufe ein Telegramm des Express Traffic mit der höherpriorisierten zweiten Prioritätsstufe, so unterbricht der Verteilerknoten das Senden des Telegramms des Preemptable Traffic mit der ersten Prioritätsstufe, das ein erstes Fragment bildet.

Der verbleibende Teil des Telegramms des Preemptable Traffic, der von dem Verteilerknoten noch nicht gesendet worden ist, und ein zweites Fragment bildet, wird von dem Verteilerknoten erst dann weitergesendet, wenn der Verteilerknoten das zweite Fragment vollständig empfangen hat und eine Datenübertragungsstrecke, auf der die Telegramme des Preemptable Traffic und des Express Traffic übertragen werden, frei ist. Das zweite Fragment des Preemptable Traffic mit der ersten Prioritätsstufe kann beim Senden von dem Verteilerknoten erneut unterbrochen und in weitere Unterfragmente zerlegt werden, wenn der Verteilerknoten wieder ein höherpriorisiertes Telegramm des Express Traffic empfangen hat. Die offenbarte Vorgehensweise führt nachteilig zu zeitlichen Verzögerungen beim Weiterleiten der entsprechenden Telegramm-Fragmente, da der Weiterleitungsvorgang der Telegramm-Fragmente von dem Verteilerknoten erst dann eingeleitet wird, wenn der Verteilerknoten die einzelnen Telegramm-Fragmente des Preemptable Traffic mit der ersten Prioritätsstufe vollständig empfangen hat. Ein sofortiges Weiterleiten der Telegramm-Fragmente des Preemptable Traffic von dem Verteilerknoten ist somit nicht vorgesehen.

Druckschrift US 2015/0117177 A1 offenbart ein Verfahren zur Datenübertragung in einem Kommunikationsnetzwerk mit einem Verteilerknoten sowie einer Verbindung zu mehreren Netzwerksegmenten. Die Netzwerksegmente weisen Teilnehmer auf, zwischen denen ein Datenaustausch in Form von Nachrichten erfolgt. Die gesendeten Nachrichten in D1, beispielsweise durch den Teilnehmer S1, weisen ebenfalls Prioritätsstufen auf. S1 sendet eine niedrig priorisierte Nachricht und der Teilnehmer S2 eine höher priorisierte Nachricht, wobei der Netzwerkverteiler R1 ausgelegt ist, das Senden des niedrig priorisierten Telegramms zugunsten des Sendens des höher priorisierten Telegramms zu unterbrechen. Die unterbrochene Nachricht weist ein Fragmenttypfeld auf, um anzuzeigen, ob das niedrig priorisierte Fragment das letzte Fragment darstellt oder ob weitere Fragmente der Nachricht gesendet werden müssen. Ferner weist das niedrig priorisierte Fragment ein Offsetfeld auf, um den Anfang eines zweiten oder nachfolgenden Fragments relativ zu dem ersten oder einem vorangehenden Fragment zu kennzeichnen.

Die Druckschrift Mikolasek et. al, "Segmentation of standard ethernet messages in the time-triggered ethernet", EMERGING TECHNOLOGIES AND FACTORY AUTOMATION, 2008, IEEE INTERNATIONAL CONFERENCE ON, NJ, USA, 15. September 2008, Seiten 392-399, nutzt zwar ein spezielles Ethernet-Frame-Type-Feld, um zwischen fragmentierten und nicht-fragmentierten Nachrichten zu unterscheiden. Zusätzlich erhält die gesamte Nachricht einen CRC-Wert, der beliebig gewählt ist. Sofern die Übertragung der gesamten Nachricht erfolgreich war, dann hängt der Sender die über die gesamte Nachricht berechnete CRC-Summe an das letzte Segment bzw. Fragment an, welche die "korrekte" CRC-Summe bildet und somit als Anzeichen für das letzte Segment bzw. Fragment dient. Anderenfalls, das heißt bei nochmaliger Unterbrechung des Sendens der fragmentierten Nachricht aufgrund des Empfangs einer anderen Nachricht, wird bei dem nochmals unterbrochenen Fragment wieder eine CRC-Summe berechnet, diese jedoch nur über das jeweilige Fragment und an das entsprechende Fragment angehängt.

Auch die Lehre der Druckschrift US 2013/0016724 A1 sieht vor, die Fragmentierung einer Nachricht über eine Modifizierung der CRC-Summe anzuzeigen. Ein Fragment wird dadurch gekennzeichnet, dass die CRC-Summe invertiert wird, während das letzte Fragment keine solche modifizierte CRC-Summe aufweist. Es wird zwar die Verwendung von Fragmentzahlen bzw. Fragment-Header offenbart, jedoch tragen die einzelnen Fragmente jeweils nur den Wert des eigenen Fragments und verweisen nicht auf das nächste bzw. vorangehende Fragment.

Die Druckschrift US 2012/0002680 A1 offenbart, dass die CRC-Summenwerte modifiziert werden, um die Fragmentierung einer Nachricht anzuzeigen. Das letzte Fragment weist einen anderen CRC-Summenwert auf, um das letzte Fragment als solches von den anderen Fragmenten unterscheiden zu können.

Es ist daher Aufgabe der vorliegenden Erfindung, ein Verfahren zur Datenübertragung in einem Automatisierungskommunikationsnetzwerk mit zumindest einem Verteilerknoten anzugeben, das den Durchsatz von Telegrammen im Verteilerknoten effizient gestaltet und zeitliche Verzögerungen beim Weiterleitungsvorgang der Telegramme reduziert. Es ist weiterhin Aufgabe der Erfindung, ein verbessertes Automatisierungskommunikationsnetzwerk anzugeben.

Diese Aufgabe wird durch die Merkmale der unabhängigen Ansprüche gelöst. Weitere vorteilhafte Ausführungsformen der Erfindung sind in den abhängigen Ansprüchen angegeben.

Erfindungsgemäß werden ein Verfahren zur Datenübertragung in einem Automatisierungskommunikationsnetzwerk mit zumindest einem Verteilerknoten, sowie ein entsprechendes Automatisierungskommunikationsnetzwerk vorgeschlagen. Der zumindest eine Verteilerknoten weist mehrere Ein-/Ausgabe-Schnittstellen auf, die jeweils mit einem Netzwerksegment in Verbindung stehen. Das Netzwerksegment weist zumindest einen Teilnehmer auf, wobei ein Datenaustausch zwischen den Teilnehmern in Form von Telegrammen erfolgt. Den Telegrammen sind Prioritätsstufen zugeordnet. Der zumindest eine Verteilerknoten unterbricht das Senden eines Telegramms mit einer ersten Prioritätsstufe auf einer Ein-/Ausgabe-Schnittstelle, wenn der zumindest eine Verteilerknoten ein Telegramm mit einer zweiten Prioritätsstufe, die eine höhere Wertigkeit umfasst als die erste Prioritätsstufe, auf einer weiteren Ein-/Ausgabe-Schnittstelle empfangen hat. Der zumindest eine Verteilerknoten schließt das unterbrochene Telegramm mit der ersten Prioritätsstufe, das ein erstes Fragment bildet, definiert ab, indem der zumindest eine Verteilerknoten eine erste Fragmentier-Information am Ende des ersten Fragments sendet. Ein verbleibender Teil des Telegramms mit der ersten Prioritätsstufe, der von dem zumindest einen Verteilerknoten noch nicht gesendet worden ist, bildet ein zweites Fragment. Der zumindest eine Verteilerknoten erzeugt über dies eine zweite Fragmentier-Information für das zweite Fragment. Der zumindest eine Verteilerknoten speichert das zweite Fragment zusammen mit der zweiten Fragmentier-Information zwischen. Nach dem Senden des Telegramms mit der zweiten Prioritätsstufe auf der Ein-/Ausgabe-Schnittstelle sendet der zumindest eine Verteilerknoten das zweite Fragment des Telegramms mit der ersten Prioritätsstufe zusammen mit der zweiten Fragmentier-Information auf der Ein-/Ausgabe-Schnittstelle. Ein angesprochener Teilnehmer, für den das Telegramm mit der ersten Prioritätsstufe bestimmt ist, setzt das erste Fragment und das zweite Fragment des Telegramms mit der ersten Prioritätsstufe auf Grundlage von der ersten und der zweiten Fragmentier-Information zusammen.

Das erfindungsgemäße Verfahren kann sich vorteilhaft auf eine optimierte Datenübertragung in dem Automatisierungskommunikationsnetzwerk auswirken. Denn durch die Fragmentierung kann das Senden eines Telegramms mit der ersten Prioritätsstufe von dem zumindest einen Verteilerknoten unterbrochen werden, wenn der zumindest eine Verteilerknoten ein Telegramm mit einer zweiten Prioritätsstufe empfangen hat, wobei die zweite Prioritätsstufe mit einer höheren Wertigkeit als die erste Prioritätsstufe ausgebildet sein kann. Dabei kann die höhere Wertigkeit für die zweite Prioritätsstufe mithilfe eines höheren Werts bzw. mithilfe eines niedrigeren Werts als des Werts für die erste Prioritätsstufe verwirklicht sein, sodass ein höherer Wert einen niedrigen Wert unterbrechen kann bzw. sodass ein niedriger Wert einen höheren Wert unterbrechen kann. Das Telegramm bzw. das Fragment umfasst die Prioritätsstufe ferner jeweils am Anfang des Telegramms bzw. des Fragments. In einem Automatisierungskommunikationsnetzwerk, in dem der zumindest eine Verteilerknoten ein Telegramm mit der ersten Prioritätsstufe im Vergleich dazu nicht unterbrechen kann, wenn der zumindest eine Verteilerknoten ein Telegramm mit der zweiten Prioritätsstufe empfangen hat, sendet der zumindest eine Verteilerknoten das Telegramm mit der ersten Prioritätsstufe zuerst komplett, bevor der zumindest eine Verteilerknoten das höherwertig priorisierte Telegramm, an einen anderen Verteilerknoten oder an den Empfänger weitergeleitet.

Gerade in einem echtzeitfähigen Automatisierungskommunikationsnetzwerk ist es erforderlich, dass gewährleistet werden kann, dass hoch priorisierte Telegramme, die beispielsweise für Steuerungsaufgaben oder-befehle innerhalb des Automatisierungskommunikationsnetzwerks für Maschinen zur Anwendung kommen können, zu definierten Zeiten gesendet und empfangen werden. Der zumindest eine Verteilerknoten schließt dazu das unterbrochene Telegramm definiert ab, indem der zumindest eine Verteilerknoten die erste Fragmentier-Information am Ende des ersten Fragments sendet. Der verbleibende Teil des Telegramms mit der ersten Prioritätsstufe, der von dem zumindest einen Verteilerknoten noch nicht gesendet worden ist, bildet das zweite Fragment und weist die zweite Fragmentier-Information auf.

Nach dem Senden des Telegramms mit der zweiten Prioritätsstufe, sendet der zumindest eine Verteilerknoten das zweite Fragment des Telegramms mit der ersten Prioritätsstufe zusammen mit der zweiten Fragmentier-Information. Der angesprochene Teilnehmer, für den das unterbrochene Telegramm bestimmt ist, kann durch die oben genannte Kennzeichnung des unterbrochenen Telegramms eine Fragmentierung erkennen und aufgrund der ersten und zweiten Fragmentier-Information das Telegramm mit der ersten Prioritätsstufe einfach, zuverlässig und schnell wieder zusammenfügen. Damit erlaubt die erste und die zweite Fragmentier-Information eine Zuordnung der Fragmente zu dem vollständigen Telegramm. Die erste und die zweite Fragmentier-Information können derart ausgebildet sein, dass die erste Fragmentier-Information des ersten Fragments auf die zweite Fragmentier-Information des zweiten Fragments verweist und umgekehrt.

Vorteilhaft an der vorliegenden Erfindung erweist sich zudem, dass ein Header des Telegramms, also ein Anfangsabschnitt des Telegramms mit der ersten Prioritätsstufe Anweisungen umfasst, die vom angesprochenen Teilnehmer für den das Telegramm bestimmt ist, erkannt und verarbeitet werden können und der Header des Telegramms dabei selbst kompakt gestaltet ist. Insbesondere muss der zumindest eine Verteilerknoten den Header des Telegramms mit der ersten Prioritätsstufe nur einmal erzeugen und nicht für jeden weiteren Verteilerknoten, der sich auf einer Datenübertragungsstrecke bis zum angesprochenen Teilnehmer befinden kann, um zusätzliche Datenfelder, die dem jeweiligen Verteilerknoten für die Verarbeitung des Telegramms mit der ersten Prioritätsstufe zugeordnet sind, erweitern. Auch kann der zumindest eine Verteilerknoten die Telegramme bzw. Fragmente weiterleiten, ohne sie vorher vollständig empfangen haben zu müssen. Dies kann vorteilhaft zur Reduktion unnötiger Wartezeiten für die Weiterleitung der Telegramme beitragen und eine optimale Nutzung der zur Verfügung stehenden Bandbreite im Automatisierungskommunikationsnetzwerk bieten.

In einer weiteren Ausführungsform sendet der zumindest eine Verteilerknoten am Ende des ersten Fragments ein Prüfsummenfeld. Das Prüfsummenfeld weist eine Prüfsumme auf, die über den bereits gesendeten Teil des ersten Fragments berechnet wird. Durch das Mitsenden des Prüfsummenfelds mit der Prüfsumme kann der Empfänger, der ebenfalls eine Prüfsumme berechnet, die beiden Summen vergleichen und im Fall einer Nichtübereinstimmung einen aufgetretenen Fehler bei der Datenübertragung, beispielsweise dem Verlust einzelner Datenpakete, rasch bestimmen. Die Prüfsumme kann ebenso für weitere Fragmente über die bereits gesendeten Daten des Telegramms berechnet werden. Handelt sich das Telegramm beispielsweise um einen Ethernet-Frame, so sind die Präambel und der Start of Frame Delimiter (SFD), also die beiden Datenfelder, die den Beginn des eigentlichen Ethernet-Frames anzeigen, nicht Teil des Ethernet-Frames und werden bei der Berechnung der Prüfsumme nicht mitberücksichtigt.

Die für die weiteren Fragmente berechnete Prüfsumme kann bei der Übertragung der jeweiligen Fragmente ebenso mitgesendet werden, wie die oben beschriebene Prüfsumme für das erste Fragment. Dadurch kann eine fehlerhafte Datenübertragung vorteilhaft und rasch lokalisiert werden, insbesondere im Vergleich zu einer Ausgestaltung, die bei der Übertragung der Fragmente keine stetige Übertragung von deren Prüfsummen vorsieht.

Ein Telegramm kann mithilfe der zugeordneten Prioritätsstufe und einer fortlaufenden Zahl identifiziert werden. Diese können Teil der ersten bzw. der zweiten Fragmentier-Information sein. Die fortlaufende Zahl kann für jede Ein-/Ausgabe-Schnittstelle des zumindest einen Verteilerknotens, auf der der zumindest eine Verteilerknoten die Telegramme und Fragmente weiterleitet neu erzeugt werden. Damit ist die fortlaufende Zahl jeweils nur auf einer Datenübertragungsstrecke zwischen einem Teilnehmer und dem zumindest einen Verteilerknoten bzw. falls mehrere Verteilerknoten vorgesehen sind, zwischen den entsprechenden Verteilerknoten eindeutig. Eine Kombination aus der dem jeweiligen noch nicht vollständig gesendeten Fragment zugeordneten Prioritätsstufe und der fortlaufenden Zahl muss eindeutig sein. Die fortlaufende Zahl kann entfallen, wenn zu einem Zeitpunkt über die Ein-/Ausgabe-Schnittstelle des zumindest einen Verteilerknotens, die als die Sende-Schnittstelle vorgesehen ist, nur ein Telegramm mit einer bestimmten Prioritätsstufe unterbrochen werden kann. In dem Fall würde die fortlaufende Zahl benötigt werden, damit der Empfänger erkennt, ob alle Fragmente des Telegramms vollständig übertragen worden sind. Die fortlaufende Zahl kann sich für das erste Fragment am Anfang oder am Ende des ersten Fragments befinden. Für das zweite Fragment bzw. weitere Fragmente muss sich die fortlaufende Zahl am Anfang des zweiten Fragments bzw. der weiteren Fragmente befinden.

Gemäß einer weiteren Ausführungsform umfasst die erste Fragmentier-Information eine Fragmentnummer des zweiten Fragments. Zudem kann die erste Fragmentier-Information die fortlaufende Zahl sowie den Wert der Prioritätsstufe des Telegramms umfassen. Der zumindest eine Verteilerknoten kennzeichnet das erste Fragment des unterbrochenen Telegramms mit der ersten Prioritätsstufe durch ein erstes Fragmentier-Symbol am Ende des unterbrochenen Telegramms. Der Empfänger, das heißt der angesprochene Teilnehmer, für den das Telegramm bestimmt ist, kann über die Fragmentnummer erkennen, ob alle Fragmente des Telegramms übertragen worden sind und der Empfänger alle Fragmente erhalten hat. Zudem kann der Empfänger eine Information über die Fragmentnummer des zweiten Fragments erhalten. Der Empfänger erkennt die Fragmentierung des Telegramms anhand des ersten Fragmentier-Symbols am Ende des unterbrochenen Telegramms, vorausgesetzt, der Empfänger umfasst keinen Standard-Ethernet-Controller (keine Standard-Netzwerkkarte), sondern ist in der Lage, das spezielle Fragmentier-Symbol zu interpretieren und zu verarbeiten.

Die Fragmentnummer des zweiten Fragments muss zur Kennzeichnung der Fragmentierung nicht zwingend von dem zumindest einen Verteilerknoten mitgesendet werden, da der Empfänger die Fragmentierung des Telegramms anhand des ersten Fragmentier-Symbols am Ende des ersten Fragments erkennen kann.

Weiterhin vorteilhaft an der Ausgestaltung ist, dass der zumindest eine Verteilerknoten bei der Fragmentierung des Telegramms mit der ersten Prioritätsstufe keine Mindestlänge für das fragmentierte Telegramm einhalten muss, da ein Empfänger, der nicht mit einem Standard-Ethernet-Controller ausgebildet ist, zur Verarbeitung des ersten und des zweiten Fragments des Telegramms mit der ersten Prioritätsstufe keine Mindestlänge der Fragmente von 64 Bytes benötigt, wie dies standardmäßig für ein Ethernet-Telegramm erforderlich ist.

Alternativ zur oben genannten Fragmentnummer des zweiten Fragments kann die erste Fragmentier-Information des ersten Fragments auch in Form eines reservierten Bits, in einem die erste Fragmentier-Information umfassenden Datenfeld verwirklicht sein. Das reservierte Bit kann zwei Zustände umfassen, über die festgestellt werden kann, ob es sich bei dem ersten Fragment tatsächlich um das erste Fragment des Telegramms handelt. Beispielsweise kann dazu der Zustand eins oder der Zustand Null des reservierten Bits dienen.

In einer weiteren Ausführungsform ist das zweite Fragment des Telegramms mit der ersten Prioritätsstufe in wenigstens zwei Unterfragmente zerlegt, wobei ein erstes Unterfragment des Telegramms mit der ersten Prioritätsstufe ein zweites Fragmentier-Symbol und die zweite Fragmentier-Information am Anfang des ersten Unterfragments aufweist. Die zweite Fragmentier-Information kann eine Fragmentzahl umfassen, die den Wert der Fragmentnummer des ersten Fragments aufweisen kann. Darüber hinaus kann die zweite Fragmentier-Information die fortlaufende Zahl sowie den Wert der Prioritätsstufe des Telegramms bzw. des Fragments oder des Unterfragments umfassen. Das erste Unterfragment weist die erste Fragmentier-Information am Ende des ersten Unterfragments auf, die die Fragmentnummer eines zweiten Unterfragments umfassen kann. Das erste Unterfragment weist am Ende des ersten Unterfragments das erste Fragmentier-Symbol auf. Vorteilhaft an der Ausgestaltung ist, dass auch eine weitere Unterbrechung des Telegramms mit der ersten Prioritätsstufe möglich ist. Der Empfänger kann ein erstes Unterfragment, das als nicht letztes Fragment des unterbrochenen Telegramms ausgebildet ist, anhand des zweiten Fragmentier-Symbols am Anfang des ersten Unterfragments und anhand des ersten Fragmentier-Symbols am Ende des ersten Unterfragments erkennen.

Der Empfänger kann ein erstes Unterfragment zudem über die zweite Fragmentier-Information zuordnen, die die Fragmentzahl umfassen kann, welche den Wert der Fragmentnummer des ersten Fragments aufweisen kann. Weiterhin kann die zweite Fragmentier-Information den Wert der Prioritätsstufe sowie die fortlaufende Zahl umfassen. Auch kann das zweite Unterfragment vom Empfänger über die Fragmentnummer, die am Ende des ersten Unterfragments in Form der ersten Fragmentier-Information mitgeschickt werden kann, vorteilhaft erkannt und zugeordnet werden. Auch die erste Fragmentier-Information kann die fortlaufende Zahl sowie die Prioritätsstufe umfassen. Darüber hinaus kann der Empfänger über die erste und die zweite Fragmentier-Information erkennen, ob ein Fragment bzw. ein Unterfragment des unterbrochenen Telegramms bei der Übertragung verloren gegangen ist.

Die Fragmentzahl wird nur für das zweite Fragment bzw. weitere Fragmente benötigt, wobei sich die Fragmentzahl am Anfang und/oder am Ende des zweiten Fragments bzw. am Anfang und/oder am Ende der weiteren Fragmente befinden kann. Zudem kann die Fragmentzahl auch für das erste Fragment von dem zumindest einen Verteilerknoten übertragen werden. Der zumindest eine Verteilerknoten kann die Fragmentzahl auswerten, dies ist jedoch nicht zwingend erforderlich, jedoch muss der empfangende Teilnehmer in der Lage sein, die Fragmentzahl der einzelnen Fragmente verarbeiten zu können.

Kann mithilfe des verwendeten Protokolls anhand einer Beschaffenheit des Telegramms festgestellt werden, ob der Empfänger das Telegramm vollständig empfangen hat, so kann in diesem Fall auf die Nutzung der Fragmentzahl verzichtet werden, da diese zur Erkennung eines fehlenden Fragments dienen kann und es für die Übertragung der Fragmente nicht vorgesehen ist, dass sich die Fragmente überholen können.

Gemäß einer weiteren Ausführungsform weist das zweite Unterfragment des Telegramms mit der ersten Prioritätsstufe das zweite Fragmentier-Symbol und die zweite Fragmentier-Information am Anfang des zweiten Unterfragments auf. Die zweite Fragmentier-Information des zweiten Unterfragments kann die Fragmentzahl mit dem Wert der Fragmentnummer des ersten Unterfragments umfassen. Darüber hinaus kann die zweite Fragmentier-Information den Wert der Prioritätsstufe sowie die fortlaufende Zahl aufweisen. Der zumindest eine Verteilerknoten kann das zweite Unterfragment des Telegramms mit der ersten Prioritätsstufe mit dem Wert Null der Fragmentnummer der ersten Fragmentier-Information am Ende des zweiten Unterfragments kennzeichnen. Mithilfe der Anzeige der Fragmentnummer mit dem Wert Null weiß der Empfänger, dass kein weiteres Fragment des Telegramms mit der ersten Prioritätsstufe mehr folgt. Ferner kann der Empfänger dadurch feststellen, ob der Empfänger alle Fragment bzw. alle Unterfragmente bei der Übertragung erhalten hat. Zudem erkennt der Empfänger aufgrund des zweiten Fragmentier-Symbols am Anfang des zweiten Unterfragments und dem Ende des ersten Unterfragments, das ohne das erste Fragmentier-Symbol ausgebildet ist, dass es sich beim zweiten Unterfragment um ein letztes Fragment des unterbrochenen Telegramms handelt.

Alternativ zur Anzeige der Fragmentnummer mit dem Wert Null kann die Information, dass es sich bei dem zweiten Unterfragment um das letzte Unterfragment des Telegramms handelt, mithilfe des oben genannten reservierten Bits und dessen zwei Zustände in dem Datenfeld, das die erste Fragmentier-Information aufweist, hinterlegt werden. Über die zwei Zustände können boolesche Werte in Form von Null und eins für das letzte Unterfragment verwirklicht werden.

In einer weiteren Ausführungsform wird eine mögliche Fragmentierung des Telegramms mit der ersten Prioritätsstufe angezeigt, indem am Anfang des Telegramms mit der ersten Prioritätsstufe ein Fragmentier-TAG gesetzt wird, wobei das Fragmentier-TAG ein Typfeld für ein verwendetes Protokoll innerhalb von Nutzdaten des ersten Fragments aufweist. Der zumindest eine Verteilerknoten unterbricht das Telegramm mit der ersten Prioritätsstufe so, dass das unterbrochene Telegramm, das das erste Fragment des Telegramms bildet, beim Unterbrechungsvorgang eine Mindestlänge aufweist. Die Fragmentierung des Telegramms mit der ersten Prioritätsstufe wird am Ende des ersten Fragments mit der ersten Fragmentier-Information angezeigt, wobei die erste Fragmentier-Information die Fragmentnummer des zweiten Fragments umfassen kann. Zusätzlich kann die erste Fragmentier-Information die Prioritätsstufe des Telegramms bzw. Fragments sowie die fortlaufende Zahl umfassen.

Der zumindest eine Verteilerknoten sendet das Telegramm weiter, sobald die Übertragungsstrecke zwischen dem Verteilerknoten und dem Empfänger oder dem weiteren Verteilerknoten frei ist. Das heißt, die vorliegende Erfindung erfordert keine Einhaltung einer Wartezeit von dem zumindest einen Verteilerknoten bis der zumindest eine Verteilerknoten zum Sendevorgang des Telegramms übergehen kann. Da der zumindest eine Verteilerknoten beim Senden des Telegramms nicht weiß, dass der zumindest eine Verteilerknoten möglicherweise ein höher priorisiertes Telegramm empfangen kann, welches vor dem aktuell gesendeten Telegramm weitergeleitet werden soll, erzeugt der zumindest eine Verteilerknoten am Anfang des Telegramms das Fragmentier-TAG, das dem Empfänger bei der Verarbeitung des Telegramms die mögliche Fragmentierung anzeigt. Der Verteilerknoten unterbricht das Telegramm in vorteilhafter Weise, sodass das erste Fragment eine Mindestlänge aufweist, die beim Ethernet-Telegramm zum Beispiel 64 Bytes erfordert. Somit kann auch ein Teilnehmer, der einen Standard-Ethernet-Controller aufweist, das Fragment verarbeiten. Die tatsächliche Fragmentierung zeigt der zumindest eine Verteilerknoten durch die erste Fragmentier-Information am Ende des ersten Fragments an.

Gemäß einer weiteren Ausführungsform ist das zweite Fragment des Telegramms mit der ersten Prioritätsstufe in wenigstens zwei Unterfragmente zerlegt. Das erste Unterfragment weist am Anfang des ersten Unterfragments eine Fragment-Zieladresse auf, umfassend eine zweite Fragmentier-Information, die eine Fragmentzahl mit dem Wert der Fragmentnummer des ersten Fragments aufweisen kann. Weiterhin kann die zweite Fragmentier-Information den Wert der Prioritätsstufe sowie die fortlaufende Zahl aufweisen. Über die Fragment-Zieladresse können mehrere Teilnehmer ansprechbar sein. Alternativ kann die Fragment-Zieladresse auch derart definiert werden, dass nur ein einzelner Teilnehmer oder alle Teilnehmer des Automatisierungskommunikationsnetzwerks ansprechbar sind. Das erste Unterfragment des Telegramms kann die erste Fragmentier-Information mit der Fragmentnummer eines zweiten Unterfragments am Ende des ersten Unterfragments aufweisen. Daneben kann die erste Fragmentier-Information den Wert der Prioritätsstufe des ersten Unterfragments sowie die fortlaufende Zahl aufweisen.

Mithilfe der Fragment-Zieladresse ist es möglich für das erste Unterfragment des zweiten Fragments, sowie auch für das zweite Unterfragment, für den jeweiligen Telegrammaufbau Telegramm-Bytes einzusparen, da die Fragment-Zieladresse ferner die zweite Fragmentier-Information mit der Fragmentzahl, die den Wert der Fragmentnummer des ersten Fragments des Telegramms aufweisen kann, umfassen kann. Überdies kann die zweite Fragmentier-Information den Wert der Prioritätsstufe sowie die fortlaufende Zahl umfassen. Diese Vorgehensweise erlaubt es, dass der zumindest eine Verteilerknoten die einzelnen Fragmente und Unterfragmente rasch weitersenden kann, da für die Fragmente und Unterfragmente weniger Overhead entsteht.

In einer weiteren Ausführungsform weist die Fragment-Zieladresse eine Absenderadresse, eine Zieladresse und das Fragmentier-TAG am Anfang des ersten Unterfragments auf. Weiterhin kann die Fragment-Zieladresse ein zusätzliches Datenfeld umfassen, wobei das zusätzliche Datenfeld ein VLAN TAG aufweisen kann, wenn das Telegramm das zusätzliche Datenfeld mit dem VLAN TAG umfasst. Wird die Fragment-Zieladresse in der dargestellten Weise definiert, kann ein Standard-Switch vorteilhaft eingesetzt werden. Denn ein Standard-Switch benötigt den kompletten Anfang (Header) des Telegramms bis zu einem Typfeld, das das verwendete Protokoll der Nutzdaten des Telegramms angibt.

Gemäß einer weiteren Ausführungsform kann das zweite Unterfragment des Telegramms mit der ersten Prioritätsstufe, das sich um ein letztes Unterfragment des Telegramms handeln kann, Füllbytes aufweisen, wenn das zweite Unterfragment die Mindestlänge unterschreitet. Das Einfügen von Füllbytes wird angezeigt, indem der Wert der Fragmentnummer der ersten Fragmentier-Information des zweiten Unterfragments am Ende des zweiten Unterfragments auf einen Wert PAD gesetzt wird. PAD kann dabei ein bestimmter Wert der Fragmentnummer sein. Alternativ ist denkbar, in jedem Fragment bzw. Unterfragment ein Bit in einem Datenfeld, das die erste Fragmentier-Information am Ende des Fragments bzw. Unterfragments umfasst, zur Anzeige der Information PAD zu reservieren. Beispielsweise kann dieses Bit für alle Fragmente bzw. Unterfragmente, die sich nicht um das letzte Fragment bzw. das letzte Unterfragment handeln, einen Zustand Null annehmen und für das letzte Fragment bzw. das letzte Unterfragment, das die Mindestlänge unterschreitet einen Zustand eins annehmen. Das zweite Unterfragment weist ein Füllbyte-Datenfeld am Ende des zweiten Unterfragments auf, das die Anzahl der Füllbytes umfasst. Der Mechanismus, der das Auffüllen mit Füllbytes beinhaltet, garantiert auf einfache Weise, dass ein Teilnehmer, umfassend einen Standard-Ethernet-Controller, einsetzbar ist und die Telegramme verarbeiten kann.

In einer weiteren Ausführungsform ist das Telegramm mit der ersten Prioritätsstufe als ein Ethernet-Telegramm ausgebildet. Die Übertragung und der Aufbau des Telegramms richten sich in vorteilhafter Weise nach dem weit verbreiteten Ethernet-Standard. Das vereinfacht die Implementierung, da der Teilnehmer nicht umgerüstet werden muss. Weiterhin kann dadurch eine Kosten- und Zeitersparnis erreicht werden und die Kompatibilität der einzelnen Teilnehmer im Netzwerk verbessert werden.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 einen schematischen Aufbau eines Automatisierungskommunikationsnetzwerks mit mehreren Verteilerknoten und Netzwerksegmenten;
Figur 2 einen schematischen zeitlichen Ablauf einer Datenübertragung in Form von Telegrammen zwischen Teilnehmern der Netzwerksegmente;
Figur 3 einen ersten und zweiten Telegrammaufbau eines ersten nicht fragmentierten Telegramms, sowie einen dritten und vierten Telegrammaufbau eines zweiten nicht fragmentierten Telegramms und einen fünften und sechsten Telegrammaufbau des ersten fragmentierten Telegramms, das das erste Fragment des ersten Telegramms bildet;
Figur 4 einen siebten und achten Telegrammaufbau des ersten fragmentierten Telegramms, das das zweite Fragment des ersten Telegramms bildet, sowie einen neunten und zehnten Telegrammaufbau eines dritten nicht fragmentierten Telegramms;
Figur 5 einen elften und zwölften Telegrammaufbau des dritten fragmentierten Telegramms, das das erste Fragment des dritten Telegramms bildet;
Figur 6 einen dreizehnten und vierzehnten Telegrammaufbau des ersten Fragments des ersten Telegramms und einen fünfzehnten und sechzehnten Telegrammaufbau des zweiten nicht fragmentierten Telegramms;
Figur 7 einen siebzehnten und achtzehnten Telegrammaufbau eines weitergeleiteten zweiten Fragments des ersten Telegramms; und
Figur 8 einen neunzehnten und zwanzigsten Telegrammaufbau eines zweiten Fragments des dritten Telegramms, sowie einen einundzwanzigsten und zweiundzwanzigsten Telegrammaufbau eines vierten nicht fragmentierten Telegramms.

Anhand der folgenden Figuren wird ein Ausführungsbeispiel eines Verfahrens zur Datenübertragung in einem Automatisierungskommunikationsnetzwerk, das beispielsweise im Rahmen der Fertigungs-, Gebäude- und Prozessautomatisierung eingesetzt werden kann, beschrieben. Dabei ist die Verwendungsangabe nicht einschränkend zu verstehen, da sich die Erfindung auch in anderen Bereichen des Automatisierungskommunikationsnetzwerks, bei denen zumindest ein Teilnehmer in einem Netzwerksegment angeordnet ist und Daten mit einem anderen Teilnehmer austauscht, der beispielsweise in einem anderen Netzwerksegment angeordnet ist, anwenden lässt. Die Erfindung ist ferner nicht auf das nachfolgend beschriebene Ausführungsbeispiel beschränkt.

Es wird darauf hingewiesen, dass die Figuren lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten und/oder Größen handelt.

Automatisierungskommunikationsnetzwerke sind üblicherweise als Feldbussysteme verwirklicht, bei denen die Teilnehmer über den Feldbus miteinander vernetzt sind. Die Teilnehmer können mit Steuerungseinheiten Daten austauschen, wobei dazu in der Regel echtzeitfähige Netzwerkprotokolle eingesetzt werden. Häufig wird der Datenaustausch zwischen den Teilnehmern auf dem Feldbus in Form eines Master-Slave-Verwaltungsprinzips gesteuert. Die aktiven Busteilnehmer, die auch als Master-Teilnehmer bezeichnet werden, entsprechen den Steuereinheiten, die die Übertragung von Daten auf dem Feldbus bestimmen und koordinieren. Die passiven Busteilnehmer, die Slave-Teilnehmer genannt werden und keine eigene Buszugriffsberechtigung besitzen, bilden dagegen die Geräte der Maschinenperipherie. Damit kann ein passiver Busteilnehmer lediglich Nachrichten empfangen, diese quittieren und auf Anfrage des Master-Teilnehmers Daten bzw. Telegramme übermitteln. Die Geräte der Maschinenperipherie können beispielsweise Ein- und/oder Ausgabekomponenten entsprechen, die die Sensoren oder Aktoren einer Maschine oder einer Anlage mit dem Feldbus miteinander verbinden. Alternativ dazu können die Ein- und/oder Ausgabekomponenten direkt in die Sensoren oder Aktoren der Maschine oder der Anlage integriert sein.

Auf dem Feldbus werden zwischen den oben genannten Teilnehmern Telegramme mit zugeordneten Prioritätsstufen übertragen.

Dabei sind die einzelnen Netzwerksegmente mit Teilnehmern mithilfe von einem oder mehreren Verteilerknoten, die als sogenannte "Switches" verwirklicht sein können, miteinander verbunden. Die Verteilerknoten dienen zudem dazu, den Datenaustausch der Teilnehmer in den Netzwerksegmenten zu koordinieren und die Telegramme rechtzeitig an ihr Ziel zu leiten. Die entsprechenden Verteilerknoten weisen mehrere Ein-/Ausgabe-Schnittstellen auf, welche jeweils mit einem Netzwerksegment in Verbindung stehen, wobei das Netzwerksegment zumindest einen Teilnehmer aufweist. Der Verteilerknoten ist ausgelegt, die Telegramme mit der ersten und der zweiten Prioritätsstufe auf einer weiteren Ein-/Ausgabe-Schnittstelle zu empfangen und auf einer Ein-/Ausgabe-Schnittstelle zu senden.

Der Verteilerknoten sendet das Telegramm mit der ersten Prioritätsstufe auf der Ein-/Ausgabe-Schnittstelle, und unterbricht das Senden des Telegramms mit der ersten Prioritätsstufe, wenn der Verteilerknoten auf der weiteren Ein-/Ausgabe-Schnittstelle das Telegramm mit der zweiten Prioritätsstufe empfangen hat, wobei das Telegramm mit der zweiten Prioritätsstufe eine höhere Wertigkeit und beispielsweise einen höheren Wert als die erste Prioritätsstufe umfasst. Neben der ersten und der zweiten Prioritätsstufe, sind auch Telegramme mit weiteren Prioritätsstufen denkbar. Beispielsweise kann das Telegramm mit der ersten Prioritätsstufe als ein azyklisches Telegramm, also ein Nicht-Echtzeit-Telegramm, ausgebildet sein, während das Telegramm mit der zweiten Prioritätsstufe ein zyklisches Telegramm, d.h. ein Echtzeit-Telegramm, bilden kann, das für die Steuerung des Automatisierungssystems relevant ist.

Ein zyklischer Steuerprozess in der Automatisierungstechnik kann vom Master-Teilnehmer angestoßen werden und mithilfe eines Datenaustauschs zwischen dem Master-Teilnehmer und dem Slave-Teilnehmer über den Feldbus erfolgen. Dazu überträgt der Master-Teilnehmer die Ausgangsdaten in Form des Telegramms mit der zweiten Prioritätsstufe auf dem Feldbus, wobei der Slave-Teilnehmer die ihm zugeordneten Ausgangsdaten aus dem Telegramm mit der zweiten Prioritätsstufe entnimmt, um die Ausgangsdaten zu Daten zu verarbeiten, die wiederum an den Master-Teilnehmer zurück übertragen werden und für den Master-Teilnehmer als Eingangsdaten für den nächsten zyklischen Steuerprozess dienen.

Azyklische Telegramme hingegen sind Telegramme, die sich nicht zyklisch auf dem Feldbus wiederholen und demnach nicht echtzeitrelevant sind. Das Telegramm mit der ersten Prioritätsstufe kann demnach beispielsweise Parametrisierungs- und Konfigurationsdaten aufweisen oder Diagnosemeldungen.

Feldbussysteme, deren Verwaltungsstruktur auf dem Master-Slave-Prinzip beruht, können mit verschiedenen Netzwerkprotokollen betrieben werden. Das Ethernet-Protokoll stellt beispielsweise den am weitesten verbreiten Standard der Netzwerkprotokolle für ein lokales Netzwerk (LAN) dar. Ethernet-Telegramme können einen Nutzdatenblock mit einer Länge von 1500 Bytes umfassen und Telegramm-Übertragungsraten zwischen den einzelnen Netzwerkkomponenten innerhalb des LANs von einigen Gigabytes/Sekunde ermöglichen. In Form des sogenannten "Industrial Ethernet" findet das Ethernet-Protokoll auch in industriellen Fertigungsanlagen oder Maschinen eines Automatisierungssystems Anwendung, wobei das Ethernet-Protokoll hierbei die Echtzeitanforderungen des Automatisierungssystems gewährleisten soll. Das EtherCAT-Protokoll stellt zum Beispiel ein solches Protokoll dar, das auf der Ethernet-Protokoll-Technologie basiert und in echtzeitfähigen Automatisierungssystemen eingesetzt werden kann.

Die Besonderheit am EtherCAT-Protokoll liegt darin, dass die Verarbeitung der Nutzdaten im Nutzdatenblock des EtherCAT-Telegramms, das die oben genannten Telegramme mit der ersten und der zweiten Prioritätsstufe umfassen kann, von dem Slave-Teilnehmer bereits während des jeweiligen Telegramm-Durchlaufs erfolgt. Auf diese Weise kann mithilfe des EtherCAT-Protokolls eine schnelle Verarbeitung der Daten im Automatisierungskommunikationssystem bereitgestellt werden, was zum Beispiel vorteilhaft für Echtzeitsysteme Anwendung finden kann.

Das EtherCAT-Telegramm umfasst Datagramme, welche jeweils ein Steuerdatenfeld und ein Nutzdatenfeld aufweisen. Das Steuerdatenfeld umfasst ein Befehlsfeld, welches dem Slave-Teilnehmer Auskunft darüber gibt, auf welche Art er die Nutzdaten der Telegramme mit der ersten und der zweiten Prioritätsstufe verarbeiten soll: Also beispielsweise, ob der Slave-Teilnehmer Daten in einem Schreibvorgang in das Nutzdatenfeld der Telegramme mit der ersten und der zweiten Prioritätsstufe einfügen soll, oder ob er zunächst Daten aus dem Nutzdatenfeld entnehmen und anschließend welche in das Nutzdatenfeld in einem Schreib-/Lesevorgang einfügen soll, bzw. ob der Slave-Teilnehmer lediglich Daten aus dem Nutzdatenfeld in einem Lesevorgang entnehmen soll. Weiterhin weist das Steuerdatenfeld ein Adressfeld auf. Im Adressfeld ist der Datenbereich im Slave-Teilnehmer festgelegt, mit dem der Slave-Teilnehmer beim Durchlauf des Nutzdatenfelds Daten austauschen soll.

Nach dem Empfang des Steuerdatenfelds im Datagramm des EtherCAT-Telegramms beginnt der Slave-Teilnehmer mit der Auswertung des Befehlsfelds und des Adressfelds. Ist der Slave-Teilnehmer adressiert, so entnimmt er bei einem Lese- bzw. bei einem Schreib-/Lese-Datagramm die für ihn bestimmten Ausgangsdaten aus dem Nutzdatenfeld während das Datagramm im EtherCAT-Telegramm durch den Slave-Teilnehmer hindurchläuft. Handelt es sich um ein Schreib- bzw. ein Schreib-/Lese-Datagramm, so fügt der entsprechende Slave-Teilnehmer die Eingangsdaten im Durchlauf in das Nutzdatenfeld im Datagramm ein. Das Verarbeiten der Datagramme im Durchlauf von den Slave-Teilnehmern verzögert das EtherCAT-Telegramm nur geringfügig.

Die Erfindung wird nachfolgend anhand des EtherCAT-Telegrammverkehrs beschrieben. Für die Erfindung kann jedoch ebenso ein anderes Ethernet-Protokoll verwendet werden, das in Echtzeitsystemen angewendet werden kann. Überdies kann das erfindungsgemäße Verfahren mit einem Standard-Ethernet-Protokoll verwirklicht werden. Die Erfindung ist ferner nicht auf ein Automatisierungsnetzwerk mit einer hierarchischen Master-Slave-Verwaltungsstruktur beschränkt.

Den Telegrammen im Automatisierungskommunikationsnetzwerk sind jeweils die erste und die zweite Prioritätsstufe zugeordnet, wobei die zweite Prioritätsstufe mit einer höheren Wertigkeit als die erste Prioritätsstufe ausgebildet ist. Nachfolgend kann die höhere Wertigkeit der zweiten Prioritätsstufe beispielsweise in einem höheren Wert der zweiten Prioritätsstufe ausgebildet sein, als der Wert der ersten Prioritätsstufe. Es ist jedoch ebenso der umgekehrte Fall denkbar, bei dem die zweite Prioritätsstufe mit einem niedrigeren Wert als die erste Prioritätsstufe ausgebildet sein kann. Aufgrund der Prioritätsstufen der Telegramme kann der Verteilerknoten das Senden des Telegramms mit der ersten Prioritätsstufe auf der Ein-/Ausgabe-Schnittstelle unterbrechen, wenn der Verteilerknoten das höher priorisierte Telegramm mit der zweiten Prioritätsstufe auf der weiteren Ein-/Ausgabe-Schnittstelle empfangen hat. Der Verteilerknoten schließt das Telegramm mit der ersten Prioritätsstufe, das ein erstes Fragment des Telegramms bildet, definiert ab, indem der Verteilerknoten eine erste Fragmentier-Information am Ende des ersten Fragments sendet.

Ein verbleibender Teil des Telegramms mit der ersten Prioritätsstufe, der von dem Verteilerknoten noch nicht gesendet worden ist, bildet das zweite Fragment des Telegramms. Der Verteilerknoten erzeugt eine zweite Fragmentier-Information für das zweite Fragment und speichert die zweite Fragmentier-Information zusammen mit dem zweiten Fragment zwischen. Der Verteilerknoten kann das zweite Fragment beim Empfang auf der weiteren Ein-/Ausgabe-Schnittstelle aufgrund der gespeicherten Information rasch zuordnen.

Nach dem Senden des Telegramms mit der zweiten Prioritätsstufe auf der Ein-/Ausgabe-Schnittstelle, sendet der Verteilerknoten das zweite Fragment des Telegramms mit der ersten Prioritätsstufe zusammen mit der zweiten Fragmentier-Information. Zusätzlich kann sowohl das erste als auch das zweite Fragment ein Prüfsummenfeld mit einer Prüfsumme, die der Verteilerknoten über die bereits gesendeten Teile, d.h. die gesendeten Daten, der entsprechenden Fragmente berechnet, aufweisen. Berechnet der Verteilerknoten die Prüfsumme für jedes Fragment und sendet die Prüfsumme zusammen mit dem jeweiligen Telegramm an den Teilnehmer, für den das Telegramm bestimmt ist, so kann der angesprochene Teilnehmer ebenfalls eine Prüfsummenberechnung für die einzelnen Fragmente durchführen und diese mit der Prüfsumme, die die Fragmente umfassen, vergleichen. Bei Nichtübereinstimmung der beiden Prüfsummen kann ein Fehler in der Datenübertragung, beispielsweise der Verlust eines Fragments oder eines Unterfragments von dem angesprochenen Teilnehmer und/oder einem weiteren Verteilerknoten schnell lokalisiert werden.

Der angesprochene Teilnehmer, der den Empfänger für das Telegramm mit der ersten Prioritätsstufe bildet, setzt das erste und das zweite Fragment des Telegramms mit der ersten Prioritätsstufe auf Grundlage der ersten und der zweiten Fragmentier-Information wieder zusammen, da die erste und die zweite Fragmentier-Information eine Zuordnung des ersten und des zweiten Fragments zu dem Telegramm mit der ersten Prioritätsstufe erlauben. Der Empfänger kann mithilfe der ersten Fragmentier-Information über eine Fragmentnummer erkennen, ob alle Fragmente des Telegramms übertragen worden sind und der Empfänger alle Fragmente des Telegramms mit der ersten Prioritätsstufe erhalten hat. Zudem kann der Empfänger eine Information über die Fragmentnummer des zweiten Fragments erhalten. Neben der Fragmentnummer kann die erste Fragmentier-Information den Wert der Prioritätsstufe des ersten Fragments sowie die fortlaufende Zahl umfassen. Auch die zweite Fragmentier-Information des zweiten Fragments kann neben der Fragmentzahl, die den Wert der Fragmentnummer des ersten Fragments aufweisen kann, den Wert der Prioritätsstufe sowie die fortlaufende Zahl umfassen.

Der Empfänger erkennt die Fragmentierung des Telegramms anhand des ersten Fragmentier-Symbols am Ende des unterbrochenen Telegramms, vorausgesetzt, der Empfänger umfasst keinen Standard-Ethernet-Controller, sondern ist in der Lage, das spezielle Fragmentier-Symbol zu interpretieren und zu verarbeiten. Die Fragmentnummer des zweiten Fragments muss zur Kennzeichnung der Fragmentierung nicht zwingend von dem zumindest einen Verteilerknoten mitgesendet werden, da der Empfänger die Fragmentierung des Telegramms anhand des ersten Fragmentier-Symbols am Ende des ersten Fragments erkennen kann.

Alternativ zur oben genannten Fragmentnummer des zweiten Fragments kann die erste Fragmentier-Information des ersten Fragments auch in Form eines reservierten Bits, in einem die erste Fragmentier-Information umfassenden Datenfeld verwirklicht sein. Das reservierte Bit kann zwei Zustände umfassen, über die festgestellt werden kann, ob es sich bei dem ersten Fragment tatsächlich um das erste Fragment des Telegramms handelt. Beispielsweise kann dazu der Zustand eins oder der Zustand Null des reservierten Bits dienen.

Der Verteilerknoten kann die Fragmentierung des Telegramms mit der ersten Prioritätsstufe also einerseits mithilfe des ersten Fragmentier-Symbols am Ende des ersten Fragments und eines zweiten Fragmentier-Symbols am Anfang eines ersten Unterfragments des zweiten Fragments kennzeichnen. Andererseits kann der Verteilerknoten eine mögliche Fragmentierung des Telegramms mit der ersten Prioritätsstufe anzeigen, indem der Verteilerknoten am Anfang des Telegramms mit der ersten Prioritätsstufe ein Fragmentier-TAG setzt, das ein Typfeld für ein verwendetes Protokoll innerhalb von Nutzdaten des ersten Fragments aufweist. Das Fragmentier-TAG selbst zeigt noch keine tatsächliche Fragmentierung des Telegramms an, jedoch zeigt die erste Fragmentier-Information am Ende des unterbrochenen Telegramms, dass das erste Fragment bildet, die tatsächliche Fragmentierung des Telegramms an.

Alternativ kann die Information der möglichen Fragmentierung eines Telegramms mit der ersten Prioritätsstufe auch durch eine spezielle Zieladresse bzw. eine spezielle Absenderadresse angezeigt werden. In diesem Fall kann die Ziel- bzw. Absenderadresse jedoch nicht mehr vollständig für das Routing, also das Senden des Telegramms benutzt werden. Dies ist möglich bei einem Telegramm, das sich beispielsweise um ein EtherCAT-Telegramm handelt.

Der Verteilerknoten unterbricht das Telegramm mit der ersten Prioritätsstufe mit dem Fragmentier-TAG schließlich so, dass das erste Fragment beim Unterbrechungsvorgang eine Mindestlänge aufweist und kennzeichnet die tatsächliche Fragmentierung des Telegramms mit der ersten Fragmentier-Information, die die Fragmentnummer des zweiten Fragments am Ende des ersten Fragments aufweisen kann. Ferner kann die erste Fragmentier-Information den Wert der Prioritätsstufe des ersten Fragments sowie die fortlaufende Zahl umfassen. Auch die zweite Fragmentier-Information kann für das zweite Fragment des Telegramms mit dem Fragmentier-TAG den Wert der Prioritätsstufe des zweiten Fragments sowie die fortlaufende Zahl umfassen.

Abhängig davon, welche Art von Ethernet-Controller bzw. Netzwerkkarte im empfangenden Teilnehmer eingesetzt wird, kann der Verteilerknoten bei dem Einsatz eines Nicht-Standard-Ethernet-Controllers, der in der Lage ist, ein solches Fragmentier-Symbol zu interpretieren, das in Form eines zusätzlichen, über die herkömmlichen 256 Symbole, die zur Codierung der mit dem Ethernet-Protokoll übertragenen Bytes des Telegramms vorgesehen sind, hinausgehenden Symbols ausgebildet ist, die Fragmentierung des Telegramms mit dem ersten und dem zweiten Fragmentier-Symbol kennzeichnen. Bei einem Standard-Ethernet-Controller, der Ethernet-Telegramme mit einer Mindestlänge von 64 Bytes zur Verarbeitung erfordert, kann der Verteilerknoten die Fragmentierung mithilfe der ersten Fragmentier-Information anzeigen und auf die zusätzlichen Fragmentier-Symbole in den Fragmenten verzichten.

Das Fragmentieren des Telegramms mit der ersten Prioritätsstufe ist in der Regel für den Rückweg der Telegrammübertragung erforderlich. Denn auf dem Hinweg legt der erste Teilnehmer, also der Master-Teilnehmer im ersten Netzwerksegment fest, wann das Telegramm mit der zweiten Prioritätsstufe über den Verteilerknoten und/oder die Verteilerknoten an den zweiten Teilnehmer, also den Slave-Teilnehmer im zweiten Netzwerksegment übertragen wird. Aufgrund dieser Festlegung können Telegramm-Kollisionen vermieden werden. Anders ist dies jedoch, wenn das Telegramm mit der zweiten Prioritätsstufe bzw. das Telegramm mit der ersten Prioritätsstufe an den Master-Teilnehmer auf dem Rückweg gesendet werden. Hier können Kollisionen vermieden werden, wenn der entsprechende Verteilerknoten das niedrigpriorisierte Telegramm, also das Telegramm mit der ersten Prioritätsstufe fragmentiert, um das höherpriorisierte Telegramm mit der zweiten Prioritätsstufe vorrangig weiterzuleiten.

Es ist möglich, ein Telegramm anhand der dem Telegramm zugeordneten Prioritätsstufe und der fortlaufenden Zahl zu identifizieren. Insbesondere muss eine Kombination aus der dem jeweiligen noch nicht vollständig gesendeten Fragment zugeordneten Prioritätsstufe und der fortlaufenden Zahl eindeutig sein. Die fortlaufende Zahl kann entfallen, wenn zu einem Zeitpunkt über die Ein-/Ausgabe-Schnittstelle des zumindest einen Verteilerknotens, die als die Sende-Schnittstelle vorgesehen ist, nur ein Telegramm mit einer bestimmten Prioritätsstufe unterbrochen werden kann. In dem Fall würde die fortlaufende Zahl benötigt werden, damit der Empfänger erkennt, ob alle Fragmente des Telegramms vollständig übertragen worden sind. Die fortlaufende Zahl kann sich für das erste Fragment am Anfang oder am Ende des ersten Fragments befinden. Für das zweite Fragment bzw. weitere Fragmente muss sich die fortlaufende Zahl am Anfang des zweiten Fragments bzw. der weiteren Fragmente befinden.

Eine Fragmentzahl, die beispielsweise Teil der zweiten Fragmentier-Information sein kann, wird ferner nur für das zweite Fragment bzw. weitere Fragmente benötigt, wobei sich die Fragmentzahl am Anfang und/oder am Ende des zweiten Fragments bzw. am Anfang und/oder am Ende der weiteren Fragmente befinden kann. Zudem kann die Fragmentzahl auch für das erste Fragment von dem zumindest einen Verteilerknoten übertragen werden und beispielsweise Teil der ersten Fragmentier-Information sein. Der zumindest eine Verteilerknoten kann die Fragmentzahl auswerten, dies ist jedoch nicht zwingend erforderlich, jedoch muss der empfangende Teilnehmer in der Lage sein, die Fragmentzahl der einzelnen Fragmente verarbeiten zu können, um erkennen zu können, ob die Fragmente des Telegramms alle vollständig zum Empfänger übertragen worden sind, oder ob eines der Fragmente fehlt.

Ein letztes Fragment bzw. ein letztes Unterfragment, im Falle einer mehrfachen Fragmentierung eines Fragments, kann beispielsweise mit der ersten Fragmentier-Information mithilfe eines Werts Null der Fragmentnummer angezeigt werden. Weiterhin kann die genannte Information auch über das oben genannte reservierte Bit in dem Datenfeld, das für die erste Fragmentier-Information vorgesehen ist, angezeigt werden. Über die zwei Zustände des Bits können boolesche Werte in Form von Null und eins für das letzte Fragment bzw. das letzte Unterfragment verwirklicht werden.

Mithilfe der erfindungsgemäßen Vorgehensweise kann der Telegrammverkehr im Automatisierungskommunikationsnetzwerk optimiert werden. Dabei liegt der Kern der Erfindung in der optimalen Nutzung der Datenübertragungsstrecke zwischen den Teilnehmern, indem die Telegramme von dem Verteilerknoten weitergeleitet werden, ohne vorher vollständig von dem Verteilerknoten empfangen worden zu sein, wobei der Verteilerknoten das Senden der niedrigpriorisierten Telegramme aufgrund vorrangiger, höherpriorisierter Telegramme unterbricht und die niedrigpriorisierten Telegramme fragmentiert. Ferner kann der Verteilerknoten die Fragmentierung der niedrigpriorisierten Telegramme flexibel an die im Automatisierungskommunikationsnetzwerk eingesetzten Teilnehmer, insbesondere deren umfassende Ethernet-Controller, anpassen, um damit eine verbesserte Kompatibilität der einzelnen Komponenten bereitzustellen. Die Erfindung bietet ferner den Vorteil, dass sie die Totzeit bei der Telegrammübertragung durch die effiziente Übertragung der Telegramme in Fragmente von dem Verteilerknoten auf ein Minimum reduziert. Die vorliegende Erfindung eignet sich vorteilhaft für die Übertragung der hochpriorisierten Telegramme, die ohne Verzögerung von dem zumindest einen Verteilerknoten weitergeleitet werden können. Auch kann die Bandbreite des Automatisierungssystems durch die Fragmentierung der niedrigpriorisierten Telegramme bestmöglich ausgenutzt werden kann.

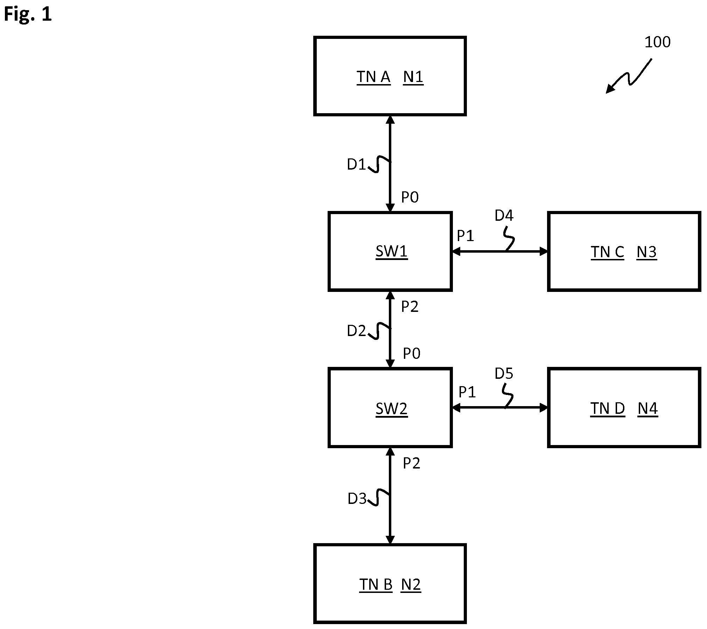

Fig. 1 zeigt einen schematischen Aufbau eines Automatisierungskommunikationsnetzwerks 100 mit mehreren Verteilerknoten und Netzwerksegmenten. Das Automatisierungskommunikationsnetzwerk 100 umfasst einen ersten Verteilerknoten SW1 und einen zweiten Verteilerknoten SW2, die über einen Feldbus miteinander verbunden sein und einen Speicher aufweisen können. Die Topologie des Automatisierungskommunikationsnetzwerks 100 sieht vor, dass ein erstes Netzwerksegment N1 mit einem ersten Teilnehmer TN A über eine erste Datenübertragungsstrecke D1 an eine erste Ein-/Ausgabe-Schnittstelle P0 des ersten Verteilerknotens SW1 angeschlossen sein kann. Bei dem ersten Teilnehmer TN A kann es sich um einen Master-Teilnehmer handeln, für die Erfindung ist dies jedoch nicht zwingend erforderlich.

Über eine zweite Ein-/Ausgabe-Schnittstelle P2 sowie einer zweiten Datenübertragungsstrecke D2 ist der erste Verteilerknoten SW1 mit einer ersten Ein-/Ausgabe-Schnittstelle P0 eines zweiten Verteilerknotens SW2 verbunden. Eine zweite Ein-/Ausgabe-Schnittstelle P2 des zweiten Verteilerknotens SW2 verbindet den zweiten Verteilerknoten SW2 über eine dritte Datenübertragungsstrecke D3 mit einem zweiten Netzwerksegment N2, umfassend einen zweiten Teilnehmer TN B. Neben dem gezeigten zweiten Teilnehmer TN B im zweiten Netzwerksegment N2, kann das zweite Netzwerksegment N2 weitere Teilnehmer aufweisen, die nicht dargestellt sind. Bei dem zweiten Teilnehmer TN B kann es sich beispielsweise um einen Slave-Teilnehmer handeln, falls die Verwaltungshierarchie des Automatisierungskommunikationsnetzwerks 100 auf dem Master-Slave-Prinzip beruhen soll.

Eine dritte Ein-/Ausgabe-Schnittstelle P1 des ersten Verteilerknotens SW1 verbindet den ersten Verteilerknoten SW1 über eine vierte Datenübertragungsstrecke D4 mit einem dritten Netzwerksegment N3, aufweisend einen dritten Teilnehmer TN C. Neben dem gezeigten dritten Teilnehmer TN C im dritten Netzwerksegment N3, kann das dritte Netzwerksegment N3 weitere Teilnehmer aufweisen, die nicht dargestellt sind. Bei dem dritten Teilnehmer TN C kann es sich beispielsweise um einen Slave-Teilnehmer handeln, falls die Verwaltungshierarchie des Automatisierungskommunikationsnetzwerks 100 auf dem Master-Slave-Prinzip beruhen soll.

Der zweite Verteilerknoten SW2 ist mithilfe einer dritten Ein-/Ausgabe-Schnittstelle P1 über eine fünfte Datenübertragungsstrecke D5 mit einem vierten Netzwerksegment N4, umfassend einen vierten Teilnehmer TN D, verbunden. Neben dem gezeigten vierten Teilnehmer TN D im vierten Netzwerksegment N4, kann das vierte Netzwerksegment N4 weitere Teilnehmer aufweisen, die nicht dargestellt sind. Bei dem vierten Teilnehmer TN D kann es sich beispielsweise um einen Slave-Teilnehmer handeln, falls die Verwaltungshierarchie des Automatisierungskommunikationsnetzwerks 100 auf dem Master-Slave-Prinzip beruhen soll.

Alternativ kann sich der erste bis vierte Teilnehmer TN A-TN D oder einer der ersten bis vierten Teilnehmer TN A-TN D auch um einen in anderer Weise ausgebildeten Teilnehmer handeln. Denkbar ist beispielsweise ein Standard-Ethernet-Teilnehmer, umfassend einen Standard-Ethernet-Controller oder ein Ethernet-Teilnehmer, umfassend einen Nicht-Standard-Ethernet-Controller. Die Datenübertragung in dem in Fig. 1 dargestellten Automatisierungskommunikationsnetzwerk 100 kann auf der Grundlage eines einheitlichen echtzeitfähigen Netzwerkprotokolls, zum Beispiel des EtherCAT-Protokolls erfolgen.

Die in Fig. 1 gewählte Darstellung von Doppelpfeilen zwischen dem ersten bis vierten Teilnehmer TN A-TN D im ersten bis vierten Netzwerksegment N1-N4 und dem ersten und zweiten Verteilerknoten SW1, SW2 zeigt an, dass eine bidirektionale Datenübertragung zwischen dem ersten bis vierten Teilnehmer TN A-TN D und dem ersten und zweiten Verteilerknoten SW1, SW2 auf einem Hinweg und einem Rückweg möglich ist. Die erste bis fünfte Datenübertragungsstrecke D1-D5 zwischen den beiden Verteilerknoten SW1, SW2 und den vier Teilnehmern TN A-TN D weist ebenfalls einen Hin- und Rückweg auf. Folglich können Daten mittels Telegrammen mit zugeordneten Prioritätsstufen zwischen den einzelnen Teilnehmern TN A-TN D auf einem geschlossenen Datenübertragungsweg im Automatisierungskommunikationsnetzwerk 100 übertragen werden. Weiterhin ist die Darstellung von zwei Verteilerknoten SW1, SW2 nicht als zwingend erforderlich anzusehen, da gleichermaßen mehr oder weniger Verteilerknoten innerhalb des Automatisierungskommunikationsnetzwerks 100 angeordnet sein können. Auch kann die Anzahl der einzelnen Ein-/Ausgabe-Schnittstellen der Verteilerknoten von der beschriebenen Anzahl der Ein-/Ausgabe-Schnittstellen abweichen. Ferner ist denkbar das Automatisierungskommunikationsnetzwerk 100 mit einer größeren oder kleineren Anzahl an Netzwerksegmenten und/oder Teilnehmern zu verwirklichen.

Nachfolgend wird ein Austausch von Daten mittels Telegrammen mit zugeordneten Prioritätsstufen zwischen dem ersten bis vierten Teilnehmer TN A-TN D beschrieben. Dabei kann es sich bei dem ersten Teilnehmer TN A um einen Master-Teilnehmer handeln und bei den zweiten bis vierten Teilnehmern TN B-TN D jeweils um einen Slave-Teilnehmer. Der erste Teilnehmer TN A stellt jedem Telegramm im Automatisierungskommunikationsnetzwerk 100, das ein EtherCAT-Telegramm mit zugeordneten Prioritätsstufen sein kann, bei dem der zweite Teilnehmer TN B oder weitere nicht dargestellte Teilnehmer im zweiten Netzwerksegment N2 und/oder der dritte Teilnehmer TN C oder weitere nicht dargestellte Teilnehmer im dritten Netzwerksegment N3 und/oder der vierte Teilnehmer TN D oder weitere nicht dargestellte Teilnehmer im vierten Netzwerksegment N4, die einen Schreibvorgang ausführen sollen, bei dem Daten in ein Nutzdatenfeld des jeweiligen EtherCAT-Telegramms geschrieben werden sollen, einen Header voran. Dieser Header umfasst Informationen für die zwischen den ersten bis vierten Teilnehmern TN A-TN D im Automatisierungskommunikationsnetzwerk 100 angeordneten zwei Verteilerknoten SW1, SW2 in Bezug auf die Weiterleitung der EtherCAT-Telegramme, die im Folgenden als Telegramme bezeichnet werden. Die Telegramme werden von dem zweiten bis vierten Teilnehmer TN B-TN D im Durchlauf bearbeitet und von dem jeweils letzten Teilnehmer TN B-TN D im Automatisierungskommunikationsnetzwerk 100 wieder an den ersten Teilnehmer TN A gesendet.

Im Folgenden sendet der vierte Teilnehmer TN D im vierten Netzwerksegment N4 ein erstes Telegramm B mit einer ersten Prioritätsstufe 200, die beispielsweise einen ganzzahligen Wert zwei umfasst, über die fünfte Datenübertragungsstrecke D5 an die dritte Ein-/Ausgabe-Schnittstelle P1 des zweiten Verteilerknotens SW2. Der zweite Verteilerknoten SW2 leitet das erste Telegramm B mit der ersten Prioritätsstufe 200 über die erste Ein-/Ausgabe-Schnittstelle P0 des zweiten Verteilerknotens SW2 und der zweiten Datenübertragungsstrecke D2 an die zweite Ein-/Ausgabe-Schnittstelle P2 des ersten Verteilerknotens SW1 weiter. Der erste Verteilerknoten SW1 leitet das erste Telegramm B mit der ersten Prioritätsstufe über die erste Ein-/Ausgabe-Schnittstelle P0 und die erste Datenübertragungsstrecke D1 an den ersten Teilnehmer TN A im ersten Netzwerksegment N1 weiter.

Der zweite Teilnehmer TN B im zweiten Netzwerksegment N2 sendet ein zweites Telegramm C mit einer zweiten Prioritätsstufe 210, die beispielsweise einen ganzzahligen Wert drei aufweist, über die dritte Datenübertragungsstrecke D3 an die zweite Ein-/Ausgabe-Schnittstelle P2 des zweiten Verteilerknotens SW2. Der zweite Verteilerknoten SW2 leitet das zweite Telegramm C mit der zweiten Prioritätsstufe 210 über die erste Ein-/Ausgabe-Schnittstelle P0 des zweiten Verteilerknotens SW2 und die zweite Datenübertragungsstrecke D2 an die zweite Ein-/Ausgabe-Schnittstelle P2 des ersten Verteilerknotens SW1. Der erste Verteilerknoten SW1 leitet das zweite Telegramm C mit der zweiten Prioritätsstufe 210 über die erste Ein-/Ausgabe-Schnittstelle P0 des ersten Verteilerknotens SW1 und die erste Datenübertragungsstrecke D1 an den ersten Teilnehmer TN A im ersten Netzwerksegment.

Auch der dritte Teilnehmer TN C im dritten Netzwerksegment N3 sendet ein drittes Telegramm A1 und ein viertes Telegramm A2 über die vierte Datenübertragungsstrecke D4 an die dritte Ein-/Ausgabe-Schnittstelle P1 des ersten Verteilerknotens SW1, wobei das dritte Telegramm A1 und das vierte Telegramm A2 eine dritte Prioritätsstufe 220 umfassen. Die dritte Prioritätsstufe 220 weist zum Beispiel einen ganzzahligen Wert eins auf. Der erste Verteilerknoten SW1 leitet das dritte Telegramm A1 und das vierte Telegramm A2 über die erste Ein-/Ausgabe-Schnittstelle P0 und die erste Datenübertragungsstrecke D1 an den ersten Teilnehmer TN A im ersten Netzwerksegment N1 weiter.

Das erste bis vierte Telegramm B, C, A1, A2 umfasst jeweils einen Header mit Informationen für den ersten Verteilerknoten SW1 und/oder für den zweiten Verteilerknoten SW2 bezüglich des Weiterleitungsvorgangs des ersten bis vierten Telegramms B, C, A1, A2, wobei der Header von dem ersten Teilnehmer TN A erzeugt wird. Sind die Telegramme nicht als EtherCAT-Telegramme ausgebildet, so ist es ebenfalls denkbar, dass der zweite bis vierte Teilnehmer TN B-TN D, der das erste bis vierte Telegramm B, C, A1, A2 sendet, den Header des Telegramms erzeugt.

Die Werte der einzelnen ersten bis dritten Prioritätsstufen 200, 210, 220 der ersten bis vierten Telegramme B, C, A1, A2 sind exemplarisch gewählt worden. Gleichermaßen können die ersten bis vierten Telegramme B, C, A1, A2 auch davon abweichende Prioritätsstufen aufweisen. Alternativ können auch der erste und der zweite Verteilerknoten SW1, SW2 ausgebildet sein die Werte der Prioritätsstufen der Telegramme zu setzen.

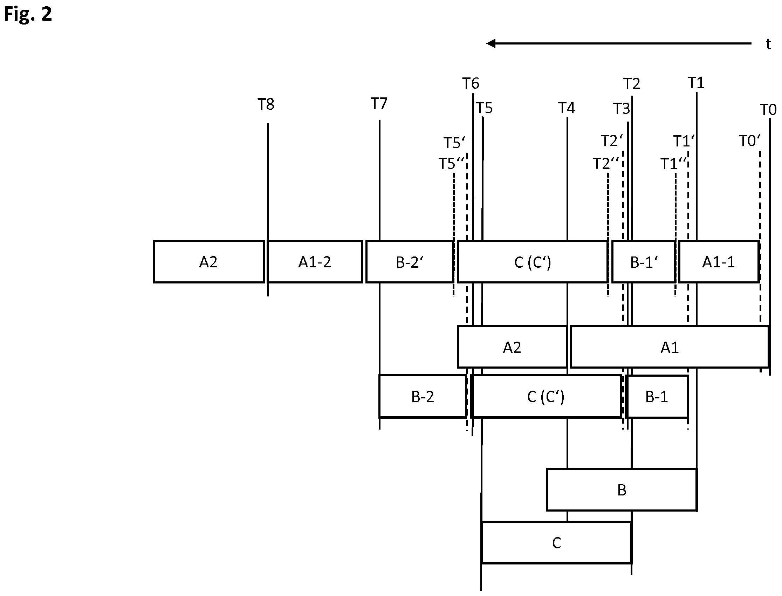

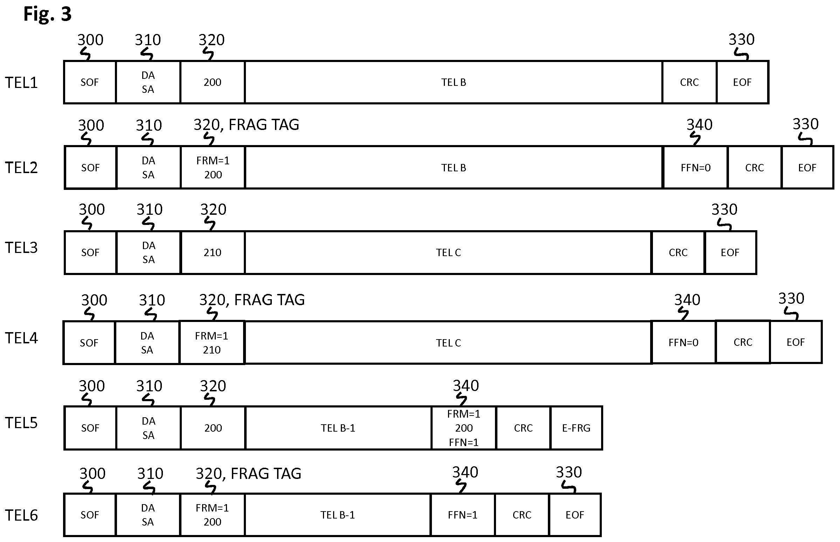

Fig. 2 zeigt einen schematischen zeitlichen Ablauf der Datenübertragung mittels Telegrammen zwischen den in Fig. 1 dargestellten ersten bis vierten Teilnehmern TN A-TN D des ersten bis vierten Netzwerksegments N1-N4. Weiterhin zeigen die Fig. 3 bis 8 schematische Telegrammaufbauten der in den Fig. 1 und Fig. 2 dargestellten Teilnehmer TN A-TN D und den zwischen ihnen übertragenen ersten bis vierten Telegrammen B, C, A1, A2. Ein zeitlicher Verlauf t in Fig. 2 ist derart gewählt worden, dass im Automatisierungskommunikationsnetzwerk 100 ein Zeitpunkt T0 vor einem Zeitpunkt T8 eintritt. Für die Beschreibung der nachfolgenden Figuren wird jedoch nicht chronologisch vorgegangen, sondern zunächst ein erster Telegrammverkehr am zweiten Verteilerknoten SW2 erläutert und danach ein zweiter Telegrammverkehr am ersten Verteilerknoten SW1 beschrieben, wobei das Senden des ersten Telegramms B mit der ersten Prioritätsstufe 200 mit dem Wert zwei von dem vierten Teilnehmer TN D, sowie das Senden des zweiten Telegramms C mit der zweiten Prioritätsstufe 210 mit dem Wert drei von dem zweiten Teilnehmer TN B, sowie das Senden des dritten Telegramms A1 mit der dritten Prioritätsstufe 220 mit dem Wert eins von dem dritten Teilnehmer TN C, und das Senden des vierten Telegramms A2 mit der dritten Prioritätsstufe 220 mit dem Wert eins von dem dritten Teilnehmer TN C analog zur obigen Beschreibung erfolgen kann. Auch wird zur Vereinfachung der Beschreibung im Folgenden die erste Ein-/Ausgabe-Schnittstelle P0 des ersten und des zweiten Verteilerknotens SW1, SW2 detaillierter betrachtet, als deren zweite Ein-/Ausgabe-Schnittstelle P2 und dritte Ein-/Ausgabe-Schnittstelle P1.

Zu einem Zeitpunkt T1 empfängt der zweite Verteilerknoten SW2 auf der dritten Ein-/Ausgabe-Schnittstelle P1 des zweiten Verteilerknotens SW2 das erste Telegramm B mit der ersten Prioritätsstufe 200 mit dem Wert zwei. Der zweite Verteilerknoten SW2 sendet das erste Telegramm B mit der ersten Prioritätsstufe 200 mit dem Wert zwei auf der ersten Ein-/Ausgabe-Schnittstelle P0 des zweiten Verteilerknotens SW2 an den ersten Verteilerknoten SW1 weiter. Der erste Verteilerknoten SW1 empfängt das erste Telegramm B zu einem Zeitpunkt T1'.

Das von dem zweiten Verteilerknoten SW2 weitergeleitete erste Telegramm B mit der ersten Prioritätsstufe 200 mit dem Wert zwei kann beim Senden des Telegramms auf der ersten Ein-/Ausgabe-Schnittstelle P0 des zweiten Verteilerknotens SW2 einen in Fig. 3 dargestellten ersten Telegrammaufbau TEL1 aufweisen. Das erste Telegramm B weist ein erstes Datenfeld 300 auf, wobei das erste Datenfeld 300 einen Start of Frame (SOF) aufweist, das heißt eine acht Byte umfassende Bitfolge, die dem Teilnehmer, für den das Telegramm bestimmt ist, den Beginn des ersten Telegramms B anzeigt. Der SOF umfasst dabei eine sogenannte "Präambel", also eine alternierende sieben Byte umfassende Bitfolge und einen sogenannten "Start of Frame Delimiter" (SFD), eine ein Byte umfassende alternierende Bitfolge, die mit der Dualzahl 1 abschließt.

Weiterhin weißt das erste Telegramm B mit dem ersten Telegrammaufbau TEL1 ein zweites Datenfeld 310 auf. Das zweite Datenfeld umfasst eine Zieladresse DA sowie eine Absenderadresse SA, wobei die Zieladresse DA in Form einer MAC-Adresse (Media-Access-Control) als eine sogenannte "Unicast-Adresse" (Adressierung eines Teilnehmers im Automatisierungskommunikationsnetzwerk 100) bzw. als eine sogenannte "Multicast-Adresse" (Adressierung mehrerer Teilnehmer im Automatisierungskommunikationsnetzwerk 100) sowie als eine sogenannte "Broadcast-Adresse" (Adressierung aller Teilnehmer im Automatisierungskommunikationsnetzwerk 100) ausgebildet sein kann. Die Absenderadresse SA gibt den Teilnehmer an, der das jeweilige Telegramm gesendet hat, also im vorliegenden Fall entspricht die Absenderadresse SA der MAC-Adresse des vierten Teilnehmers TN D. Das zweite Datenfeld umfasst jeweils 6 Bytes für die Zieladresse DA des Telegramms und 6 Bytes für die Absenderadresse SA des Telegramms.

Ein drittes Datenfeld 320 des ersten Telegramms B mit dem ersten Telegrammaufbau TEL1 umfasst eine dem ersten Telegramm B zugeordnete erste Prioritätsstufe 200, die den ganzzahligen Wert zwei aufweist. Die Prioritätsstufe 200 des ersten Telegramms B kann vom sendenden vierten Teilnehmer TN D im vierten Netzwerksegment N4 festgelegt worden sein. Der vierte Teilnehmer TN D kann dazu, im Fall einer Erweiterung des ersten Telegramms B um ein vier Bytes umfassendes zusätzliches Datenfeld VLAN TAG, das ein Typfeld ET in den ersten zwei Bytes aufweist, eine VLAN-Prioritätsstufe, eine VLAN-Identifikation sowie eine Reserve in den zweiten zwei Bytes umfasst, als die dem ersten Telegramm B zugeordnete erste Prioritätsstufe 200 die VLAN-Prioritätsstufe nutzen. Diese Vorgehensweise wird beispielsweise beim TSN-Verfahren (Time Sensitive Networking) angewandt. Ferner kann die dem ersten Telegramm B zugeordnete erste Prioritätsstufe 200 auch eine in den MAC-Adressen versteckte Prioritätsstufe sein bzw. kann die Zuordnung der ersten Prioritätsstufe 200 auch über ein neues Typfeld ET erfolgen.

Das zweite und das dritte Datenfeld 310, 320 des ersten Telegramms B mit dem ersten Telegrammaufbau TEL1 können den Header des Telegramms bilden. Auf den Header des ersten Telegramms B folgt ein Nutzdatenabschnitt TEL B des ersten Telegramms B, sowie ein 4 Bytes umfassendes Prüfsummenfeld CRC, das eine Prüfsumme umfasst, die über den Header und den Nutzdatenabschnitt TEL B des ersten Telegramms B mit dem ersten Telegrammaufbau TEL1 berechnet wird. Das erste Datenfeld 300 wird für die Berechnung der Prüfsumme nicht mit berücksichtigt. Die Berechnung der Prüfsumme dient dazu, eine mögliche fehlerhafte Datenübertragung erkennen zu können, indem der erste Teilnehmer TN A im ersten Netzwerksegment N1 eigenständig eine Prüfsummenberechnung des empfangenen ersten Telegramms B durchführt und im Fall der Nichtübereinstimmung auf eine fehlerhafte Datenübertragung schließen kann. Ein Ende des ersten Telegramms B mit dem ersten Telegrammaufbau TEL1 erkennt der erste Teilnehmer TN A in dem ersten Netzwerksegment N1 nach dem Prüfsummenfeld CRC über ein viertes Datenfeld 330, das ein Ende-Symbol EOF umfasst.

Die mit dem Ethernet- bzw. dem ethernetbasierten echtzeitfähigen EtherCAT Protokoll übertragenen Bytes des ersten Telegramms B werden als Symbole codiert, wobei beispielsweise im Falle von Gigabit-Ethernet eine Symbolmenge von 625 Symbolen für die Codierung zur Verfügung steht. Damit weist ein Telegramm, das auf dem Ethernet-Standard basiert, ein Start-Symbol auf (das oben mit dem Begriff SOF bezeichnet wurde), so wie eine Folge von weiteren Symbolen für den Datenblock des ersten Telegramms B, umfassend das zweite und dritte Datenfeld 310, 320, den Nutzdatenabschnitt TEL B des ersten Telegramms B sowie das Prüfsummenfeld CRC, und abschließend das Ende-Symbol EOF. Das Start- und das Ende-Symbol SOF, EOF werden von einem sogenannten "PHY" (eigentlich von Physical Layer, die Bezeichnung für die Bitübertragungsschicht im Open System Interconnection (OSI) Modell) erzeugt, wenn ein Signal, das sogenannte "TX-Enable" über den beginnenden Sendevorgang des ersten Telegramms B vom dem sendenden Teilnehmer, umfassend einen Ethernet-Controller aktiv gesetzt wird. Der Begriff PHY bezeichnet eine physische Schnittstelle (bzw. einen integrierten Schaltkreis), die zur Umsetzung der Datenübertragungsphysik dient, das heißt, dass sie für die Codierung und Decodierung von Daten über verschiedene Spannungspegel zuständig ist.

Der erste bis vierte Teilnehmer TN A-TN D weist jeweils einen Ethernet-Controller auf, der als weiterer integrierter Schaltkreis ausgebildet sein kann. Dieser Ethernet-Controller erzeugt für ein zu sendendes Telegramm die oben genannte Präambel und den Start of Frame Delimiter (SFD) und berechnet die Prüfsumme und fügt diese ins Prüfsummenfeld CRC ein. Der Header des Telegramms, umfassend die Absenderadresse SA sowie die Zieladresse DA und das Typfeld ET, sowie der jeweilige Nutzdatenabschnitt werden dabei vom jeweiligen ersten bis vierten Teilnehmer TN A-TN D vorgegeben. Beim Empfangen des Telegramms vergleicht der entsprechende Verteilerknoten die Zieladresse DA des Telegramms mit einer eigenen MAC-Adresse (Media Access Control), sowie der oben genannten Multicast-Adresse und der Broadcast-Adresse, wobei der entsprechende Verteilerknoten das Telegramm im Falle einer Übereinstimmung der Adressen weiterleitet. Alternativ kann der Verteilerknoten anhand der VLAN-Identifikation des zusätzlichen Datenfelds VLAN TAG, oder einer Identifikation innerhalb eines Fragmentier-TAGs FRAG TAG, die für den ersten Telegrammaufbau TEL1 in Fig. 3 nicht dargestellt sind, entscheiden, ob der Verteilerknoten das Telegramm weiterleitet.

Für den Fall, dass sich der Ethernet-Controller des ersten Teilnehmers TN A im ersten Netzwerksegment N1, für den das erste Telegramm B bestimmt ist, um einen Standard-Ethernet-Controller handelt, bei dem das erste Telegramm zur Verarbeitung eine erforderliche Mindestlänge von 64 Bytes umfassen muss, kann das erste Telegramm B mit der ersten Prioritätsstufe 200 auch den in Fig. 3 gezeigten zweiten Telegrammaufbau TEL2 aufweisen. Im Folgenden werden zur Vereinfachung der Beschreibung der einzelnen Telegrammaufbauten in den Figuren die Unterschiede in den einzelnen Telegrammaufbauten erläutert. Gleiche Abschnitte in den einzelnen Telegrammaufbauten werden dagegen nicht erneut beschrieben.

Im Unterschied zum ersten Telegrammaufbau TEL1 sieht der zweite Telegrammaufbau TEL2 für das erste Telegramm B für das dritte Datenfeld 320 ein Fragmentier-TAG FRAG TAG vor. Das Fragmentier-TAG weist den ganzzahligen Wert zwei der ersten Prioritätsstufe 200 sowie eine fortlaufende Zahl FRM auf, die ganzzahlig ausgebildet sein kann und an jeder ersten Ein-/Ausgabe-Schnittstelle P0 des ersten und des zweiten Verteilerknotens SW1, SW2, auf der das erste Telegramm B weitergeleitet wird, neu erzeugt werden kann. Die fortlaufende Zahl FRM ist somit link-lokal, das bedeutet die fortlaufende Zahl FRM ist nur jeweils auf einer Datenübertragungsstrecke zwischen einem Teilnehmer und einem Verteilerknoten bzw. zwischen dem ersten und dem zweiten Verteilerknoten SW1, SW2 eindeutig. Vorliegend weist die fortlaufende Zahl FRM für den zweiten Telegrammaufbau TEL2 des ersten Telegramms B den Wert eins auf. Bei einem ersten Fragment kann sich die fortlaufende Zahl FRM am Anfang oder am Ende des ersten Fragments befinden. Für ein zweites Fragment bzw. weitere Unterfragmente ist es erforderlich, dass sich die fortlaufende Zahl am Anfang des zweiten Fragments bzw. der weiteren Unterfragmente befindet.

Die fortlaufende Zahl erlaubt in der Kombination mit der dem jeweiligen Telegramm zugeordneten Prioritätsstufe eine eindeutige Identifikation des entsprechenden Telegramms bzw. seiner Fragmente. Auch kann der empfangende Teilnehmer anhand der fortlaufenden Zahl FRM und einer Fragmentzahl FRG für das zweite Fragment bzw. weitere Unterfragmente erkennen, ob die Fragmente bzw. Unterfragmente vollständig übertragen worden sind.

Darüber hinaus kann das Fragmentier-TAG FRAG TAG auch ein in Fig. 3 nicht dargestelltes Typfeld ET aufweisen. Dem ersten Verteilerknoten SW1, der vor dem empfangenden ersten Teilnehmer TN A des ersten Telegramms B zwischengeschaltet ist, wird von dem zweiten Verteilerknoten SW2 eine mögliche Fragmentierung des ersten Telegramms B mithilfe des Fragmentier-TAGs FRAG TAG angezeigt. Denn beim Weiterleitungsvorgang des ersten Telegramms B von dem zweiten Verteilerknoten SW2, braucht der zweite Verteilerknoten SW2 das erste Telegramm B noch nicht vollständig empfangen zu haben, bevor er es ohne Wartezeit an den ersten Verteilerknoten SW1 weiterleitet. Der zweite Verteilerknoten SW2 weiß demnach beim Weitleitungsvorgang des ersten Telegramms B nicht, ob der zweite Verteilerknoten SW2 das höher priorisierte zweite Telegramm C von dem zweiten Teilnehmer TN B empfangen wird, und das Senden des ersten Telegramm B unterbrechen muss.

Eine erste Fragmentier-Information 340 am Ende des ersten Telegramms B zeigt dem ersten Verteilerknoten SW1 eine tatsächliche Fragmentierung des ersten Telegramms B an. Die erste Fragmentier-Information weist die Fragmentnummer FFN eines zweiten Fragments auf. Der zweite Verteilerknoten SW2 zeigt durch einen Wert Null der Fragmentnummer FFN vor dem Prüfsummenfeld CRC des ersten Telegramms B mit der ersten Prioritätsstufe 200 dem ersten Verteilerknoten SW1 an, dass der zweite Verteilerknoten SW2 das erste Telegramm B nicht fragmentiert hat.

Zu einem Zeitpunkt T2 in Fig. 2 empfängt der zweite Verteilerknoten SW2 auf der zweiten Ein-/Ausgabe-Schnittstelle P2 des zweiten Verteilerknotens SW2 das zweite Telegramm C von dem zweiten Teilnehmer TN B des zweiten Netzwerksegments N2. Das zweite Telegramm C weist die zweite Prioritätsstufe 210 auf, welche den ganzzahligen Wert drei umfasst. Damit ist das zweite Telegramm C höherpriorisiert als das erste Telegramm B ausgebildet. Folglich unterbricht der zweite Verteilerknoten SW2 das Senden des ersten Telegramms B auf der ersten Ein-/Ausgabe-Schnittstelle P0 und fragmentiert das erste Telegramm B. Der Abbruch des Sendens des ersten Telegramms B muss nicht zwingendermaßen instantan erfolgen, der zweite Verteilerknoten SW2 wartet vielmehr so lange, bis 59 Bytes des ersten Telegramms B übertragen worden sind, bis der zweite Verteilerknoten SW2 den Sendevorgang des ersten Telegramms B unterbricht. Der zweite Verteilerknoten SW2 sendet anschließend das zweite Telegramm C mit der zweiten Prioritätsstufe 210 auf der ersten Ein-/Ausgabe-Schnittstelle P0. Ein Zeitpunkt T2' in Fig. 2 kennzeichnet den Empfang des zweiten Telegramms C von dem ersten Verteilerknoten SW1 und ein Zeitpunkt T2" kann dem Zeitpunkt entsprechen zu dem der erste Teilnehmer TN A das zweite Telegramm C empfängt.

Fig. 3 zeigt einen dritten Telegrammaufbau TEL3 und einen vierten Telegrammaufbau TEL4 für das zweite Telegramm C mit der zweiten Prioritätsstufe 210 sowie einen fünften Telegrammaufbau TEL5 und einen sechsten Telegrammaufbau TEL6 eines ersten Fragments B-1 des ersten Telegramms B. Der zweite Verteilerknoten SW2 schließt das unterbrochene erste Telegramm B, welches das erste Fragment B-1 des ersten Telegramms B bildet, definiert ab, indem der zweite Verteilerknoten SW2 die erste Fragmentier-Information 340 am Ende des ersten Fragments B-1 sendet. Die erste Fragmentier-Information 340 ist in dem fünften Telegrammaufbau TEL5 zwischen dem Nutzdatenabschnitt TEL B-1 des ersten Fragments B-1 und dem Prüfsummenfeld CRC ersichtlich. Die erste Fragmentier-Information 340 weist die Fragmentnummer FFN des zweiten Fragments B-2 des ersten Telegramms B auf, welche den Wert 1 umfasst. Darüber hinaus umfasst die erste Fragmentier-Information 340 für den fünften Telegrammaufbau TEL5 des ersten Fragments B-1 des ersten Telegramms B den Wert der ersten Prioritätsstufe 200, sowie die fortlaufende Zahl FRM mit dem Wert eins. Der zweite Verteilerknoten SW2 kennzeichnet zudem das Ende des ersten Fragments B-1 des ersten Telegramms B mithilfe eines ersten Fragmentier-Symbols E-FRG, das eines der Symbole sein kann, welches über die oben beschriebene Symbolmenge von 256 Symbolen hinausgeht, und nur von einem Teilnehmer im Automatisierungskommunikationsnetzwerk 100 interpretiert werden kann, der einen Nicht-Standard-Ethernet-Controller umfasst.

Im Falle eines verwendeten Standard-Ethernet-Controllers kann der Telegrammaufbau des ersten Fragments B-1 des ersten Telegramms B dem sechsten Telegrammaufbau TEL6 in Fig. 3 entsprechen. Das erste Fragment B-1 weist in dem dritten Datenfeld 320 das Fragmentier-TAG FRAG TAG auf. Das Fragmentier-TAG FRAG TAG weist die fortlaufende Zahl FRM des ersten Fragments B-1 mit dem Wert eins auf, sowie die erste Prioritätsstufe 200 des ersten Fragments B-1 mit dem Wert zwei. Die erste Fragmentier-Information 340 zwischen dem Nutzdatenabschnitt TEL B-1 des ersten Fragments B-1 und dem Prüfsummenfeld CRC des ersten Fragments B-1 weist die Fragmentnummer FFN des zweiten Fragments B-2 auf, wobei die Fragmentnummer FFN des zweiten Fragments B-2 den Wert eins umfasst.

Die Prüfsumme im Prüfsummenfeld CRC des fünften und des sechsten Telegrammaufbaus TEL5, TEL6 umfasst jeweils die über das zweite Datenfeld 310, das dritte Datenfeld 320 sowie des Nutzdatenabschnitts TEL B-1 des ersten Fragments B-1 und der ersten Fragmentier-Information 340 berechnete Prüfsumme. Der erste Verteilerknoten SW1 kann die genannten Prüfsummen der fünften und sechsten Telegrammaufbauten TEL5, TEL6 beim Empfang des ersten Fragments B-1 dann eigenständig berechnen und mit den mit dem ersten Fragment B-1 von dem zweiten Verteilerknoten SW2 mitgesendeten Prüfsummen der fünften und sechsten Telegrammaufbauten TEL5, TEL6 vergleichen. Im Falle der Nichtübereinstimmung der beiden Prüfsummen kann der erste Verteilerknoten SW1 das erste Fragment B-1 verwerfen.

In einem nicht dargestellten Automatisierungskommunikationsnetzwerk gemäß dem Stand der Technik, in dem der zweite Verteilerknoten SW2 nicht in der Lage ist, das Senden des ersten Telegramms B mit der ersten Prioritätsstufe 200 auf der ersten Ein-/Ausgabe-Schnittstelle P0 des zweiten Verteilerknotens SW2 zu unterbrechen, wenn der zweite Verteilerknoten SW2 ein zweites Telegramm C mit der wertmäßig höheren zweiten Prioritätsstufe 210 auf der zweiten Ein-/Ausgabe-Schnittstelle P2 empfangen hat, kann das zweite Telegramm C mit der höherpriorisierten zweiten Prioritätsstufe 210 erst dann weitergeleitet werden, wenn der zweite Verteilerknoten SW2 das erste Telegramm B mit der ersten Prioritätsstufe 200 vollständig übertragen hat. Dies stellt eine erhebliche Einschränkung des Telegrammverkehrs bzw. der Datenübertragung in einem derart ausgebildeten Automatisierungskommunikationsnetzwerk dar, bei der nicht gewährleistet werden kann, dass das erste und zweite Telegramm B, C rechtzeitig bei dem Teilnehmer eintreffen, für den das erste und das zweite Telegramm B, C bestimmt sind.

Bei dem erfindungsgemäßen Automatisierungskommunikationsnetzwerk 100 weist das zweite Telegramm C beim Weiterleitungsvorgang vom zweiten Verteilerknoten SW2 einen dritten Telegrammaufbau TEL3 bzw. einen vierten Telegrammaufbau TEL4 gemäß Fig. 3 auf. Der dritte Telegrammaufbau TEL3 des zweiten Telegramms C ist analog zum ersten Telegrammaufbau TEL1 des ersten Telegramms B ausgebildet, wobei das zweite Telegramm C in dem dritten Datenfeld 320 die zweite Prioritätsstufe 210 mit dem Wert drei aufweist, wohingegen das erste Telegramm B in dem dritten Datenfeld 320 die erste Prioritätsstufe 200 mit dem Wert zwei umfasst. Denn bei dem dritten Telegrammaufbau TEL3 handelt es sich wie bei dem ersten Telegrammaufbau TEL1 auch, jeweils um den Telegrammaufbau eines nicht fragmentierten ersten und zweiten Telegramms B, C, den ein Teilnehmer mit einem Nicht-Standard-Ethernet-Controller verarbeiten kann.

Der vierte Telegrammaufbau TEL4 des zweiten Telegramms C ist ferner analog zum zweiten Telegrammaufbau TEL2 des ersten Telegramms B ausgebildet, wobei das zweite Telegramm C in dem Fragmentier-TAG FRAG TAG die zweite Prioritätsstufe 210 mit dem Wert drei aufweist, wohingegen das erste Telegramm B in dem Fragmentier-TAG FRAG TAG die erste Prioritätsstufe 200 mit dem Wert zwei umfasst. Denn bei dem vierten Telegrammaufbau TEL4 handelt es sich wie bei dem zweiten Telegrammaufbau TEL2 auch, jeweils um den Telegrammaufbau eines nicht fragmentierten ersten und zweiten Telegramms B, C, den ein Teilnehmer mit einem Nicht-Standard-Ethernet-Controller verarbeiten kann.

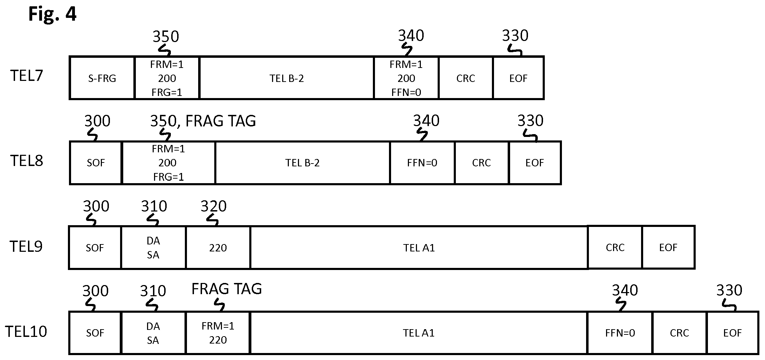

Zu einem Zeitpunkt T5 in Fig. 2 hat der zweite Verteilerknoten SW2 das zweite Telegramm C vollständig weitergeleitet. Anschließend leitet der zweite Verteilerknoten SW2 den verbleibenden Teil des ersten Telegramms B, der das zweite Fragment B-2 des ersten Telegramms B bildet, an den ersten Verteilerknoten SW1 weiter. Alternativ ist denkbar, dass der zweite Verteilerknoten SW2 das zweite Fragment B-2 des ersten Telegramms B bei der Unterbrechung des ersten Telegramms B nicht unmittelbar anschließend an das erste Fragment B-1 weiterleitet. Das zweite Fragment B-2 des ersten Telegramms B kann darüber hinaus weitere Unterfragmente umfassen. Der erste Verteilerknoten SW1 empfängt das zweite Fragment B-2 des ersten Telegramms B zu einem Zeitpunkt T5' auf der zweiten Ein-/Ausgabe-Schnittstelle P2 des ersten Verteilerknotens SW1. Ein Zeitpunkt T5" kann der Zeitpunkt sein, zu dem der erste Teilnehmer TN A das zweite Fragment B-2 empfängt. Das zweite Fragment B-2 des ersten Telegramms B mit der ersten Prioritätsstufe 200 kann beim Senden des zweiten Fragments B-2 auf der ersten Ein-/Ausgabe-Schnittstelle P0 von dem zweiten Verteilerknoten SW2 einen siebten Telegrammaufbau TEL7 bzw. achten Telegrammaufbau TEL8, wie in Fig. 4 dargestellt, aufweisen.

Das zweite Fragment B-2 des ersten Telegramms B weist den siebten Telegrammaufbau TEL7 auf, wenn der empfangende Teilnehmer des ersten Telegramms B einen Nicht-Standard-Ethernet-Controller umfasst. Denn der siebte Telegrammaufbau TEL7 des zweiten Fragments B-2 umfasst ein zweites Fragmentier-Symbol S-FRG am Anfang des zweiten Fragments B-2, das neben dem oben genannten ersten Fragmentier-Symbol E-FRG, nur von einem Nicht-Standard-Ethernet-Controller verarbeitet werden kann.

Nach dem zweiten Fragmentier-Symbol S-FRG folgt eine zweite Fragmentier-Information 350 des zweiten Fragments B-2 des ersten Telegramms B. Die zweite Fragmentier-Information 350 umfasst eine Fragmentzahl FRG, wobei die Fragmentzahl FRG den Wert der Fragmentnummer FFN des ersten Fragments B-1 des ersten Telegramms B aufweist. Das heißt die Fragmentzahl FRG des zweiten Fragments B-2 mit dem siebten Telegrammaufbau TEL7 kann somit den Wert eins aufweisen.

Weiterhin kann die zweite Fragmentier-Information 350 für den siebten Telegrammaufbau TEL7 die erste Prioritätsstufe 200 mit dem Wert zwei für das zweite Fragment B-2 des ersten Telegramms B, sowie die fortlaufende Zahl FRM mit dem Wert eins umfassen. An die zweite Fragmentier-Information 350 schließt sich im siebten Telegrammaufbau TEL7 der Nutzdatenabschnitt TEL B-2 des zweiten Fragments B-2 an. Zwischen dem Nutzdatenabschnitt TEL B-2 und dem Prüfsummenfeld CRC ist im siebten Telegrammaufbau TEL7 für das zweite Fragment B-2 des ersten Telegramms B die erste Fragmentier-Information 340 angeordnet. Die erste Fragmentier-Information 340 kann dem ersten Verteilerknoten SW1 die fortlaufende Zahl FRM des zweiten Fragments B-2 mit dem Wert eins anzeigen, sowie den Wert zwei der ersten Prioritätsstufe 200. Dass dem zweiten Fragment B-2 kein weiteres Fragment des ersten Telegramms B folgt, kann der zweite Verteilerknoten SW2 durch die Fragmentnummer FFN, die in dem Fall von dem zweiten Verteilerknoten SW2 auf den Wert Null gesetzt wird, kennzeichnen. Der siebte Telegrammaufbau TEL7 für das zweite Fragment B-2 schließt mit dem vierten Datenfeld 330, umfassend das Ende-Symbol EOF, ab. Ein zweites Fragment muss demnach nicht zwingend mit dem ersten Fragmentier-Symbol E-FRG abschließen, sondern es ist ausreichend, wenn das zweite Fragment das Ende-Symbol EOF aufweist. Die Fragmentnummer FFN muss nicht zwingend fortlaufend bis zum letzten Fragment hochgezählt werden. Ist beispielsweise das entsprechende Telegramm in einhundert Fragmente zerlegt, so muss die Fragmentnummer FFN für die einzelnen Fragmente nicht von eins bis einhundert hochgezählt werden, sondern kann, wenn der empfangende Teilnehmer die Systematik in der Durchnummerierung der Fragmente kennt, auch derart erfolgen, dass der entsprechende Verteilerknoten die Fragmente von eins bis sieben durchnummeriert und für weitere Fragmente im Anschluss daran wieder beim Wert eins beginnt. Der Vorteil an der Ausgestaltung der Durchnummerierung der Fragmente von eins bis sieben ist, dass dadurch Telegramm-Bytes eingespart werden können.

Das zweite Fragment B-2 des ersten Telegramms B weist den achten Telegrammaufbau TEL8 auf, wenn der empfangende Teilnehmer des ersten Telegramms B einen Standard-Ethernet-Controller umfasst, der sowohl eine Mindestlänge des zweiten Fragments B-2 (und des ersten Fragments B-1) zur Verarbeitung des zweiten Fragments B-2 (und des ersten Fragments B-1) erfordert, als auch nicht in der Lage ist, das zweite Fragmentier-Symbol S-FRG (wie auch das erste Fragmentier-Symbol E-FRG) zu interpretieren. Der achte Telegrammaufbau TEL8 umfasst das erste Datenfeld 300 mit dem oben erläuterten SOF. Nach dem ersten Datenfeld 300 folgt im achten Telegrammaufbau TEL8 das Fragmentier-TAG FRAG TAG, das den Wert zwei der ersten Prioritätsstufe 200 des zweiten Fragments B-2 sowie die zweite Fragmentier-Information 350 mit der Fragmentzahl FRG mit dem Wert eins umfassen kann. Weiterhin kann das Fragmentier-TAG FRAG TAG bzw. die zweite Fragmentier-Information 350 die fortlaufende Zahl FRM mit dem Wert eins aufweisen. Ein Nutzdatenabschnitt TEL B-2 des zweiten Fragments B-2 folgt im Anschluss an das Fragmentier-TAG im achten Telegrammaufbau TEL8. Zwischen dem Nutzdatenabschnitt TEL B-2 des zweiten Fragments B-2 und dem Prüfsummenfeld CRC ist die erste Fragmentier-Information 340 angeordnet, die die Fragmentnummer FFN aufweisen kann. Analog zum siebten Telegrammaufbau TEL7, kann der zweite Verteilerknoten SW2 mit dem Wert Null der Fragmentnummer FFN anzeigen, dass dem zweiten Fragment B-2 des ersten Telegramms B keine weiteren Fragmente folgen. Auch der achte Telegrammaufbau TEL8 endet analog zum siebten Telegrammaufbau TEL7 mit dem vierten Datenfeld 330 mit dem Ende-Symbol EOF. Der achte Telegrammaufbau TEL8 muss ebenfalls nicht mit dem ersten Fragmentier-Symbol E-FRG abschließen, da der achte Telegrammaufbau TEL8 das Fragmentier-TAG FRAG TAG aufweist und demnach kein erstes Fragmentier-Symbol E-FRG erfordert.

Das oben genannte Fragmentier-TAG FRAG TAG des zweiten Fragments B-2 kann eine in Fig. 4 im achten Telegrammaufbau TEL8 nicht dargestellte Fragment-Zieladresse FA aufweisen. Die Fragment-Zieladresse FA kann als Multicast-Adresse, zur Adressierung mehrerer Teilnehmer im Automatisierungskommunikationsnetzwerk 100, als Unicast-Adresse, zur Adressierung eines einzelnen Teilnehmers oder als Broadcast-Adresse, zur Adressierung aller Teilnehmer im Automatisierungskommunikationsnetzwerk 100 ausgebildet sein. Mithilfe der Fragment-Zieladresse ist es möglich, für das zweite Fragment B-2 des ersten Telegramms B, sowie auch für andere zweite Fragmente der anderen Telegramme, für den jeweiligen Telegrammaufbau Telegramm-Bytes einzusparen, da die Fragment-Zieladresse ferner die zweite Fragmentier-Information 350 mit der Fragmentzahl FRG, die den Wert der Fragmentnummer FFN des ersten Fragments B-1 des ersten Telegramms B aufweisen kann, umfassen kann. Diese Vorgehensweise erlaubt es, dass die ersten bzw. zweiten Verteilerknoten SW1, SW2 die Fragmente rasch weitersenden können, da für die Fragmente weniger Overhead entsteht.

Weiterhin kann die Fragment-Zieladresse FA auch in der Weise definiert werden, dass diese zusätzlich zum Fragmentier-TAG FRAG TAG und den oben genannten Merkmalen, die Absenderadresse SA und die Zieladresse DA des zweiten Fragments B-2 aufweist, gegebenenfalls kann die Fragment-Zieladresse FA auch ein zusätzliches Datenfeld VLAN TAG umfassen, wenn das Telegramm das zusätzliche Datenfeld VLAN TAG aufweist. Eine solche Definition der Fragment-Zieladresse FA erlaubt es in vorteilhafter Weise einen Verteilerknoten im Automatisierungskommunikationsnetzwerk 100 einzusetzen, der als Standard-Switch ausgebildet sein kann, und der folglich den kompletten Header des Telegramms bzw. Fragments bis zu dem Typfeld ET, welches das verwendete Protokoll der Nutzdaten des Telegramms angibt und im achten Telegrammaufbau TEL8 nicht gezeigt ist, benötigt.

Für den Fall, dass das zweite Fragment B-2 des ersten Telegramms B die Mindestlänge von 64 Bytes unterschreitet, das heißt mit der ersten Fragmentier-Information 340 und dem Prüfsummenfeld, die 5 Bytes des achten Telegrammaufbaus TEL8 umfassen, weniger als 59 Bytes aufweist, so umfasst der achte Telegrammaufbau TEL8 Füllbytes sowie ein zusätzliches Füllbyte-Datenfeld PAD-LEN, das vor der ersten Fragmentier-Information 340 im achten Telegrammaufbau TEL8 die Anzahl an Füllbytes anzeigt, die jedoch in Fig. 4 nicht dargestellt sind.

Das Einfügen von Füllbytes wird angezeigt, indem der Wert der Fragmentnummer FFN der ersten Fragmentier-Information 340 des zweiten Fragments B-2 auf einen Wert PAD gesetzt wird. Auch dies ist in Telegrammaufbau TEL8 in Fig. 4 nicht ersichtlich. PAD kann dabei ein bestimmter Wert der Fragmentnummer FFN sein. Alternativ ist denkbar, in jedem Fragment bzw. Unterfragment ein Bit in einem Datenfeld, das die erste Fragmentier-Information 340 am Ende des Fragments bzw. Unterfragments umfasst, zur Anzeige der Information PAD zu reservieren. Beispielsweise kann dieses Bit für alle Fragmente bzw. Unterfragmente, die sich nicht um das letzte Fragment bzw. das letzte Unterfragment handeln, einen Zustand Null annehmen und für das letzte Fragment bzw. das letzte Unterfragment, das die Mindestlänge unterschreitet einen Zustand eins annehmen. Insbesondere kann ein Teilnehmer, umfassend einen Standard-Ethernet-Controller, Telegramme bzw. Fragmente verarbeiten, die durch das Einfügen von Füllbytes auf die für den Ethernet-Standard erforderliche Mindestlänge von 64 Bytes gebracht werden.

Nachfolgend wird der zweite Telegrammverkehr am ersten Verteilerknoten SW1 beschrieben. Der erste Verteilerknoten SW1 empfängt zu einem Zeitpunkt T0 in Fig. 2 das dritte Telegramm A1 mit der dritten Prioritätsstufe 220, das von dem dritten Teilnehmer TN C im dritten Netzwerksegment N3 über die vierte Datenübertragungsstrecke D4 an den ersten Verteilerknoten SW1 gesendet worden ist, auf der dritten Ein-/Ausgabe-Schnittstelle P1 des ersten Verteilerknotens SW1. Der erste Verteilerknoten SW1 sendet das dritte Telegramm A1 auf der ersten Ein-/Ausgabe-Schnittstelle P0 des ersten Verteilerknotens SW1 an den ersten Teilnehmer TN A im ersten Netzwerksegment N1, wobei der erste Teilnehmer TN A das dritte Telegramm A1 zu einem Zeitpunkt T0' in Fig. 2 empfängt. Das dritte Telegramm A1 weist beim Senden von dem ersten Verteilerknoten SW1 den neunten Telegrammaufbau TEL9 bzw. den zehnten Telegrammaufbau TEL10 auf. Analog zur obigen Beschreibung weist das dritte Telegramm A1 den neunten Telegrammaufbau TEL9 auf, wenn der erste Teilnehmer TN A mit einem Nicht-Standard-Ethernet-Controller ausgebildet ist und den zehnten Telegrammaufbau TEL10, wenn der erste Teilnehmer TN A mit einem Standard-Ethernet-Controller ausgebildet ist.

Der neunte Telegrammaufbau TEL9 für das dritte Telegramm A1 in Fig. 4 ist analog zum ersten und dritten Telegrammaufbau TEL1, TEL3 für das erste und zweite Telegramm B, C aufgebaut, wobei der neunte Telegrammaufbau TEL9 für das dritte Datenfeld 320 den Wert eins der dritten Prioritätsstufe 220 vorsieht. Daran schließt sich der Nutzdatenabschnitt TEL A1 des dritten Telegramms A1 an, sowie das Prüfsummenfeld CRC und das vierte Datenfeld 330 mit dem Ende-Symbol EOF. Im Falle des neunten Telegrammaufbau TEL9 ist das dritte Telegramm A1 demnach nicht fragmentiert worden.

Der erste und der zweite Verteilerknoten SW1, SW2 umfasst jeweils eine Fragmentierungstabelle, in der der erste und der zweite Verteilerknoten SW1, SW2 den noch nicht gesendeten Teil eines fragmentierten Telegramms, der das zweite Fragment des jeweiligen Telegramms bildet, das in weitere Unterfragmente zerlegt sein kann, zusammen mit der zweiten Fragmentier-Information 350 des zweiten Fragments in die Fragmentierungstabelle eintragen kann. Außerdem vermerkt der jeweilige Verteilerknoten SW1, SW2 die Ein-/Ausgabe-Schnittstelle, auf der der Verteilerknoten das Telegramm bzw. das Fragment empfangen hat, sowie die weitere Ein-/Ausgabe-Schnittstelle des Verteilerknotens SW1, SW2, auf die der Verteilerknoten SW1, SW2 das Telegramm bzw. Fragment weiterleitet. Die Fragmentierungstabelle kann weiterhin die fortlaufende Zahl FRM (sowohl für die Datenübertragungsstrecke beim Empfangsvorgang des Telegramms als auch für die Datenübertragungsstrecke beim Sendevorgang des Telegramms) sowie die Prioritätsstufe des entsprechenden Telegramms bzw. Fragments umfassen. Da das dritte Telegramm A1 mit dem neunten Telegrammaufbau TEL9 von dem ersten Verteilerknoten SW1 beim Senden nicht unterbrochen worden ist, weißt die Fragmentierungstabelle des ersten Verteilerknotens SW1 bisher noch keinen Inhalt auf. Im Folgenden wird der Inhalt der Fragmentierungstabelle nur in Bezug auf den ersten Verteilerknoten SW1 erläutert, gleichermaßen kann der zweite Verteilerknoten SW2 eine Fragmentierungstabelle aufweisen.

Der zehnte Telegrammaufbau TEL10 in Fig. 4 für das dritte Telegramm A1 ist analog zum zweiten und vierten Telegrammaufbau TEL2, TEL4 in Fig. 3 für das erste und zweite Telegramm B, C ausgebildet, wobei das Fragmentier-TAG FRAG TAG des zehnten Telegrammaufbaus TEL10 den Wert eins der dritten Prioritätsstufe 220 des dritten Telegramms A1 aufweist. Auch der zehnte Telegrammaufbau TEL10 kann für die fortlaufende Zahl FRM für die Übertragung des dritten Telegramms A1 zwischen dem ersten Verteilerknoten SW1 und dem ersten Teilnehmer TN A im ersten Netzwerksegment N1 den Wert eins vorsehen. Die erste Fragmentier-Information 340 kann mit dem Wert der Fragmentnummer FFN gleich Null anzeigen, dass der erste Verteilerknoten SW1 das dritte Telegramm A1 nicht fragmentiert hat. Eine erste Fragmentierungstabelle TAB1 des ersten Verteilerknotens SW1 umfasst beispielsweise folgenden Inhalt:

**TAB1**

| | A1 |
|---|---|
| Ein-/Ausgabe-Schnittstelle (Empfang) | P1 |
| FRM (Empfang) | y |
| Ein-/Ausgabe-Schnittstelle (Senden) | P0 |
| FRM (Senden) | 1 |
| Prioritätsstufe | 220 |
| FFN | 0 |
| Telegramm/Fragment gespeichert | FALSE |

Es ist jedoch auch möglich andere Informationen als in der ersten Fragmentierungstabelle TAB1 in dem ersten Verteilerknoten SW1 zu speichern. Auch kann eine Speicherung der Informationen zu einem anderen Zeitpunkt erfolgen.

Eine Speicherung des dritten Telegramms A1 wird in der Fragmentierungstabelle beispielsweise mithilfe einer booleschen Variable mit einem ersten und zweiten Zustand FALSE, TRUE angezeigt. Vorliegend hat der erste Verteilerknoten SW1 das dritte Telegramm A1 in der Fragmentierungstabelle nicht zwischengespeichert, was durch den ersten Zustand FALSE der booleschen Variable angezeigt wird, da der erste Verteilerknoten SW1 das dritte Telegramm A1 nicht fragmentiert hat. Die fortlaufende Zahl FRM kann für die vierte Datenübertragungsstrecke D4, auf der der erste Verteilerknoten SW1 das dritte Telegramm A1 empfangen hat (FRM (Empfang)), zunächst einen Default-Wert y aufweisen. Diesen Wert kann der erste Verteilerknoten SW1 verändern. Für die erste Datenübertragungsstrecke D1, auf der der erste Verteilerknoten SW1 das dritte Telegramm A1 sendet, setzt der erste Verteilerknoten SW1 die fortlaufende Zahl FRM (FRM (Senden)) des dritten Telegramms A1 beispielsweise auf den Wert eins. Dies hätte jedoch auch in anderer Weise erfolgen können.

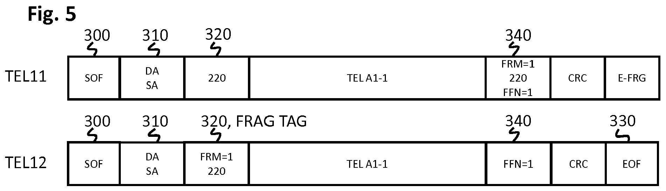

Zum Zeitpunkt T1' in Fig. 2 empfängt der erste Verteilerknoten SW1 auf der zweiten Ein-/Ausgabe-Schnittstelle P2 des ersten Verteilerknotens SW1 das erste Fragment B-1 des ersten Telegramms B. Da das erste Fragment B-1 mit der ersten Prioritätsstufe 200 mit dem Wert zwei, höherpriorisiert als das aktuell im Sendevorgang des ersten Verteilerknotens SW1 befindliche dritte Telegramm A1 mit der dritten Prioritätsstufe 220 mit dem Wert eins ausgebildet ist, unterbricht der erste Verteilerknoten SW1 das Senden des dritten Telegramms A1, das ein erstes Fragment A1-1 des dritten Telegramms A1 bildet, und schließt das dritte Telegramm A1 definiert ab, was in einem elften Telegrammaufbau TEL11 und zwölften Telegrammaufbau TEL12 für das erste Fragment A1-1 des dritten Telegramms A1 in Fig. 5 dargestellt ist. Der elfte Telegrammaufbau TEL11 ist analog zum fünften Telegrammaufbau TEL5 in Fig. 3 aufgebaut, somit setzt der elfte Telegrammaufbau TEL11 die gleichen Anforderungen an den ersten Teilnehmer TN A voraus, wie oben im Zusammenhang für den fünften Telegrammaufbau TEL5 beschrieben wurde.

Um das erste Fragment A1-1 des dritten Telegramms A1 definiert abzuschließen, sendet der erste Verteilerknoten SW1 die fortlaufende Zahl FRM mit dem Wert eins, die aktuell mit der dritten Prioritätsstufe 220 korrespondiert, trägt den Wert eins der dritten Prioritätsstufe 220 ein und sendet die erste Fragmentier-Information 340, die die Fragmentnummer FFN mit dem Wert eins eines zweiten Fragments A1-2, das von dem ersten Verteilerknoten SW1 noch nicht gesendet worden ist, umfassen kann. Der erste Verteilerknoten SW1 kann, wie oben erläutert, für das zweite Fragment A1-2 des dritten Telegramms A1 die zweite Fragmentier-Information 350 mit der Fragmentzahl FRG erzeugen, die den Wert der Fragmentnummer FFN des zweiten Fragments A1-2 aufweisen kann und speichert die zweite Fragmentier-Information 350 zum Beispiel zusammen mit dem zweiten Fragment A1-2 des dritten Telegramms A1 in der Fragmentierungstabelle zwischen.

Eine zweite Fragmentierungstabelle TAB2 des ersten Verteilerknotens SW1 umfasst beispielsweise:

**TAB2**

| | A1 |
|---|---|
| Ein-/Ausgabe-Schnittstelle (Empfang) | P1 |
| FRM (Empfang) | 0 |
| Ein-/Ausgabe-Schnittstelle (Senden) | P0 |
| FRM (Senden) | 1 |
| Prioritätsstufe | 220 |
| FFN | 1 |
| Telegramm/Fragment gespeichert | TRUE |

Die zweite Fragmentierungstabelle kann für die Zwischenspeicherung des zweiten Fragments A1-2 des dritten Telegramms A1 die boolesche Variable aufweisen, wobei die boolesche Variable mit dem zweiten Zustand TRUE die Zwischenspeicherung des zweiten Fragments A1-2 indiziert. Der erste Verteilerknoten SW1 kann den Default-Wert y der fortlaufenden Zahl FRM (Empfang) in der ersten Fragmentierungstabelle TAB1 für den Empfang des dritten Telegramms A1 in der zweiten Fragmentierungstabelle TAB2 auf den Wert Null setzen, da das dritte Telegramm A1 beim Empfang von dem ersten Verteilerknoten SW1 noch keine erste Fragmentier-Information 340 aufweist.

Der zwölfte Telegrammaufbau TEL12 in Fig. 5 ist analog zum sechsten Telegrammaufbau TEL6 in Fig. 3 ausgebildet. Demnach wird an der Stelle ebenfalls auf eine Wiederholung der oben beschriebenen Merkmale für den empfangenden Teilnehmer verzichtet, gleichwohl sie für den zwölften Telegrammaufbau TEL12 in gleicher Weise gilt. Für den zwölften Telegrammaufbau ist für das dritte Datenfeld 320 das Fragmentier-TAG FRAG TAG vorgesehen. Überdies weist das dritte Datenfeld 320 die fortlaufende Zahl FRM mit dem Wert eins sowie die dritte Prioritätsstufe 220 mit dem Wert eins auf. Nach einem Nutzdatenabschnitt TEL A1-1 folgt die erste Fragmentier-Information 340, die den Wert eins der Fragmentzahl FFN des zweiten Fragments A1-2 des dritten Telegramms A1 umfassen kann. Eine dritte Fragmentierungstabelle TAB3 weist zum Beispiel die nachfolgenden Inhalte auf:

**TAB3**

| | A1 |
|---|---|
| Ein-/Ausgabe-Schnittstelle (Empfang) | P1 |
| FRM (Empfang) | y |
| Ein-/Ausgabe-Schnittstelle (Senden) | P0 |
| FRM (Senden) | 1 |
| Prioritätsstufe | 220 |
| FFN | 1 |
| Telegramm /Fragment gespeichert | TRUE |

Im Vergleich zur ersten Fragmentierungstabelle TAB1 zeigt die boolesche Variable mit dem zweiten Zustand TRUE die Zwischenspeicherung des zweiten Fragments A1-2 des dritten Telegramms A1 an. Weiterhin kann der erste Verteilerknoten SW1 in der dritten Fragmentierungstabelle TAB3 den Wert der Fragmentnummer FFN für das zweite Fragment A1-2 auf eins gesetzt haben.

Der erste Verteilerknoten SW1 weiß jedoch zum Zeitpunkt T1', also beim Empfang des ersten Fragments B-1 des ersten Telegramms B, das in Fig. 3 mit dem fünften Telegrammaufbau TEL5 dargestellt ist, noch nicht, dass das erste Telegramm B von dem zweiten Verteilerknoten SW2 fragmentiert worden ist, daher trägt der erste Verteilerknoten SW1 zunächst in eine vierte Fragmentierungstabelle TAB4 den Wert Null der Fragmentnummer FFN für das zweite Fragment B-2 des ersten Telegramms B ein, sowie den ersten Zustand FALSE für die boolesche Variable, mit der angezeigt wird, dass keine Zwischenspeicherung erfolgt:

**TAB4**

| | A1 | B |
|---|---|---|
| Ein-/Ausgabe-Schnittstelle (Empfang) | P1 | P2 |
| FRM (Empfang) | 0 | 1 |
| Ein-/Ausgabe-Schnittstelle (Senden) | P0 | P0 |
| FRM (Senden) | 1 | 3 |
| Prioritätsstufe | 220 | 200 |
| FFN | 1 | 0 |
| Telegramm /Fragment gespeichert | TRUE | FALSE |

Darüber hinaus kann der erste Verteilerknoten SW1 die fortlaufende Zahl FRM für den Empfang des dritten Telegramms A1 auf den Wert Null setzen, analog zur zweiten Fragmentierungstabelle TAB2, da der neunte Telegrammaufbau TEL9 in Fig. 4, der den unfragmentierten Aufbau des dritten Telegramms A1 zeigt, keine fortlaufende Zahl FRM umfasst. Darüber hinaus kann der erste Verteilerknoten SW1 die erste und die dritte Prioritätsstufe 220, 200 in die vierte Fragmentierungstabelle TAB4 eintragen.

Zu einem Zeitpunkt T3 hat der erste Verteilerknoten SW1 das Ende des ersten Fragments B-1 des ersten Telegramms B empfangen. Demnach weiß der erste Verteilerknoten SW1 aus der ersten Fragmentier-Information 340 des ersten Fragments B-1, dass der zweite Verteilerknoten SW2 das erste Telegramm B mit der ersten Prioritätsstufe 200 fragmentiert hat. Der erste Verteilerknoten SW1 kann ferner davon ausgehen, dass der erste Verteilerknoten SW1 ein höherpriorisiertes Telegramm als das erste Telegramm B empfangen wird, da das erste Fragment B-1 des ersten Telegramms B ein nicht letztes Fragment des ersten Telegramms B ist, was an der ersten Fragmentier-Information 340, umfassend die Fragmentnummer FFN mit dem Wert eins, des ersten Fragments B-1 des ersten Telegramms B erkennbar ist.

Aus diesem Grund sendet der erste Verteilerknoten SW1 kein Telegramm bzw. Fragment, das der erste Verteilerknoten SW1 in einer der Fragmentierungstabellen zwischengespeichert hat, sondern wartet für eine vorgegebene Zeitdauer, die auf einen Default-Wert gesetzt sowie vergrößerbar bzw. verkleinerbar ist, auf das zweite Telegramm C mit der zweiten Prioritätsstufe 210, die den Wert drei umfasst und damit höherpriorisiert als die erste Prioritätsstufe 200 mit dem Wert zwei des ersten Fragments B-1 des ersten Telegramms B ausgebildet ist. Die oben genannte vorgegebene Zeitdauer ermöglicht, dass der erste Verteilerknoten SW1 (wie auch der zweite Verteilerknoten SW2, der in ähnlicher Weise ausgelegt sein kann), nur für die vorgegebene Zeitdauer wartet, um ein höherpriorisiertes Telegramm zu empfangen. Damit bildet die vorgegebene Zeitdauer eine Art Überwachungszeit, mit der eine lange Wartezeit, in der keine Telegrammübertragung erfolgt, vermieden werden kann. Nach dem Ablauf der vorgegebenen Zeitdauer sendet der erste Verteilerknoten SW1 das zweite Fragment A1-2 des dritten Telegramms A1, wenn der erste Verteilerknoten SW1 auf der zweiten Ein-/Ausgabe-Schnittstelle P2 kein höherpriorisiertes Telegramm empfangen hat.

Der erste Verteilerknoten SW1 sendet das erste Fragment B-1 des ersten Telegramms B auf der ersten Ein-/Ausgabe-Schnittstelle P0 des ersten Verteilerknotens SW1 über die erste Datenübertragungsstrecke D1 an den ersten Teilnehmer TN A im ersten Netzwerksegment N1, wobei der erste Teilnehmer TN A das erste Fragment B-1 des ersten Telegramms B zu einem Zeitpunkt T1" empfängt. Der Sendevorgang des ersten Fragments B-1 muss jedoch nicht erst zwingend nach dem vollständigen Empfang des ersten Fragments B-1 von dem ersten Verteilerknoten SW1 erfolgen. In der Regel leitet der erste Verteilerknoten SW1 (sowie der zweite Verteilerknoten SW2) Telegramme bzw. Fragmente weiter, bevor der erste Verteilerknoten SW1 (bzw. der zweite Verteilerknoten SW2) die Telegramme bzw. Fragmente vollständig empfangen hat. Das erste Fragment B-1 des ersten Telegramms B wird beim Sendevorgang durch den ersten Verteilerknoten SW1 und dem Empfangsvorgang durch den ersten Teilnehmer TN A nachfolgend als erstes Fragment B-1' des ersten Telegramms B bezeichnet.

Hat der erste Verteilerknoten SW1 das erste Fragmentier-Symbol E-FRG am Ende des ersten Fragments B-1 des ersten Telegramms B empfangen, so kann der erste Verteilerknoten SW1 die fortlaufende Zahl FRM des ersten Fragments B-1' auf den zur ersten Prioritätsstufe 200 korrespondierenden Wert drei setzen.

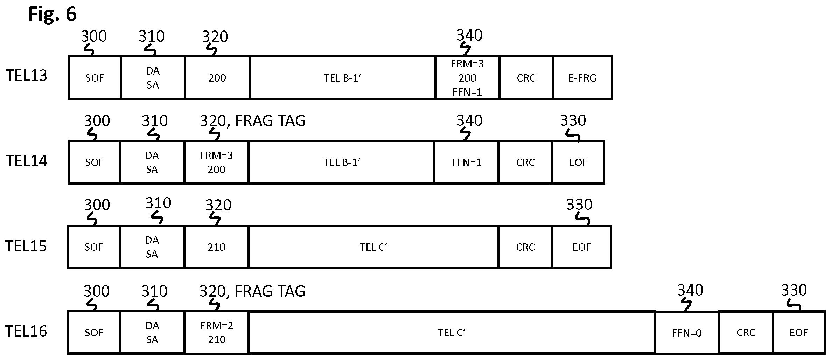

Das erste Fragment B-1' des ersten Telegramms B kann beim Weiterleitungsvorgang einen in Fig. 6 gezeigten dreizehnten Telegrammaufbau TEL13 bzw. einen vierzehnten Telegrammaufbau TEL14 aufweisen. Der dreizehnte Telegrammaufbau TEL13 kann analog zum fünften Telegrammaufbau TEL5 in Fig. 3 ausgebildet sein, wobei sich der dreizehnte Telegrammaufbau TEL13 in der fortlaufenden Zahl FRM des ersten Fragments B-1' des ersten Telegramms B unterscheidet. In einer fünften Fragmentierungstabelle TAB5 vermerkt der erste Verteilerknoten SW1 die erste Fragmentier-Information 340 mit der Fragmentnummer FFN des zweiten Fragments B-2 des ersten Telegramms B:

**TAB5**

| | A1 | B |
|---|---|---|
| Ein-/Ausgabe-Schnittstelle (Empfang) | P1 | P2 |
| FRM (Empfang) | 0 | 1 |
| Ein-/Ausgabe-Schnittstelle (Senden) | P0 | P0 |
| FRM (Senden) | 1 | 3 |
| Prioritätsstufe | 220 | 200 |
| FFN | 1 | 1 |
| Telegramm /Fragment gespeichert | TRUE | FALSE |

Der vierzehnte Telegrammaufbau TEL14 in Fig. 6 kann mit Ausnahme des Werts der fortlaufenden Nummer FRM des ersten Fragments B-1' des ersten Telegramms B analog zum sechsten Telegrammaufbau TEL6 in Fig. 3 ausgebildet sein. Daher wird an der Stelle auf eine Beschreibung der einzelnen Merkmale verzichtet. Die mit dem vierzehnten Telegrammaufbau TEL14 korrespondierende Fragmentierungstabelle kann identisch zur fünften Fragmentierungstabelle TAB5 ausgebildet sein, und gleiche Inhalte aufweisen.

Der erste Verteilerknoten SW1 sendet das zweite Telegramm C mit der zweiten Prioritätsstufe 210 auf der ersten Ein-/Ausgabe-Schnittstelle P0 an den ersten Teilnehmer TN A, und kann die fortlaufende Zahl FRM für das zweite Telegramm C auf den Wert zwei setzen, der bisher noch nicht für andere Telegramme bzw. Fragmente verwendet worden ist. Aus diesem Grund wird das zweite Telegramm C nachfolgend als zweites Telegramm C' bezeichnet, das von dem ersten Verteilerknoten SW1 weitergeleitet worden ist. Das zweite Telegramm C' kann beim Weiterleitungsvorgang einen fünfzehnten Telegrammaufbau TEL15 bzw. einen sechzehnten Telegrammaufbau TEL16 in Fig. 6 aufweisen. Der fünfzehnte Telegrammaufbau TEL15 kann analog zum dritten Telegrammaufbau TEL3 in Fig. 3 ausgebildet sein, während der sechzehnte Telegrammaufbau TEL16 analog zum vierten Telegrammaufbau TEL4 in Fig. 3 ausgebildet sein kann. Der sechzehnte Telegrammaufbau TEL16 kann sich zum vierten Telegrammaufbau TEL4 im Wert der fortlaufenden Nummer FRM unterscheiden, indem der erste Verteilerknoten SW1 die fortlaufende Nummer FRM beispielsweise auf den Wert zwei setzt. Eine sechste Fragmentierungstabelle TAB6 kann für den sechzehnten Telegrammaufbau TEL16 folgendermaßen aussehen:

**TAB6**

| | A1 | B | C(C') |
|---|---|---|---|
| Ein-/Ausgabe-Schnittstelle (Empfang) | P1 | P2 | P2 |
| FRM (Empfang) | 0 | 1 | 2 |
| Ein-/Ausgabe-Schnittstelle (Senden) | P0 | P0 | P0 |
| FRM (Senden) | 1 | 3 | 2 |
| Prioritätsstufe | 220 | 200 | 210 |
| FFN | 1 | 1 | 0 |
| Telegramm /Fragment gespeichert | TRUE | FALSE | FALSE |

Auf die Beschreibung einer weiteren Fragmentierungstabelle für den fünfzehnten Telegrammaufbau TEL15 wird an dieser Stelle verzichtet, da sie analog zur sechsten Fragmentierungstabelle TAB6 ausgebildet sein kann. Da sich das zweite Telegramm C' um ein nicht fragmentiertes Telegramm handelt, kann die Fragmentnummer FFN den Wert Null umfassen und es braucht demnach keine Zwischenspeicherung des zweiten Telegramms C' zu erfolgen, was durch den ersten Zustand FALSE der booleschen Variable angezeigt werden kann.

Zu einem Zeitpunkt T4 in Fig. 2 kann der erste Verteilerknoten SW1 ein viertes Telegramm A2, aufweisend die dritte Prioritätsstufe 220 mit dem ganzzahligen Wert eins, auf der dritten Ein-/Ausgabe-Schnittstelle P1 empfangen. Das vierte Telegramm A2 weist eine wertmäßig kleiner ausgebildete dritte Prioritätsstufe 220 als die zweite Prioritätsstufe 210 des zweiten Telegramms C' mit dem ganzzahligen Wert drei auf. Aus diesem Grund setzt der erste Verteilerknoten SW1 den Sendevorgang des zweiten Telegramms C' fort und speichert das vierte Telegramm A2 in einer siebten Fragmentierungstabelle TAB7 zwischen, angezeigt mithilfe des zweiten Zustands TRUE der booleschen Variable:

**TAB7**

| | A1 | B | C (C') | A2 |
|---|---|---|---|---|
| Ein-/Ausgabe-Schnittstelle (Empfang) | P1 | P2 | P2 | P1 |
| FRM (Empfang) | 0 | 1 | 2 | 0 |
| Ein-/Ausgabe-Schnittstelle (Senden) | P0 | P0 | P0 | P0 |
| FRM (Senden) | 1 | 3 | 2 | 0 |
| Prioritätsstufe | 220 | 200 | 210 | 220 |
| FFN | 1 | 1 | 0 | 0 |
| Telegramm /Fragment gespeichert | TRUE | FALSE | FALSE | TRUE |

Der erste Verteilerknoten SW1 setzt die fortlaufende Zahl FRM (Senden) für das vierte Telegramm A2 auf den Wert Null, da der erste Verteilerknoten SW1 das vierte Telegramm A2 noch nicht gesendet hat.

Zu einem Zeitpunkt T6 in Fig. 2 hat der erste Verteilerknoten SW1 das zweite Telegramm C vollständig empfangen. Anhand der siebten Fragmentierungstabelle TAB7 erkennt der erste Verteilerknoten SW1, dass das höchstpriore zwischengespeicherte Fragment das zweite Fragment A1-2 des dritten Telegramms A1 ist, wobei das erste Fragment A1-1 des dritten Telegramms A1 bereits vollständig von dem ersten Verteilerknoten SW1 weitergeleitet worden sein kann. Da in der siebten Fragmentierungs-Tabelle TAB7 jedoch noch die Informationen über das höher priorisierte erste Telegramm B gespeichert sind, sendet der erste Verteilerknoten SW1 das gespeicherte zweite Fragment A1-2 des dritten Telegramms A1 nicht, sondern wartet für die oben beschriebene vorgegebene Zeitdauer auf den Empfang des zweiten Fragments B-2 des ersten Telegramms B. Der erste Verteilerknoten SW1 würde in diesem Fall, ebenso wie oben erläutert, für den Fall, dass der erste Verteilerknoten SW1 das zweite Fragment B-2 des ersten Telegramms B nicht in der vorgegebenen Zeitdauer empfängt, mit dem Senden des zweiten Fragments A1-2 des dritten Telegramms A1 fortfahren. Vorliegend empfängt der erste Verteilerknoten SW1 innerhalb der vorgegebenen Zeitdauer jedoch beispielsweise das zweite Fragment B-2 des ersten Telegramms B.

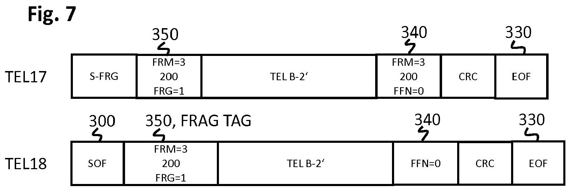

Der erste Verteilerknoten SW1 leitet das zweite Fragment B-2 des ersten Telegramms B an den ersten Teilnehmer TN A weiter, dabei kann das zweite Fragment B-2, das nachfolgend als zweites Fragment B-2' bezeichnet wird, einen in Fig. 7 dargestellten siebzehnten Telegrammaufbau TEL17 bzw. einen achtzehnten Telegrammaufbau TEL18 aufweisen. Der siebzehnte Telegrammaufbau TEL17 kann analog zum siebten Telegrammaufbau TEL7 in Fig. 4 aufgebaut sein, ebenso kann der achtzehnte Telegrammaufbau TEL18 analog zum achten Telegrammaufbau TEL8 in Fig. 4 aufgebaut sein. Unterschiede im siebzehnten Telegrammaufbau TEL17 und dem siebten Telegrammaufbau TEL7 können sich aus den unterschiedlich ausgebildeten Werten der fortlaufenden Nummern FRM ergeben. Vorliegend kann der erste Verteilerknoten SW1 den Wert der fortlaufenden Zahl FRM für das zweite Fragment B-2' des ersten Telegramms B auf den Wert drei gesetzt haben, wohingegen der zweite Verteilerknoten SW2 in Fig. 4 den Wert der fortlaufenden Zahl FRM für das zweite Fragment B-2 auf den Wert eins gesetzt haben kann. In einer achten Fragmentierungstabelle TAB8 kann der erste Verteilerknoten SW1 den Wert der fortlaufenden Zahl FRM für das zweite Fragment B-2' hinterlegen und kann zudem den Eintrag für das zweite Telegramm C' aus der achten Fragmentierungstabelle TAB8 herauslöschen:

**TAB8**

| | A1 | B | A2 |
|---|---|---|---|
| Ein-/Ausgabe-Schnittstelle (Empfang) | P1 | P2 | P1 |
| FRM (Empfang) | 0 | 1 | 0 |
| Ein-/Ausgabe-Schnittstelle (Senden) | P0 | P0 | P0 |
| FRM (Senden) | 1 | 3 | 2 |
| Prioritätsstufe | 220 | 200 | 220 |
| FFN | 1 | 1 | 0 |
| Telegramm /Fragment gespeichert | TRUE | FALSE | TRUE |

Zu einem Zeitpunkt T7 in Fig. 2 kann der erste Verteilerknoten SW1 das zweite Fragment B-2' des ersten Telegramms B vollständig an den ersten Teilnehmer TN A weitergeleitet haben. Demnach kann der erste Verteilerknoten SW1 den Eintrag für das erste Telegramm B aus der achten Fragmentierungstabelle TAB8 löschen. Eine neunte Fragmentierungstabelle TAB9 kann folglich die nachfolgenden Inhalte umfassen:

**TAB9**

| | A1 | A2 |
|---|---|---|
| Ein-/Ausgabe-Schnittstelle (Empfang) | P1 | P1 |
| FRM (Empfang) | 0 | 0 |
| Ein-/Ausgabe-Schnittstelle (Senden) | P0 | P0 |
| FRM (Senden) | 1 | 2 |
| Prioritätsstufe | 220 | 220 |
| FFN | 1 | 0 |
| Telegramm /Fragment gespeichert | TRUE | TRUE |

Der erste Verteilerknoten SW1 kann anhand der neunten Fragmentierungstabelle TAB9 erkennen, dass das gespeicherte zweite Fragment A1-2 des dritten Telegramms A1, sowie das gespeicherte vierte Telegramm A2 die gleiche dritte Prioritätsstufe 220 mit dem ganzzahligen Wert eins aufweisen. Folglich kann der erste Verteilerknoten SW1 zuerst das zweite Fragment A1-2 des dritten Telegramms A1 auf der ersten Ein-/Ausgabe-Schnittstelle P0 senden, da der erste Verteilerknoten SW1 dieses vor dem vierten Telegramm A2 auf der dritten Ein-/Ausgabe-Schnittstelle P1 empfangen haben kann.

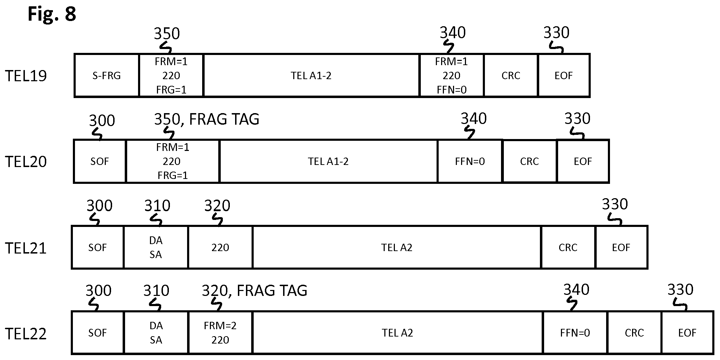

Fig. 8 zeigt einen neunzehnten Telegrammaufbau TEL19 sowie einen zwanzigsten Telegrammaufbau TEL20, den das zweite Fragment A1-2 des dritten Telegramms A1 beim Weiterleitungsvorgang aufweisen kann. Der neunzehnte Telegrammaufbau TEL19 kann analog zum siebten Telegrammaufbau TEL7 in Fig. 4 ausgebildet sein, da es sich bei beiden Telegrammaufbauten jeweils um ein zweites Fragment eines Telegramms handelt, wobei für den neunzehnten Telegrammaufbau TEL19 die gleichen Bedingungen und Merkmale gelten, wie oben im Zusammenhang mit dem siebten Telegrammaufbau TEL7 erläutert wurde.

Der zwanzigste Telegrammaufbau TEL20 kann analog zum achten Telegrammaufbau TEL8 in Fig. 4 ausgebildet sein, da es sich ebenfalls um Telegrammaufbauten eines zweiten Fragments eines Telegramms handelt. Aus diesem Grund gelten für den zwanzigsten Telegrammaufbau TEL20 die oben im Zusammenhang mit dem achten Telegrammaufbau TEL8 erläuterten Bedingungen und Merkmale. Die genannten Telegrammaufbauten können jeweils dieselbe fortlaufende Zahl FRM aufweisen, da die entsprechenden zweiten Fragmente der Telegramme jeweils von dem ersten und dem zweiten Verteilerknoten SW1, SW2 auf verschiedenen Datenübertragungsstrecken übertragen werden.

Zu einem Zeitpunkt T8 in Fig. 2 kann der erste Verteilerknoten SW1 das zweite Fragment A1-2 des dritten Telegramms A1 vollständig an den ersten Teilnehmer TN A gesendet haben. Demnach kann der erste Verteilerknoten SW1 den Eintrag des dritten Telegramms A1 aus der neunten Fragmentierungstabelle TAB9 entfernen und kann eine zehnte Fragmentierungstabelle TAB10 generieren:

**TAB10**

| | A2 |
|---|---|
| Ein-/Ausgabe-Schnittstelle (Empfang) | P1 |
| FRM (Empfang) | 0 |
| Ein-/Ausgabe-Schnittstelle (Senden) | P0 |
| FRM (Senden) | 2 |
| Prioritätsstufe | 220 |
| FFN | 0 |
| Telegramm /Fragment gespeichert | TRUE |

Der erste Verteilerknoten SW1 sendet schließlich das vierte Telegramm A2 über die erste Ein-/Ausgabe-Schnittstelle P0 an den ersten Teilnehmer TN A, wobei das vierte Telegramm A2 dabei einen einundzwanzigsten Telegrammaufbau TEL21 bzw. einen zweiundzwanzigsten Telegrammaufbau TEL22 in Fig. 8 aufweisen kann. Beispielsweise kann das vierte Telegramm A2 ohne von dem ersten Verteilerknoten SW1 fragmentiert worden zu sein, an den ersten Teilnehmer TN A weitergeleitet werden. Demnach kann der einundzwanzigste Telegrammaufbau TEL21 analog zu dem ersten Telegrammaufbau TEL1 in Fig. 3 aufgebaut sein, sowie kann der zweiundzwanzigste Telegrammaufbau TEL22 analog zu dem zweiten Telegrammaufbau TEL2 in Fig. 3 ausgebildet sein, da es sich jeweils um ein nicht fragmentiertes Telegramm handelt. Es gelten daher die oben im Zusammenhang mit dem ersten und zweiten Telegrammaufbau TEL1, TEL2 genannten Merkmale und Bedingungen auch für den einundzwanzigsten und zweiundzwanzigsten Telegrammaufbau TEL21, TEL22.

Nachdem der erste Verteilerknoten SW1 das vierte Telegramm A2 mit dem einundzwanzigsten Telegrammaufbau TEL21 bzw. dem zweiundzwanzigsten Telegrammaufbau TEL22 vollständig an den ersten Teilnehmer TN A übertragen hat, kann der erste Verteilerknoten SW1 den Eintrag über das vierte Telegramm A2 aus der zehnten Fragmentierungstabelle TAB10 löschen. Der erste Teilnehmer TN A kann die einzelnen empfangenen Fragmente der Telegramme auf Grundlage der ersten und zweiten Fragmentier-Information 340, 350, die die einzelnen Fragmente umfassen, wieder zusammensetzen, da die erste und die zweite Fragmentier-Information 340, 350 eine Zuordnung der einzelnen Fragmente zu einem vollständigen Telegramm erlauben können, wobei die erste Fragmentier-Information 340 auf die zweite Fragmentier-Information 350 verweisen kann und vice versa. Alternativ dazu kann der erste Verteilerknoten SW1 die einzelnen Fragmente der Telegramme zusammensetzen und an den ersten Teilnehmer TN A weiterleiten.

Die Fragmentnummer FFN des zweiten Fragments des jeweiligen Telegramms kann ebenso wie die fortlaufende Zahl FRM als weitere fortlaufende Zahl ausgebildet sein. Die fortlaufende Zahl FRM sowie die zweite Fragmentier-Information 350, umfassend die Fragmentzahl FRG, die den Wert der Fragmentnummer FFN des ersten Fragments des Telegramms aufweisen kann, können dazu dienen Fehler bei der Datenübertragung der einzelnen Fragmente der Telegramme zu erkennen. Ist der empfangende Teilnehmer hingegen in der Lage vergleichbare Fehlererkennungs-Mechanismen durchzuführen, um ein fehlendes Fragment beim Übertragungsvorgang feststellen zu können, so kann eine eindeutige Zuordnung der einzelnen Fragmente auch über die ihnen zugeordnete Prioritätsstufe erfolgen, und es kann auf die Nutzung der Fragmentnummer FFN sowie der Fragmentzahl FRG verzichtet werden.

Der erste Verteilerknoten SW1 und/oder der zweite Verteilerknoten SW2 kann die fortlaufende Zahl FRM für den Sendevorgang (FRM Senden) eines Telegramms auf dem gleichen Wert beibehalten, wie den Wert der fortlaufenden Zahl beim Empfang des jeweiligen Telegramms, jedoch unter der Einschränkung, dass von dem ersten Verteilerknoten SW1 und/oder dem zweiten Verteilerknoten SW2 keine zwei Telegramme mit gleich ausgebildeter Wertigkeit und gleich ausgebildeten Werten der Prioritätsstufe und dem gleichen Wert der fortlaufenden Zahl FRM noch nicht vollständig gesendet worden sind. Denn die Kombination aus der fortlaufenden Zahl FRM und dem Wert der Prioritätsstufe des Telegramms muss für sämtliche Telegramme, die von dem ersten Verteilerknoten SW1 bzw. dem zweiten Verteilerknoten SW2 zu einem Zeitpunkt noch nicht vollständig über die erste Ein-/Ausgabe-Schnittstelle P0, die beispielsweise jeweils für den ersten Verteilerknoten SW1 und den zweiten Verteilerknoten SW2 als die Sende-Schnittstelle vorgesehen ist, gesendet worden sind, eindeutig sein.

Bei den einzelnen ersten bis vierten Teilnehmern TN A-TN D im Automatisierungskommunikationsnetzwerk 100 kann es sich jeweils um Teilnehmer handeln, die fragmentierte Telegramme verarbeiten können und die entsprechenden Fragmente der Telegramme anhand der ersten und der zweiten Fragmentier-Information 340, 350 wieder zu einem vollständigen Telegramm zusammensetzen können. Die beiden Verteilerknoten SW1, SW2 können ferner als Verteilerknoten ausgebildet sein, die für eine Weiterleitung bzw. Verarbeitung der Telegramme sowie Fragmente nicht den kompletten Header der Telegramme sowie Fragmente benötigen.

Die Erfindung wurde im Detail durch bevorzugte Ausführungsbeispiele beschrieben. Anstelle der beschriebenen Ausführungsbeispiele sind weitere Ausführungsbeispiele denkbar, welche weitere Abwandlungen oder Kombinationen von beschriebenen Merkmalen aufweisen können. Die Erfindung ist aus diesem Grund nicht durch die offenbarten Beispiele eingeschränkt, da vom Fachmann andere Variationen daraus abgeleitet werden können, ohne den durch die beigefügten Ansprüche definierten Schutzumfang zu verlassen.

### Bezugszeichenliste

- SW1: erster Verteilerknoten
- SW2: zweiter Verteilerknoten

- N1: erstes Netzwerksegment
- N2: zweites Netzwerksegment
- N3: drittes Netzwerksegment
- N4: viertes Netzwerksegment

- TN A: erster Teilnehmer
- TN B: zweiter Teilnehmer
- TN C: dritter Teilnehmer
- TN D: vierter Teilnehmer

- P0: erste Ein-/Ausgabe-Schnittstelle
- P2: zweite Ein-/Ausgabe-Schnittstelle
- P1: dritte Ein-/Ausgabe-Schnittstelle

- 100: Automatisierungskommunikationsnetzwerk
- 200: erste Prioritätsstufe
- 210: zweite Prioritätsstufe
- 220: dritte Prioritätsstufe

- t: zeitlicher Verlauf

- B: erstes Telegramm
- C: zweites Telegramm
- A1: drittes Telegramm
- A2: viertes Telegramm

- TEL B: Nutzdatenabschnitt des ersten Telegramms
- TEL C: Nutzdatenabschnitt des zweiten Telegramms
- TEL A1: Nutzdatenabschnitt des dritten Telegramms
- TEL A2: Nutzdatenabschnitt des vierten Telegramms

- EOF: Ende-Symbol
- CRC: Prüfsummenfeld
- DA: Zieladresse
- SA: Absenderadresse
- ET: Typfeld
- FRAG TAG: Fragmentier-TAG
- FRM: fortlaufende Zahl
- FFN: Fragmentnummer
- E-FRG: erstes Fragmentier-Symbol
- S-FRG: zweites Fragmentier-Symbol
- FRG: Fragmentzahl
- FA: Fragment-Zieladresse
- PAD-LEN: Füllbyte-Datenfeld
- VLAN TAG: zusätzliches Datenfeld

- 300: erstes Datenfeld
- 310: zweites Datenfeld
- 320: drittes Datenfeld
- 330: viertes Datenfeld
- 340: erste Fragmentier-Information

- B-1: erstes Fragment des ersten Telegramms
- B-2: zweites Fragment des ersten Telegramms
- A1-1: erstes Fragment des dritten Telegramms
- B-1': weitergeleitetes erstes Fragment des ersten Telegramms
- C': weitergeleitetes zweites Telegramm
- B-2': weitergeleitetes zweites Fragment des ersten Telegramms
- A1-2: zweites Fragment des dritten Telegramms

- TEL B-1: Nutzdatenabschnitt des ersten Fragments des ersten Telegramms
- TEL B-2: Nutzdatenabschnitt des zweiten Fragments des ersten Telegramms
- TEL A1-1: Nutzdatenabschnitt des ersten Fragments des dritten Telegramms
- TEL B-1': Nutzdatenabschnitt des weitergeleiteten ersten Fragments des ersten Telegramms
- TEL C': Nutzdatenabschnitt des weitergeleiteten zweiten Telegramms
- TEL B-2': Nutzdatenabschnitt des weitergeleiteten zweiten Fragments des ersten Telegramms
- TEL A1-2: Nutzdatenabschnitt des zweiten Fragments des dritten Telegramms

- TEL1: erster Telegrammaufbau
- TEL2: zweiter Telegrammaufbau
- TEL3: dritter Telegrammaufbau
- TEL4: vierter Telegrammaufbau
- TEL5: fünfter Telegrammaufbau
- TEL6: sechster Telegrammaufbau
- TEL7: siebter Telegrammaufbau
- TEL8: achter Telegrammaufbau
- TEL9: neunter Telegrammaufbau
- TEL10: zehnter Telegrammaufbau
- TEL11: elfter Telegrammaufbau
- TEL12: zwölfter Telegrammaufbau
- TEL13: dreizehnter Telegrammaufbau
- TEL14: vierzehnter Telegrammaufbau
- TEL15: fünfzehnter Telegrammaufbau
- TEL16: sechzehnter Telegrammaufbau
- TEL17: siebzehnter Telegrammaufbau
- TEL18: achtzehnter Telegrammaufbau
- TEL19: neunzehnter Telegrammaufbau
- TEL20: zwanzigster Telegrammaufbau
- TEL21: einundzwanzigster Telegrammaufbau
- TEL22: zweiundzwanzigster Telegrammaufbau

- FALSE: erster Zustand einer booleschen Variable
- TRUE: zweiter Zustand einer booleschen Variable
- TAB1: erste Fragmentierungstabelle
- TAB2: zweite Fragmentierungstabelle
- TAB3: dritte Fragmentierungstabelle
- TAB4: vierte Fragmentierungstabelle
- TAB5: fünfte Fragmentierungstabelle
- TAB6: sechste Fragmentierungstabelle
- TAB7: siebte Fragmentierungstabelle
- TAB8: achte Fragmentierungstabelle
- TAB9: neunte Fragmentierungstabelle
- TAB10: zehnte Fragmentierungstabelle

## Patentansprüche

1. Verfahren zur Datenübertragung in einem Automatisierungskommunikationsnetzwerk (100), das zumindest einen Verteilerknoten (SW1, SW2) umfasst, der mehrere Ein-/Ausgabe-Schnittstellen (P0, P1, P2) aufweist, die jeweils mit einem Netzwerksegment (N1, N2, N3, N4) in Verbindung stehen,
wobei das Netzwerksegment (N1, N2, N3, N4) zumindest einen Teilnehmer (TN A, TN B, TN C, TN D) aufweist,
wobei ein Datenaustausch zwischen den Teilnehmern (TN A, TN B, TN C, TN D) in Form von Telegrammen (B, C, A1, A2) erfolgt,
wobei den Telegrammen (B, C, A1, A2) Prioritätsstufen (200, 210, 220) zugeordnet sind,
wobei das Senden eines Telegramms (B, A1, A2) mit einer ersten Prioritätsstufe (200, 220) auf einer Ein-/Ausgabe-Schnittstelle (P0) von dem zumindest einen Verteilerknoten (SW1, SW2) unterbrochen wird, wenn der zumindest eine Verteilerknoten (SW1, SW2) ein Telegramm (C, B) mit einer zweiten Prioritätsstufe (210, 200), die eine höhere Wertigkeit umfasst als die erste Prioritätsstufe (200, 220), auf einer weiteren Ein-/Ausgabe-Schnittstelle (P1, P2) empfangen hat,
wobei der zumindest eine Verteilerknoten (SW1, SW2) das unterbrochene Telegramm mit der ersten Prioritätsstufe (200, 220), das ein erstes Fragment (B-1, A1-1) bildet, definiert abschließt, indem der zumindest eine Verteilerknoten (SW1, SW2) eine erste Fragmentier-Information (340) am Ende des ersten Fragments (B-1, A1-1) sendet,
wobei die erste Fragmentier-Information (340) eine Fragmentnummer (FFN) eines zweiten Fragments (B-2, A1-2) umfasst, wobei ein verbleibender Teil des Telegramms mit der ersten Prioritätsstufe (200, 220), der von dem zumindest einen Verteilerknoten (SW1, SW2) noch nicht gesendet worden ist, das zweite Fragment (B-2, A1-2) bildet,
wobei der zumindest eine Verteilerknoten (SW1, SW2) eine zweite Fragmentier-Information (350) für das zweite Fragment (B-2, A1-2) erzeugt,
wobei die zweite Fragmentier-Information (350) eine Fragmentzahl (FRG) umfasst, die den Wert einer Fragmentnummer (FFN) des ersten Fragments (B-1, A1-2) aufweist,
wobei der zumindest eine Verteilerknoten (SW1, SW2) das zweite Fragment (B-2, A1-2) zusammen mit der zweiten Fragmentier-Information (350) zwischenspeichert, wobei der zumindest eine Verteilerknoten (SW1, SW2) nach dem Senden des Telegramms (C, B) mit der zweiten Prioritätsstufe (210, 200) auf der Ein-/Ausgabe-Schnittstelle (P0), das zweite Fragment (B-2, A1-2) des Telegramms (B, A1) mit der ersten Prioritätsstufe (200, 220) zusammen mit der zweiten Fragmentier-Information (350) auf der Ein-/Ausgabe-Schnittstelle (P0) sendet, und
wobei ein angesprochener Teilnehmer (TN A, TN B, TN C, TN D), für den das Telegramm (B, A1) mit der ersten Prioritätsstufe (200, 220) bestimmt ist, das erste Fragment (B-1, A1-1) und das zweite Fragment (B-2, A1-2) des Telegramms (B, A1) mit der ersten Prioritätsstufe (200, 220) auf Grundlage von der ersten und der zweiten Fragmentier-Information (340, 350) zusammensetzt.

2. Verfahren nach Anspruch 1,
wobei der zumindest eine Verteilerknoten (SW1, SW2) am Ende des ersten Fragments (B-1, A1-1) ein Prüfsummenfeld (CRC) sendet, und
wobei das Prüfsummenfeld (CRC) eine Prüfsumme aufweist, die über den bereits gesendeten Teil des ersten Fragments (B-1, A1-1) berechnet wird.

3. Verfahren nach Anspruch 1 oder 2,
wobei der zumindest eine Verteilerknoten (SW1, SW2) das erste Fragment (B-1, A1-1) des unterbrochenen Telegramms mit der ersten Prioritätsstufe (200, 220) durch ein erstes Fragmentier-Symbol (E-FRG) am Ende des ersten Fragments (B-1, A1-1) kennzeichnet.

4. Verfahren nach Anspruch 3,
wobei das zweite Fragment (B-2, A1-2) des Telegramms mit der ersten Prioritätsstufe (200, 220) in wenigstens zwei Unterfragmente zerlegt ist,
wobei ein erstes Unterfragment des Telegramms mit der ersten Prioritätsstufe (200, 220) ein zweites Fragmentier-Symbol (S-FRG) und die zweite Fragmentier-Information (350) am Anfang des ersten Unterfragments aufweist,
wobei die zweite Fragmentier-Information (350) eine Fragmentzahl (FRG) umfasst, die den Wert der Fragmentnummer (FFN) des ersten Fragments (B-1, A1-2) aufweist,
wobei das erste Unterfragment die erste Fragmentier-Information (340) am Ende des ersten Unterfragments aufweist, die die Fragmentnummer (FFN) eines zweiten Unterfragments umfasst,
wobei das erste Unterfragment am Ende des ersten Unterfragments das erste Fragmentier-Symbol (E-FRG) aufweist, und
wobei das zweite Unterfragment des Telegramms mit der ersten Prioritätsstufe (200, 220) das zweite Fragmentier-Symbol (S-FRG) und die zweite Fragmentier-Information (350) am Anfang des zweiten Unterfragments umfasst,
wobei die zweite Fragmentier-Information (350) des zweiten Unterfragments die Fragmentzahl (FRG) mit dem Wert der Fragmentnummer (FFN) des ersten Unterfragments aufweist,
wobei das zweite Unterfragment des Telegramms mit der ersten Prioritätsstufe (200, 220) mit dem Wert Null der Fragmentnummer (FFN) der ersten Fragmentier-Information (340) am Ende des zweiten Unterfragments gekennzeichnet wird.

5. Verfahren nach Anspruch 1 oder 2,
wobei eine mögliche Fragmentierung des Telegramms mit der ersten Prioritätsstufe (200, 220) angezeigt wird, indem am Anfang des Telegramms mit der ersten Prioritätsstufe (200, 220) ein Fragmentier-TAG (FRAG TAG) gesetzt wird,
wobei das Fragmentier-TAG (FRAG TAG) ein Typfeld (ET) für ein verwendetes Protokoll innerhalb von Nutzdaten (TEL B-1, TEL A1-1) des ersten Fragments aufweist, wobei der zumindest eine Verteilerknoten (SW1, SW2) das Telegramm mit der ersten Prioritätsstufe (200, 220) so unterbricht, dass das unterbrochene Telegramm, das das erste Fragment (B-1, A1-1) des Telegramms (B, A1) bildet, beim Unterbrechungsvorgang eine Mindestlänge aufweist,
und
wobei die Fragmentierung des Telegramms mit der ersten Prioritätsstufe (200, 220) am Ende des ersten Fragments (B-1, A1-1) mit der ersten Fragmentier-Information (340) angezeigt wird,
wobei die erste Fragmentier-Information (340) eine Fragmentnummer (FFN) des zweiten Fragments (B-2, A1-2) aufweist.

6. Verfahren nach Anspruch 5,
wobei das zweite Fragment (B-2, A1-2) des Telegramms mit der ersten Prioritätsstufe (200, 220) in wenigstens zwei Unterfragmente zerlegt ist,
wobei ein erstes Unterfragment am Anfang des ersten Unterfragments eine Fragment-Zieladresse (FA) aufweist, umfassend eine zweite Fragmentier-Information (350), die eine Fragmentzahl (FRG) mit dem Wert der Fragmentnummer (FFN) des ersten Fragments (B-1, A1-1) aufweist,
wobei über die Fragment-Zieladresse (FA) mehrere Teilnehmer (TN A, TN B, TN C, TN D) ansprechbar sind,
wobei das erste Unterfragment des Telegramms (B, A1) die erste Fragmentier-Information (340) mit der Fragmentnummer (FFN) eines zweiten Unterfragments am Ende des ersten Unterfragments aufweist, und
wobei die Fragment-Zieladresse (FA) eine Absenderadresse (SA), eine Zieladresse (DA) und das Fragmentier-TAG (FRAG TAG) am Anfang des ersten Unterfragments umfasst, und
wobei die Fragment-Zieladresse (FA) ein zusätzliches Datenfeld (VLAN TAG) aufweist, wenn das Telegramm (B, A1) das zusätzliche Datenfeld (VLAN TAG) umfasst.

7. Verfahren nach Anspruch 6,
wobei das zweite Unterfragment des Telegramms mit der ersten Prioritätsstufe (200, 220) Füllbytes aufweist, wenn das zweite Unterfragment die Mindestlänge unterschreitet,
wobei das Einfügen von Füllbytes angezeigt wird, indem der Wert der Fragmentnummer (FFN) der ersten Fragmentier-Information (340) des zweiten Unterfragments am Ende des zweiten Unterfragments auf einen Wert PAD gesetzt wird, und wobei das zweite Unterfragment ein Füllbyte-Datenfeld (PAD-LEN) am Ende des zweiten Unterfragments aufweist, das die Anzahl der Füllbytes umfasst.

8. Verfahren nach einem der Ansprüche 5 bis 7,
wobei das Telegramm mit der ersten Prioritätsstufe (200, 220) als ein Ethernet-Telegramm ausgebildet ist.

9. Automatisierungskommunikationsnetzwerk (100), mit zumindest einem Verteilerknoten (SW1, SW2), der mehrere Ein-/Ausgabe-Schnittstellen (P0, P1, P2) aufweist, die jeweils mit einem Netzwerksegment (N1, N2, N3, N4) in Verbindung stehen,
wobei das Netzwerksegment (N1, N2, N3, N4) zumindest einen Teilnehmer (TN A, TN B, TN C, TN D) aufweist,
wobei ein Datenaustausch zwischen den Teilnehmern (TN A, TN B, TN C, TN D) in Form von Telegrammen (B, C, A1, A2) erfolgt,
wobei den Telegrammen (B, C, A1, A2) Prioritätsstufen (200, 210, 220) zugeordnet sind,
wobei der zumindest eine Verteilerknoten (SW1, SW2) ausgebildet ist, das Senden eines Telegramms (B, A1, A2) mit einer ersten Prioritätsstufe (200, 220) auf einer Ein-/Ausgabe-Schnittstelle zu unterbrechen (P0), wenn der zumindest eine Verteilerknoten (SW1, SW2) ein Telegramm (C, B) mit einer zweiten Prioritätsstufe (210, 200), die eine höhere Wertigkeit umfasst als die erste Prioritätsstufe (200, 220), auf einer weiteren Ein-/Ausgabe-Schnittstelle (P1, P2) empfangen hat,
wobei der zumindest eine Verteilerknoten (SW1, SW2) ausgelegt ist, das unterbrochene Telegramm mit der ersten Prioritätsstufe (200, 220), das ein erstes Fragment (B-1, A1-1) bildet, definiert abzuschließen, indem der zumindest eine Verteilerknoten (SW1, SW2) eine erste Fragmentier-Information (340) am Ende des ersten Fragments (B-1, A1-1) sendet,
wobei die erste Fragmentier-Information (340) eine Fragmentnummer (FFN) eines zweiten Fragments (B-2, A1-2) umfasst, wobei ein verbleibender Teil des Telegramms (B, A1) mit der ersten Prioritätsstufe (200, 220), der von dem zumindest einen Verteilerknoten (SW1, SW2) noch nicht gesendet worden ist, das zweite Fragment (B-2, A1-2) bildet,
wobei der zumindest eine Verteilerknoten (SW1, SW2) ausgebildet ist, eine zweite Fragmentier-Information (350) für das zweite Fragment (B-2, A1-2) zu erzeugen, wobei die zweite Fragmentier-Information (350) eine Fragmentzahl (FRG) umfasst, die den Wert einer Fragmentnummer (FFN) des ersten Fragments (B-1, A1-1) aufweist,
wobei der zumindest eine Verteilerknoten (SW1, SW2) ausgebildet ist, das zweite Fragment (B-2, A1-2) zusammen mit der zweiten Fragmentier-Information (350) zwischenzuspeichern,
wobei der zumindest eine Verteilerknoten (SW1, SW2) ausgelegt ist, nach dem Senden des Telegramms (C, B) mit der zweiten Prioritätsstufe (210, 200) auf der Ein-/Ausgabe-Schnittstelle (P0), das zweite Fragment (B-2, A1-2) des Telegramms (B, A1) mit der ersten Prioritätsstufe (200, 220) zusammen mit der zweiten Fragmentier-Information (350) auf der Ein-/Ausgabe-Schnittstelle (P0) zu senden, und wobei ein angesprochener Teilnehmer (TN A, TN B, TN C, TN D), für den das Telegramm (B, A1) mit der ersten Prioritätsstufe (200, 220) bestimmt ist, das erste Fragment (B-1, A1-1) und das zweite Fragment (B-2, A1-2) des Telegramms (B, A1) mit der ersten Prioritätsstufe (200, 220) auf Grundlage von der ersten und der zweiten Fragmentier-Information (340, 350) zusammensetzt.

10. Automatisierungskommunikationsnetzwerk nach Anspruch 9,
wobei der zumindest eine Verteilerknoten (SW1, SW2) ausgebildet ist, am Ende des ersten Fragments (B-1, A1-1) ein Prüfsummenfeld (CRC) zu senden, und wobei das Prüfsummenfeld (CRC) eine Prüfsumme aufweist, die der zumindest eine Verteilerknoten (SW1, SW2) über den bereits gesendeten Teil des ersten Fragments (B-1, A1-1) berechnet.

11. Automatisierungskommunikationsnetzwerk nach Anspruch 9 oder 10,
wobei der zumindest eine Verteilerknoten (SW1, SW2) ausgelegt ist, das erste Fragment (B-1, A1-1) des unterbrochenen Telegramms mit der ersten Prioritätsstufe (200, 220) durch ein erstes Fragmentier-Symbol (E-FRG) am Ende des ersten Fragments (B-1, A1-1) zu kennzeichnen.

12. Automatisierungskommunikationsnetzwerk nach Anspruch 11,
wobei der zumindest eine Verteilerknoten (SW1, SW2) ausgebildet ist, das zweite Fragment (B-2, A1-2) des Telegramms mit der ersten Prioritätsstufe (200, 220) in wenigstens zwei Unterfragmente zu zerlegen,
wobei ein erstes Unterfragment des Telegramms mit der ersten Prioritätsstufe (200, 220) ein zweites Fragmentier-Symbol (S-FRG) und die zweite Fragmentier-Information (350) am Anfang des ersten Unterfragments aufweist,
wobei die zweite Fragmentier-Information (350) eine Fragmentzahl (FRG) umfasst, die den Wert der Fragmentnummer (FFN) des ersten Fragments (B-1, A1-1) aufweist,
wobei das erste Unterfragment die erste Fragmentier-Information (340) am Ende des ersten Unterfragments aufweist, die die Fragmentnummer (FFN) eines zweiten Unterfragments umfasst,
wobei das erste Unterfragment am Ende des ersten Unterfragments das erste Fragmentier-Symbol (E-FRG) aufweist, und
wobei das zweite Unterfragment des Telegramms mit der ersten Prioritätsstufe (200, 220) das zweite Fragmentier-Symbol (S-FRG) und die zweite Fragmentier-Information (350) am Anfang des zweiten Unterfragments umfasst,
wobei die zweite Fragmentier-Information (350) des zweiten Unterfragments die Fragmentzahl (FRG) mit dem Wert der Fragmentnummer (FFN) des zweiten Unterfragments aufweist,
wobei der zumindest eine Verteilerknoten (SW1, SW2) ausgelegt ist, das zweite Unterfragment mit dem Wert Null der Fragmentnummer (FFN) der ersten Fragmentier-Information (340) am Ende des zweiten Unterfragments zu kennzeichnen.

13. Automatisierungskommunikationsnetzwerk nach Anspruch 9 oder 10,
wobei der zumindest eine Verteilerknoten (SW1, SW2) ausgelegt ist, eine mögliche Fragmentierung des Telegramms (B, A1) mit der ersten Prioritätsstufe (200, 220) anzuzeigen, indem der zumindest eine Verteilerknoten (SW1, SW2) am Anfang des Telegramms mit der ersten Prioritätsstufe (200, 220) ein Fragmentier-TAG (FRAG TAG) setzt,
wobei das Fragmentier-TAG (FRAG TAG) ein Typfeld (ET) für ein verwendetes Protokoll innerhalb von Nutzdaten (TEL B-1, TEL A1-1) des ersten Fragments (B-1, A1-1) aufweist,
wobei der zumindest eine Verteilerknoten (SW1, SW2) ausgebildet ist, das Telegramm mit der ersten Prioritätsstufe (200, 220) so zu unterbrechen, dass das unterbrochene Telegramm, das das erste Fragment (B-1, A1-1) des Telegramms (B, A1) bildet, beim Unterbrechungsvorgang eine Mindestlänge aufweist, und
wobei der zumindest eine Verteilerknoten (SW1, SW2) ausgelegt ist, die Fragmentierung des Telegramms mit der ersten Prioritätsstufe (200, 220) am Ende des ersten Fragments (B-1, A1-1) mit der ersten Fragmentier-Information (340) anzuzeigen, wobei die erste Fragmentier-Information (340) eine Fragmentnummer (FFN) des zweiten Fragments (B-2, A1-2) aufweist.

14. Automatisierungskommunikationsnetzwerk nach Anspruch 13,
wobei der zumindest eine Verteilerknoten (SW1, SW2) ausgebildet ist, das zweite Fragment (B-2, A1-2) des Telegramms mit der ersten Prioritätsstufe (200, 220) in wenigstens zwei Unterfragmente zu zerlegen,
wobei ein erstes Unterfragment des Telegramms (B, A1) am Anfang des ersten Unterfragments eine Fragment-Zieladresse (FA) aufweist, umfassend eine zweite Fragmentier-Information (350), die eine Fragmentzahl (FRG) mit dem Wert der Fragmentnummer (FFN) des ersten Fragments (B-1, A1-1) aufweist,
wobei über die Fragment-Zieladresse (FA) mehrere Teilnehmer ansprechbar (TN A, TN B, TN C, TN D) sind, und
wobei das erste Unterfragment des Telegramms (B, A1) die erste Fragmentier-Information (340) mit der Fragmentnummer (FFN) eines zweiten Unterfragments am Ende des zweiten Unterfragments aufweist, und
wobei die Fragment-Zieladresse (FA) eine Absenderadresse (SA), eine Zieladresse (DA) und das Fragmentier-TAG (FRAG TAG) am Anfang des ersten Unterfragments umfasst, und
wobei die Fragment-Zieladresse (FA) ein zusätzliches Datenfeld (VLAN TAG) aufweist, wenn das Telegramm (B, A1) das zusätzliche Datenfeld (VLAN TAG) umfasst.

15. Automatisierungskommunikationsnetzwerk nach Anspruch 14,
wobei das zweite Unterfragment Füllbytes aufweist, wenn das zweite Unterfragment die Mindestlänge unterschreitet,
wobei der zumindest eine Verteilerknoten (SW1, SW2) ausgebildet ist, das Einfügen von Füllbytes anzuzeigen, indem der zumindest eine Verteilerknoten (SW1, SW2) den Wert der Fragmentnummer (FFN) der ersten Fragmentier-Information (340) des zweiten Unterfragments am Ende des zweiten Unterfragments auf einen Wert PAD setzt, und
wobei das zweite Unterfragment ein Füllbyte-Datenfeld (PAD-LEN) am Ende des zweiten Unterfragments aufweist, das die Anzahl der Füllbytes umfasst.

## Claims

1. Method for data transmission in an automation communication network (100) comprising at least one distribution node (SW1, SW2) having multiple input/output interfaces (P0, P1, P2) that are each connected to a network segment (N1, N2, N3, N4), wherein the network segment (N1, N2, N3, N4) has at least one subscriber (TN A, TN B, TN C, TN D),
wherein a data interchange takes place between the subscribers (TN A, TN B, TN C, TN D) in the form of telegrams (B, C, A1, A2),
wherein the telegrams (B, C, A1, A2) have associated priority levels (200, 210, 220),
wherein the sending of a telegram (B, A1, A2) having a first priority level (200, 220) on an input/output interface (P0) is interrupted by the at least one distribution node (SW1, SW2) if the at least one distribution node (SW1, SW2) has received a telegram (C, B) having a second priority level (210, 200), which comprises a higher significance than the first priority level (200, 220), on a further input/output interface (P1, P2),
wherein the at least one distribution node (SW1, SW2) concludes the interrupted telegram having the first priority level (200, 220), which telegram forms a first fragment (B-1, A1-1), in a defined manner by virtue of the at least one distribution node (SW1, SW2) sending first fragmentation information (340) at the end of the first fragment (B-1, A1-1),
wherein the first fragmentation information (340) comprises a fragment number (FFN) of a second fragment (B-2, A1-2),
wherein a remaining portion of the telegram having the first priority level (200, 220) that has not yet been sent by the at least one distribution node (SW1, SW2) forms the second fragment (B-2, A1-2),
wherein the at least one distribution node (SW1, SW2) generates second fragmentation information (350) for the second fragment (B-2, A1-2),
wherein the second fragmentation information (350) comprises a fragment index (FRG) having the value of a fragment number (FFN) of the first fragment (B-1, A1-2),
wherein the at least one distribution node (SW1, SW2) buffer-stores the second fragment (B-2, A1-2) together with the second fragmentation information (350), wherein the at least one distribution node (SW1, SW2), after sending the telegram (C, B) having the second priority level (210, 300) on the input/output interface (P0), sends the second fragment (B-2, A1-2) of the telegram (B, A1) having the first priority level (200, 220) together with the second fragmentation information (350) on the input/output interface (P0), and
wherein an addressed subscriber (TN A, TN B, TN C, TN D) for which the telegram (B, A1) having the first priority level (200, 220) is intended assembles the first fragment (B-1, A1-1) and the second fragment (B-2, A1-2) of the telegram (B, A1) having the first priority level (200, 220) on the basis of the first and the second fragmentation information (340, 350).

2. Method according to Claim 1,
wherein the at least one distribution node (SW1, SW2) sends a checksum field (CRC) at the end of the first fragment (B-1, A1-1), and
wherein the checksum field (CRC) has a checksum that is computed using the already sent portion of the first fragment (B-1, A1-1).

3. Method according to Claim 1 or 2,
wherein the at least one distribution node (SW1, SW2) marks the first fragment (B-1, A1-1) of the interrupted telegram having the first priority level (200, 220) by way of a first fragmentation symbol (E-FRG) at the end of the first fragment (B-1, A1-1).

4. Method according to Claim 3,
wherein the second fragment (B-2, A1-2) of the telegram having the first priority level (200, 220) is broken down into at least two subfragments,
wherein a first subfragment of the telegram having the first priority level (200, 220) has a second fragmentation symbol (S-FRG) and the second fragmentation information (350) at the start of the first subfragment,
wherein the second fragmentation information (350) comprises a fragment index (FRG) having the value of the fragment number (FFN) of the first fragment (B-1, A1-2),
wherein the first subfragment has the first fragmentation information (340), comprising the fragment number (FFN) of a second subfragment, at the end of the first subfragment,
wherein the first subfragment has the first fragmentation symbol (E-FRG) at the end of the first subfragment, and
wherein the second subfragment of the telegram having the first priority level (200, 220) comprises the second fragmentation symbol (S-FRG) and the second fragmentation information (350) at the start of the second subfragment,
wherein the second fragmentation information (350) of the second subfragment has the fragment index (FRG) with the value of the fragment number (FFN) of the first subfragment,
wherein the second subfragment of the telegram having the first priority level (200, 220) is marked with the value zero for the fragment number (FFN) of the first fragmentation information (340) at the end of the second subfragment.

5. Method according to Claim 1 or 2,
wherein a possible fragmentation of the telegram having the first priority level (200, 220) is indicated by setting a fragmentation TAG (FRAG TAG) at the start of the telegram having the first priority level (200, 220),
wherein the fragmentation TAG (FRAG TAG) has a type field (ET) for a protocol used within payload data (TEL B-1, TEL A-1) of the first fragment,
wherein the at least one distribution node (SW1, SW2) interrupts the telegram having the first priority level (200, 220) such that the interrupted telegram, which forms the first fragment (B-1, A1-1) of the telegram (B-A1), has a minimum length in the interruption process,
and
wherein the fragmentation of the telegram having the first priority level (200, 220) is indicated at the end of the first fragment (B-1, A1-1) using the first fragmentation information (340),
the first fragmentation information (340) having a fragment number (FFN) of the second fragment (B-2, A1-2) .

6. Method according to Claim 5,
wherein the second fragment (B-2, A1-2) of the telegram having the first priority level (200, 220) is broken down into at least two subfragments,
wherein a first subfragment has a fragment destination address (FA), comprising second fragmentation information (350) having a fragment index (FRG) with the value of the fragment number (FFN) of the first fragment (B-1, A1-1), at the start of the first subfragment,
wherein the fragment destination address (FA) may be used to address multiple subscribers (TN A, TN B, TN C, TN D),
wherein the first subfragment of the telegram (B, A1) has the first fragmentation information (340) with the fragment number (FFN) of a second subfragment at the end of the first subfragment, and
wherein the fragment address (FA) comprises a sender address (SA), a destination address (DA) and the fragmentation TAG (FRAG TAG) at the start of the first subfragment, and
wherein the fragment destination address (FA) has an additional data field (VLAN TAG) if the telegram (B, A1) comprises the additional data field (VLAN TAG).

7. Method according to Claim 6,
wherein the second subfragment of the telegram having the first priority level (200, 220) has padding bytes if the second subfragment falls short of the minimum length,
wherein the insertion of padding bytes is indicated by setting the value of the fragment number (FFN) of the first fragmentation information (340) of the second subfragment at the end of the second subfragment to a value PAD, and
wherein the second subfragment has a padding byte data field (PAD-LEN) at the end of the second subfragment that comprises the number of padding bytes.

8. Method according to any one of Claims 5 to 7, wherein the telegram having the first priority level (200, 220) is in the form of an Ethernet telegram.

9. Automation communication network (100), having at least one distribution node (SW1, SW2) having multiple input/output interfaces (P0, P1, P2) that are each connected to a network segment (N1, N2, N3, N4), wherein the network segment (N1, N2, N3, N4) has at least one subscriber (TN A, TN B, TN C, TN D),
wherein a data interchange takes place between the subscribers (TN A, TN B, TN C, TN D) in the form of telegrams (B, C, A1, A2),
wherein the telegrams (B, C, A1, A2) have associated priority levels (200, 210, 220),
wherein the at least one distribution node (SW1, SW2) is configured to interrupt the sending of a telegram (B, A1, A2) having a first priority level (200, 220) on an input/output interface (P0) if the at least one distribution node (SW1, SW2) has received a telegram (C, B) having a second priority level (210, 200), which comprises a higher significance than the first priority level (200, 220), on a further input/output interface (P1, P2),
wherein the at least one distribution node (SW1, SW2) is designed to conclude the interrupted telegram having the first priority level (200, 220), which telegram forms a first fragment (B-1, A1-1), in a defined manner by virtue of the at least one distribution node (SW1, SW2) sending first fragmentation information (340) at the end of the first fragment (B-1, A1-1),
wherein the first fragmentation information (340) comprises a fragment number (FFN) of a second fragment (B-2, A1-2),
wherein a remaining portion of the telegram (B, A1) having the first priority level (200, 220) that has not yet been sent by the at least one distribution node (SW1, SW2) forms the second fragment (B-2, A1-2), wherein the at least one distribution node (SW1, SW2) is configured to generate second fragmentation information (350) for the second fragment (B-2, A1-2), wherein the second fragmentation information (350) comprises a fragment index (FRG) having the value of a fragment number (FFN) of the first fragment (B-1, A1-2),
wherein the at least one distribution node (SW1, SW2) is configured to buffer-store the second fragment (B-2, A1-2) together with the second fragmentation information (350),
wherein the at least one distribution node (SW1, SW2) is designed so as, after sending the telegram (C, B) having the second priority level (210, 300) on the input/output interface (P0), to send the second fragment (B-2, A1-2) of the telegram (B, A1) having the first priority level (200, 220) together with the second fragmentation information (350) on the input/output interface (P0), and
wherein an addressed subscriber (TN A, TN B, TN C, TN D) for which the telegram (B, A1) having the first priority level (200, 220) is intended assembles the first fragment (B-1, A1-1) and the second fragment (B-2, A1-2) of the telegram (B, A1) having the first priority level (200, 220) on the basis of the first and the second fragmentation information (340, 350).

10. Automation communication network according to Claim 9,
wherein the at least one distribution node (SW1, SW2) is configured to send a checksum field (CRC) at the end of the first fragment (B-1, A1-1), and
wherein the checksum field (CRC) has a checksum that the at least one distribution node (SW1, SW2) computes using the already sent portion of the first fragment (B-1, A1-1).

11. Automation communication network according to Claim 9 or 10,
wherein the at least one distribution node (SW1, SW2) is designed to mark the first fragment (B-1, A1-1) of the interrupted telegram having the first priority level (200, 220) by way of a first fragmentation symbol (E-FRG) at the end of the first fragment (B-1, A1-1).

12. Automation communication network according to Claim 11,
wherein the at least one distribution node (SW1, SW2) is configured to break down the second fragment (B-2, A1-2) of the telegram having the first priority level (200, 220) into at least two subfragments,
wherein a first subfragment of the telegram having the first priority level (200, 220) has a second fragmentation symbol (S-FRG) and the second fragmentation information (350) at the start of the first subfragment,
wherein the second fragmentation information (350) comprises a fragment index (FRG) having the value of the fragment number (FFN) of the first fragment (B-1, A1-2),
wherein the first subfragment has the first fragmentation information (340), comprising the fragment number (FFN) of a second subfragment, at the end of the first subfragment,
wherein the first subfragment has the first fragmentation symbol (E-FRG) at the end of the first subfragment, and
wherein the second subfragment of the telegram having the first priority level (200, 220) comprises the second fragmentation symbol (S-FRG) and the second fragmentation information (350) at the start of the second subfragment,
wherein the second fragmentation information (350) of the second subfragment has the fragment index (FRG) with the value of the fragment number (FFN) of the second subfragment,
wherein the at least one distribution node (SW1, SW2) is designed to mark the second subfragment with the value zero for the fragment number (FFN) of the first fragmentation information (340) at the end of the second subfragment.

13. Automation communication network according to Claim 9 or 10,
wherein the at least one distribution node (SW1, SW2) is designed to indicate a possible fragmentation of the telegram (B, A1) having the first priority level (200, 220) by virtue of the at least one distribution node (SW1, SW2) setting a fragmentation TAG (FRAG TAG) at the start of the telegram having the first priority level (200, 220),
wherein the fragmentation TAG (FRAG TAG) has a type field (ET) for a protocol used within payload data (TEL B-1, TEL A-1) of the first fragment (B-1, A1-1), wherein the at least one distribution node (SW1, SW2) is configured to interrupt the telegram having the first priority level (200, 220) such that the interrupted telegram, which forms the first fragment (B-1, A1-1) of the telegram (B-A1), has a minimum length in the interruption process, and
wherein the at least one distribution node (SW1, SW2) is designed to indicate the fragmentation of the telegram having the first priority level (200, 220) at the end of the first fragment (B-1, A1-1) using the first fragmentation information (340),
the first fragmentation information (340) having a fragment number (FFN) of the second fragment (B-2, A1-2) .

14. Automation communication network according to Claim 13,
wherein the at least one distribution node (SW1, SW2) is configured to break down the second fragment (B-2, A1-2) of the telegram having the first priority level (200, 220) into at least two subfragments,
wherein a first subfragment of the telegram (B, A1) has a fragment destination address (FA), comprising second fragmentation information (350) having a fragment index (FRG) with the value of the fragment number (FFN) of the first fragment (B-1, A1-1), at the start of the first subfragment,
wherein the fragment destination address (FA) may be used to address multiple subscribers (TN A, TN B, TN C, TN D), and
wherein the first subfragment of the telegram (B, A1) has the first fragmentation information (340) with the fragment number (FFN) of a second subfragment at the end of the second subfragment, and
wherein the fragment address (FA) comprises a sender address (SA), a destination address (DA) and the fragmentation TAG (FRAG TAG) at the start of the first subfragment, and
wherein the fragment destination address (FA) has an additional data field (VLAN TAG) if the telegram (B, A1) comprises the additional data field (VLAN TAG).

15. Automation communication network according to Claim 14,
wherein the second subfragment has padding bytes if the second subfragment falls short of the minimum length, wherein the at least one distribution node (SW1, SW2) is configured to indicate the insertion of padding bytes by virtue of the at least one distribution node (SW1, SW2) setting the value of the fragment number (FFN) of the first fragmentation information (340) of the second subfragment at the end of the second subfragment to a value PAD, and
wherein the second subfragment has a padding byte data field (PAD-LEN) at the end of the second subfragment that comprises the number of padding bytes.

## Revendications

1. Procédé de transmission de données dans un réseau de communication d'automatisation (100), qui comporte au moins un nœud de distribution (SW1, SW2), lequel possède plusieurs interfaces d'entrée/sortie (P0, P1, P2), qui sont respectivement en liaison avec un segment de réseau (N1, N2, N3, N4),
le segment de réseau (N1, N2, N3, N4) possédant au moins un périphérique (TN A, TN B, TN C, TN D),
un échange de données entre les périphériques (TN A, TN B, TN C, TN D) s'effectuant sous la forme de télégrammes (B, C, A1, A2),
des niveaux de priorité (200, 210, 220) étant associés aux télégrammes (B, C, A1, A2),
l'émission d'un télégramme (B, A1, A2) ayant un premier niveau de priorité (200, 220) sur une interface d'entrée/sortie (P0) par l'au moins un nœud de distribution (SW1, SW2) étant interrompue lorsque l'au moins un nœud de distribution (SW1, SW2) a reçu, sur une autre interface d'entrée/sortie (P1, P2), un télégramme (C, B) ayant un deuxième niveau de priorité (210, 220) qui comporte une valence plus élevée que le premier niveau de priorité (200, 220),
l'au moins un nœud de distribution (SW1, SW2) clôturant de manière définie le télégramme interrompue ayant le premier niveau de priorité (200, 220), lequel forme un premier fragment (B-1, A1-1) en ce que l'au moins un nœud de distribution (SW1, SW2) émet une première information de fragmentation (340) à la fin du premier fragment (B-1, A1-1),
la première information de fragmentation (340) comprenant un numéro de fragment (FFN) d'un deuxième fragment (B-2, A1-2),
une partie restante du télégramme ayant le premier niveau de priorité (200, 220), qui n'a pas encore été émise par l'au moins un nœud de distribution (SW1, SW2), formant le deuxième fragment (B-2, A1-2),
l'au moins un nœud de distribution (SW1, SW2) générant une deuxième information de fragmentation (350) pour le deuxième fragment (B-2, A1-2),
la deuxième information de fragmentation (350) comprenant un nombre de fragments (FRG) qui présente la valeur d'un numéro de fragment (FFN) du premier fragment (B-1, A1-2),
l'au moins un nœud de distribution (SW1, SW2) mémorisant temporairement le deuxième fragment (B-2, A1-2) conjointement avec la deuxième information de fragmentation (350),
l'au moins un nœud de distribution (SW1, SW2), après l'émission du télégramme (C, B) ayant le deuxième niveau de priorité (210, 200) sur l'interface d'entrée/sortie (P0), émettant le deuxième fragment (B-2, A1-2) du télégramme (B, A1) ayant le premier niveau de priorité (200, 220) conjointement avec la deuxième information de fragmentation (350) sur l'interface d'entrée/sortie (P0), et
un périphérique (TN A, TN B, TN C, TN D) avec lequel a lieu une entrée en contact, pour lequel est défini le télégramme (B, A1) ayant le premier niveau de priorité (200, 220), assemblant le premier fragment (B-1, A1-1) et le deuxième fragment (B-2, A1-2) du télégramme (B, A1) ayant le premier niveau de priorité (200, 220) sur la base de la première et de la deuxième information de fragmentation (340, 350).

2. Procédé selon la revendication 1,
l'au moins un nœud de distribution (SW1, SW2) émettant un champ de somme de contrôle (CRC) à la fin du premier fragment (B-1, A1-1), et
le champ de somme de contrôle (CRC) possédant une somme de contrôle qui est calculée sur la partie déjà émise du premier fragment (B-1, A1-1).

3. Procédé selon la revendication 1 ou 2,
l'au moins un nœud de distribution (SW1, SW2) marquant le premier fragment (B-1, A1-1) du télégramme interrompu ayant le premier niveau de priorité (200, 220) par un premier symbole fragmenté (E-FRG) à la fin du premier fragment (B-1, A1-1).

4. Procédé selon la revendication 3,
le deuxième fragment (B-2, A1-2) du télégramme ayant le premier niveau de priorité (200, 220) étant décomposé en au moins deux sous-fragments,
un premier sous-fragment du télégramme ayant le premier niveau de priorité (200, 220) possédant un deuxième symbole fragmenté (S-FRG) et la deuxième information de fragmentation (350) au début du premier sous-fragment, la deuxième information de fragmentation (350) comprenant un nombre de fragments (FRG) qui possède la valeur du numéro de fragment (FFN) du premier fragment (B-1, A1-2),
le premier sous-fragment possédant la première information de fragmentation (340) à la fin du premier sous-fragment, laquelle comprend le numéro de fragment (FFN) d'un deuxième sous-fragment,
le premier sous-fragment possédant le premier symbole fragmenté (E-FRG) à la fin du premier sous-fragment, et le deuxième sous-fragment du télégramme ayant le premier niveau de priorité (200, 220) possédant le deuxième symbole fragmenté (S-FRG) et la deuxième information de fragmentation (350) au début du deuxième sous-fragment, la deuxième information de fragmentation (350) du deuxième sous-fragment possédant le nombre de fragments (FRG) avec la valeur du numéro de fragment (FFN) du premier fragment,
le deuxième sous-fragment du télégramme ayant le premier niveau de priorité (200, 220) étant marqué par la valeur nulle du numéro de fragment (FFN) de la première information de fragmentation (340) à la fin du deuxième sous-fragment.

5. Procédé selon la revendication 1 ou 2,
une fragmentation possible du télégramme ayant le premier niveau de priorité (200, 220) étant indiquée en plaçant une balise de fragmentation (FRAG TAG) au début du télégramme ayant le premier niveau de priorité (200, 220), la balise de fragmentation (FRAG TAG) possédant un champ de type (ET) pour un protocole utilisé à l'intérieur de données utiles (TEL B-1, TEL A1-A) du premier fragment, l'au moins un nœud de distribution (SW1, SW2) interrompant le télégramme ayant le premier niveau de priorité (200, 220) de telle sorte que le télégramme interrompu, qui forme le premier fragment (B-1, A1-1) du télégramme (B, A1), présente une longueur minimale lors de l'opération d'interruption,
et
la fragmentation du télégramme ayant le premier niveau de priorité (200, 220) étant indiquée à la fin du premier fragment (B-1, A1-1) avec la première information de fragmentation (340),
la première information de fragmentation (340) possédant un numéro de fragment (FFN) du deuxième fragment (B-2, A1-2) .

6. Procédé selon la revendication 5,
le deuxième fragment (B-2, A1-2) du télégramme ayant le premier niveau de priorité (200, 220) étant décomposé en au moins deux sous-fragments,
un premier sous-fragment possédant une adresse destinataire de fragment (FA) au début du premier sous-fragment, comprenant une deuxième information de fragmentation (350), laquelle possède un nombre de fragments (FRG) ayant la valeur du numéro de fragment (FFN) du premier fragment (B-1, A1-1),
une entrée en contact avec plusieurs périphériques (TN A, TN B, TN C, TN D) pouvant être effectuée par le biais de l'adresse destinataire de fragment (FA),
le premier sous-fragment du télégramme (B, A1) possédant la première information de fragmentation (340) ayant la valeur du numéro de fragment (FFN) d'un deuxième sous-fragment à la fin du premier sous-fragment, et l'adresse destinataire de fragment (FA) comprenant une adresse d'expéditeur (SA), une adresse destinataire (DA) et la balise de fragmentation (FRAG TAG) au début du premier sous-fragment, et
l'adresse destinataire de fragment (FA) possédant un champ de données supplémentaire (VLAN TAG) lorsque le télégramme (B, A1) comprend le champ de données supplémentaire (VLAN TAG).

7. Procédé selon la revendication 6,
le deuxième sous-fragment du télégramme ayant le premier niveau de priorité (200, 220) possédant des octets de remplissage lorsque le deuxième sous-fragment devient inférieur à la longueur minimale,
l'insertion d'octets de remplissage étant indiquée en fixant à une valeur PAD la valeur du numéro de fragment (FFN) de la première information de fragmentation (340) du deuxième sous-fragment à la fin du deuxième sous-fragment, et
le deuxième sous-fragment possédant à la fin du deuxième sous-fragment un champ de données d'octet de remplissage (PAD-LEN), qui comprend le nombre d'octets de remplissage.

8. Procédé selon l'une des revendications 5 à 7,
le télégramme ayant le premier niveau de priorité (200, 220) étant réalisé sous la forme d'un télégramme Ethernet.

9. Réseau de communication d'automatisation (100), comprenant au moins un nœud de distribution (SW1, SW2), lequel possède plusieurs interfaces d'entrée/sortie (P0, P1, P2), qui sont respectivement en liaison avec un segment de réseau (N1, N2, N3, N4),
le segment de réseau (N1, N2, N3, N4) possédant au moins un périphérique (TN A, TN B, TN C, TN D),
un échange de données entre les périphériques (TN A, TN B, TN C, TN D) s'effectuant sous la forme de télégrammes (B, C, A1, A2),
des niveaux de priorité (200, 210, 220) étant associés aux télégrammes (B, C, A1, A2),
l'au moins un nœud de distribution (SW1, SW2) étant configuré pour interrompre l'émission d'un télégramme (B, A1, A2) ayant un premier niveau de priorité (200, 220) sur une interface d'entrée/sortie (P0) lorsque l'au moins un nœud de distribution (SW1, SW2) a reçu, sur une autre interface d'entrée/sortie (P1, P2), un télégramme (C, B) ayant un deuxième niveau de priorité (210, 200) qui comporte une valence plus élevée que le premier niveau de priorité (200, 220),
l'au moins un nœud de distribution (SW1, SW2) étant conçu pour clôturer de manière définie le télégramme interrompue ayant le premier niveau de priorité (200, 220), lequel forme un premier fragment (B-1, A1-1), en ce que l'au moins un nœud de distribution (SW1, SW2) émet une première information de fragmentation (340) à la fin du premier fragment (B-1, A1-1),
la première information de fragmentation (340) comprenant un numéro de fragment (FFN) d'un deuxième fragment (B-2, A1-2) ,
une partie restante du télégramme (B, A1) ayant le premier niveau de priorité (200, 220), qui n'a pas encore été émise par l'au moins un nœud de distribution (SW1, SW2), formant le deuxième fragment (B-2, A1-2),
l'au moins un nœud de distribution (SW1, SW2) étant configuré pour générer une deuxième information de fragmentation (350) pour le deuxième fragment (B-2, A1-2),
la deuxième information de fragmentation (350) comprenant un nombre de fragments (FRG) qui présente la valeur d'un numéro de fragment (FFN) du premier fragment (B-1, A1-1),
l'au moins un nœud de distribution (SW1, SW2) étant configuré pour mémoriser temporairement le deuxième fragment (B-2, A1-2) conjointement avec la deuxième information de fragmentation (350),
l'au moins un nœud de distribution (SW1, SW2) étant conçu pour, après l'émission du télégramme (C, B) ayant le deuxième niveau de priorité (210, 200) sur l'interface d'entrée/sortie (P0), émettre le deuxième fragment (B-2, A1-2) du télégramme (B, A1) ayant le premier niveau de priorité (200, 220) conjointement avec la deuxième information de fragmentation (350) sur l'interface d'entrée/sortie (P0), et
un périphérique (TN A, TN B, TN C, TN D) avec lequel a lieu une entrée en contact, pour lequel est défini le télégramme (B, A1) ayant le premier niveau de priorité (200, 220), assemblant le premier fragment (B-1, A1-1) et le deuxième fragment (B-2, A1-2) du télégramme (B, A1) ayant le premier niveau de priorité (200, 220) sur la base de la première et de la deuxième information de fragmentation (340, 350).

10. Réseau de communication d'automatisation selon la revendication 9,
l'au moins un nœud de distribution (SW1, SW2) étant configuré pour émettre un champ de somme de contrôle (CRC) à la fin du premier fragment (B-1, A1-1), et
le champ de somme de contrôle (CRC) possédant une somme de contrôle que l'au moins un nœud de distribution (SW1, SW2) calcule sur la partie déjà émise du premier fragment (B-1, A1-1).

11. Réseau de communication d'automatisation selon la revendication 9 ou 10,
l'au moins un nœud de distribution (SW1, SW2) étant conçu pour marquer le premier fragment (B-1, A1-1) du télégramme interrompu ayant le premier niveau de priorité (200, 220) par un premier symbole fragmenté (E-FRG) à la fin du premier fragment (B-1, A1-1).

12. Réseau de communication d'automatisation selon la revendication 11,
l'au moins un nœud de distribution (SW1, SW2) étant configuré pour décomposer le deuxième fragment (B-2, A1-2) du télégramme ayant le premier niveau de priorité (200, 220) en au moins deux sous-fragments,
un premier sous-fragment du télégramme ayant le premier niveau de priorité (200, 220) possédant un deuxième symbole fragmenté (S-FRG) et la deuxième information de fragmentation (350) au début du premier sous-fragment, la deuxième information de fragmentation (350) comprenant un nombre de fragments (FRG) qui possède la valeur du numéro de fragment (FFN) du premier fragment (B-1, A1-1),
le premier sous-fragment possédant la première information de fragmentation (340) à la fin du premier sous-fragment, laquelle comprend le numéro de fragment (FFN) d'un deuxième sous-fragment,
le premier sous-fragment possédant le premier symbole fragmenté (E-FRG) à la fin du premier sous-fragment, et le deuxième sous-fragment du télégramme ayant le premier niveau de priorité (200, 220) possédant le deuxième symbole fragmenté (S-FRG) et la deuxième information de fragmentation (350) au début du deuxième sous-fragment, la deuxième information de fragmentation (350) du deuxième sous-fragment possédant le nombre de fragments (FRG) avec la valeur du numéro de fragment (FFN) du deuxième sous-fragment,
l'au moins un nœud de distribution (SW1, SW2) étant conçu pour marquer le deuxième sous-fragment par la valeur nulle du numéro de fragment (FFN) de la première information de fragmentation (340) à la fin du deuxième sous-fragment.

13. Réseau de communication d'automatisation selon la revendication 9 ou 10,
l'au moins un nœud de distribution (SW1, SW2) étant conçu pour indiquer une fragmentation possible du télégramme (B, A1) ayant le premier niveau de priorité (200, 220) en ce que l'au moins un nœud de distribution (SW1, SW2) place une balise de fragmentation (FRAG TAG) au début du télégramme ayant le premier niveau de priorité (200, 220), la balise de fragmentation (FRAG TAG) possédant un champ de type (ET) pour un protocole utilisé à l'intérieur de données utiles (TEL B-1, TEL A1-A) du premier fragment (B-1, A1-1),
l'au moins un nœud de distribution (SW1, SW2) étant configuré pour interrompre le télégramme ayant le premier niveau de priorité (200, 220) de telle sorte que le télégramme interrompu, qui forme le premier fragment (B-1, A1-1) du télégramme (B, A1), présente une longueur minimale lors de l'opération d'interruption,
et
l'au moins un nœud de distribution (SW1, SW2) étant conçu pour indiquer la fragmentation du télégramme ayant le premier niveau de priorité (200, 220) à la fin du premier fragment (B-1, A1-1) avec la première information de fragmentation (340),
la première information de fragmentation (340) possédant un numéro de fragment (FFN) du deuxième fragment (B-2, A1-2) .

14. Réseau de communication d'automatisation selon la revendication 13,
l'au moins un nœud de distribution (SW1, SW2) étant configuré pour décomposer le deuxième fragment (B-2, A1-2) du télégramme ayant le premier niveau de priorité (200, 220) en au moins deux sous-fragments,
un premier sous-fragment du télégramme (B, A1) possédant une adresse destinataire de fragment (FA) au début du premier sous-fragment, comprenant une deuxième information de fragmentation (350), laquelle possède un nombre de fragments (FRG) ayant la valeur du numéro de fragment (FFN) du premier fragment (B-1, A1-1),
une entrée en contact avec plusieurs périphériques (TN A, TN B, TN C, TN D) pouvant être effectuée par le biais de l'adresse destinataire de fragment (FA),
le premier sous-fragment du télégramme (B, A1) possédant la première information de fragmentation (340) ayant la valeur du numéro de fragment (FFN) d'un deuxième sous-fragment à la fin du deuxième sous-fragment, et l'adresse destinataire de fragment (FA) comprenant une adresse d'expéditeur (SA), une adresse destinataire (DA) et la balise de fragmentation (FRAG TAG) au début du premier sous-fragment, et
l'adresse destinataire de fragment (FA) possédant un champ de données supplémentaire (VLAN TAG) lorsque le télégramme (B, A1) comprend le champ de données supplémentaire (VLAN TAG).

15. Réseau de communication d'automatisation selon la revendication 14,
le deuxième sous-fragment possédant des octets de remplissage lorsque le deuxième sous-fragment devient inférieur à la longueur minimale,
l'au moins un nœud de distribution (SW1, SW2) étant configuré pour indiquer l'insertion d'octets de remplissage en ce que l'au moins un nœud de distribution (SW1, SW2) fixe à une valeur PAD la valeur du numéro de fragment (FFN) de la première information de fragmentation (340) du deuxième sous-fragment à la fin du deuxième sous-fragment, et
le deuxième sous-fragment possédant à la fin du deuxième sous-fragment un champ de données d'octet de remplissage (PAD-LEN), qui comprend le nombre d'octets de remplissage.
